# EUROPEAN PATENT APPLICATION

(11) **EP 4 385 297 A2**
(43) Date of publication of application: **19.06.2024**
(21) Application number: 23214232.3
(22) Date of filing: 05.12.2023
(51) Int. Cl.: A01B 69/04

(54) **OPERATION CONTROL METHOD, OPERATION CONTROL SYSTEM, AND OPERATION CONTROL PROGRAM**

(30) Priority: 15.12.2022 JP 2022200121; 06.04.2023 JP 2023062200
(71) Applicant: Yanmar Holdings Co., Ltd., Osaka-shi, Osaka (JP)
(72) Inventor: SAITO, Masafumi, Okayama-shi (JP); IWAMURA, Keisuke, Okayama-shi (JP); UENO, So, Okayama-shi (JP); UEHARA, Dai, Okayama-shi (JP); UEDA, Ryohei, Okayama-shi (JP)
(74) Representative: Dennemeyer & Associates S.A.

(57) **Abstract**

[Problem] To provide an operation control method, an operation control system, and an operation control program capable of improving convenience of an operation unit for operating a work machine capable of automatic traveling.

[Solution] A vehicle control device 11 causes the work machine 10 to execute automatic travel when an automatic travel button 171 is operated by an operator in a state where a guidance screen D1 relating to automatic travel of a work machine 10 is displayed on an operation terminal 17, and does not cause the work machine 10 to execute automatic travel when the automatic travel button 171 is operated by the operator in a state where a non-guidance screen is displayed on the operation terminal 17.

## Description

### TECHNICAL FIELD

The present invention relates to a technique for controlling the operation and display information of a work machine in accordance with a user operation on an operation unit of the work machine.

### BACKGROUND ART

Conventionally, there is known a work machine capable of automatically traveling in a field, the work machine including an operation unit that accepts an operation of switching start or end of automatic steering and an operation of setting a start point of a travel reference line of the automatic steering (for example, see Patent Document 1).

### PRIOR ART DOCUMENT

### PATENT DOCUMENT

Patent Document 1: Japanese Unexamined Patent Application Publication No. 2022-107655

### SUMMARY OF INVENTION

### TECHNICAL PROBLEM

However, in the conventional technique, in a case where a plurality of functions are set for one operation unit, it is difficult for a user to grasp which function is executed when the operation unit is operated on an operation screen. For this reason, there is a risk that an operation that is not intended by the user will be executed in the work machine.

It is an object of the present invention to provide an operation control method, an operation control system, and an operation control program capable of improving convenience of an operation unit for operating a work machine capable of automatic steering.

### SOLUTION TO PROBLEM

An operation control method according to the present invention is a method that executes causing a work machine to execute a first action when an operation unit for operating the work machine is operated by a user in a state where a first display screen relating to automatic steering of the work machine is displayed on an operation terminal, and not causing the work machine to execute the first action when the operation unit is operated by a user in a state where a second display screen different from the first display screen is displayed on the operation terminal.

Further, an operation control method according to the present invention is a method that executes displaying information regarding automatic steering on a first display screen relating to automatic steering of the work machine when an operation unit for operating a work machine is operated by a user in a state where the first display screen is displayed on an operation terminal, and transitioning a second display screen different from the first display screen, to a display screen relating to automatic steering of the work machine when the operation unit is operated by a user in a state where the second display screen is displayed on the operation terminal.

Further, an operation control system according to the present invention is a system that includes an action processing unit that causes a work machine to execute a first action when an operation unit for operating the work machine is operated by a user in a state where a first display screen relating to automatic steering of the work machine is displayed on an operation terminal, and does not cause the work machine to execute the first action when the operation unit is operated by a user in a state where a second display screen different from the first display screen is displayed on the operation terminal.

Further, an operation control system is a system that includes a display processing unit that displays information regarding automatic steering on a first display screen relating to automatic steering of the work machine when an operation unit for operating a work machine is operated by a user in a state where the first display screen is displayed on an operation terminal, and transitions a second display screen different from the first display screen, to a display screen relating to automatic steering of the work machine when the operation unit is operated by a user in a state where the second display screen is displayed on the operation terminal.

Further, an operation control program is a program for causing one or more processors to execute causing a work machine to execute a first action when an operation unit for operating the work machine is operated by a user in a state where a first display screen relating to automatic steering of the work machine is displayed on an operation terminal, and not causing the work machine to execute the first action when the operation unit is operated by a user in a state where a second display screen different from the first display screen is displayed on the operation terminal.

Furthermore, an operation control program is a program for causing one or more processors to execute displaying information regarding automatic steering on a first display screen relating to automatic steering of the work machine when an operation unit for operating a work machine is operated by a user in a state where the first display screen is displayed on an operation terminal, and transitioning a second display screen different from the first display screen, to a display screen relating to automatic steering of the work machine when the operation unit is operated by a user in a state where the second display screen is displayed on the operation terminal.

### ADVANTAGEOUS EFFECTS OF INVENTION

According to the present invention, it is possible to provide an operation control method, an operation control system, and an operation control program capable of improving convenience of an operation unit for operating a work machine capable of automatic steering.

### BRIEF DESCRIPTION OF DRAWINGS

FIG. 1 is a block diagram illustrating a configuration of a work machine according to a first embodiment of the present invention.
FIG. 2 is an external view illustrating an example of the work machine according to the first embodiment of the present invention.
FIG. 3 is an external view illustrating an example of an operation terminal according to the first embodiment of the present invention.
FIG. 4 is a diagram illustrating an example of a target route of the work machine according to the first embodiment of the present invention.
FIG. 5A is a diagram for explaining a travel method for automatic travel of the work machine according to the first embodiment of the present invention.
FIG. 5B is a diagram for explaining the travel method for the automatic travel of the work machine according to the first embodiment of the present invention.
FIG. 5C is a diagram for explaining the travel method for the automatic travel of the work machine according to the first embodiment of the present invention.
FIG. 6 is a diagram illustrating an example of a guidance screen displayed on the operation terminal according to the first embodiment of the present invention.
FIG. 7 is a diagram illustrating an example of the guidance screen displayed on the operation terminal according to the first embodiment of the present invention.
FIG. 8 is a diagram illustrating an example of a home screen displayed on the operation terminal according to the first embodiment of the present invention.
FIG. 9 is a diagram illustrating an example of a UFO operation screen displayed on the operation terminal according to the first embodiment of the present invention.
FIG. 10 is a diagram illustrating an example of the home screen displayed on the operation terminal according to the first embodiment of the present invention.
FIG. 11 is a diagram illustrating an example of the UFO operation screen displayed on the operation terminal according to the first embodiment of the present invention.
FIG. 12 is a diagram illustrating an example of the guidance screen displayed on the operation terminal according to the first embodiment of the present invention.
FIG. 13 is a diagram illustrating an example of the guidance screen displayed on the operation terminal according to the first embodiment of the present invention.
FIG. 14 is a diagram illustrating an example of the home screen displayed on the operation terminal according to the first embodiment of the present invention.
FIG. 15 is a flowchart illustrating an example of a procedure of operation control processing executed by the work machine according to the first embodiment of the present invention.
FIG. 16 is a block diagram illustrating a configuration of a work machine according to a second embodiment of the present invention.
FIG. 17 is a diagram illustrating an example of a display screen displayed on an operation terminal by an operation control method according to the second embodiment of the present invention.
FIG. 18 is a diagram illustrating an example of the display screen displayed on the operation terminal by the operation control method according to the second embodiment of the present invention.
FIG. 19 is a diagram illustrating an example of the display screen displayed on the operation terminal by the operation control method according to the second embodiment of the present invention.
FIG. 20 is a diagram illustrating an example of the display screen displayed on the operation terminal by the operation control method according to the second embodiment of the present invention.
FIG. 21 is a diagram illustrating an example of the display screen displayed on the operation terminal by the operation control method according to the second embodiment of the present invention.
FIG. 22 is a diagram illustrating an example of the display screen displayed on the operation terminal by the operation control method according to the second embodiment of the present invention.
FIG. 23 is a diagram illustrating an example of the display screen displayed on the operation terminal by the operation control method according to the second embodiment of the present invention.
FIG. 24 is a diagram illustrating an example of the display screen displayed on the operation terminal by the operation control method according to the second embodiment of the present invention.
FIG. 25 is a diagram illustrating an example of the display screen displayed on the operation terminal by the operation control method according to the second embodiment of the present invention.
FIG. 26 is a diagram illustrating an example of the display screen displayed on the operation terminal by the operation control method according to the second embodiment of the present invention.
FIG. 27 is a diagram illustrating an example of the display screen displayed on the operation terminal by the operation control method according to the second embodiment of the present invention.
FIG. 28 is a diagram illustrating an example of the display screen displayed on the operation terminal by the operation control method according to the second embodiment of the present invention.
FIG. 29 is a diagram illustrating an example of the display screen displayed on the operation terminal by the operation control method according to the second embodiment of the present invention.
FIG. 30 is a diagram illustrating an example of the display screen displayed on the operation terminal by the operation control method according to the second embodiment of the present invention.
FIG. 31 is a diagram illustrating an example of the display screen displayed on the operation terminal by the operation control method according to the second embodiment of the present invention.
FIG. 32 is a diagram illustrating an example of the display screen displayed on the operation terminal by the operation control method according to the second embodiment of the present invention.
FIG. 33 is a diagram illustrating an example of the display screen displayed on the operation terminal by the operation control method according to the second embodiment of the present invention.
FIG. 34 is a diagram illustrating an example of the display screen displayed on the operation terminal by the operation control method according to the second embodiment of the present invention.
FIG. 35 is a diagram illustrating an example of the display screen displayed on the operation terminal by the operation control method according to the second embodiment of the present invention.
FIG. 36 is a diagram illustrating an example of the display screen displayed on the operation terminal by the operation control method according to the second embodiment of the present invention.
FIG. 37 is a diagram illustrating an example of the display screen displayed on the operation terminal by the operation control method according to the second embodiment of the present invention.
FIG. 38 is a diagram illustrating an example of the display screen displayed on the operation terminal by the operation control method according to the second embodiment of the present invention.
FIG. 39 is a diagram illustrating an example of the display screen displayed on the operation terminal by the operation control method according to the second embodiment of the present invention.
FIG. 40 is a diagram illustrating an example of the display screen displayed on the operation terminal by the operation control method according to the second embodiment of the present invention.
FIG. 41 is a diagram illustrating an example of the display screen displayed on the operation terminal by the operation control method according to the second embodiment of the present invention.
FIG. 42 is a diagram illustrating an example of the display screen displayed on the operation terminal by the operation control method according to the second embodiment of the present invention.
FIG. 43 is a graph illustrating an example of a vehicle speed controlled by the operation control method according to the second embodiment of the present invention.
FIG. 44 is a graph illustrating an example of the vehicle speed controlled by the operation control method according to the second embodiment of the present invention.
FIG. 45 is a flowchart illustrating an example of a procedure of operation control processing executed by the work machine according to the second embodiment of the present invention.
FIG. 46 is a diagram illustrating an example of the display screen displayed on the operation terminal by the operation control method according to the second embodiment of the present invention.
FIG. 47 is a diagram illustrating an example of the display screen displayed on the operation terminal by the operation control method according to the second embodiment of the present invention.
FIG. 48 is a diagram illustrating an example of the display screen displayed on the operation terminal by the operation control method according to the second embodiment of the present invention.
FIG. 49 is a flowchart illustrating an example of a procedure of operation control processing executed by the work machine according to the second embodiment of the present invention.
FIG. 50 is a diagram illustrating an example of the display screen displayed on the operation terminal by the operation control method according to the second embodiment of the present invention.
FIG. 51 is a diagram illustrating an example of the display screen displayed on the operation terminal by the operation control method according to the second embodiment of the present invention.
FIG. 52 is a flowchart illustrating an example of a procedure of operation control processing executed by the work machine according to the second embodiment of the present invention.

### DESCRIPTION OF EMBODIMENTS

The following embodiments are concrete examples of the present invention, and are not intended to limit the technical scope of the present invention.

### (First Embodiment)

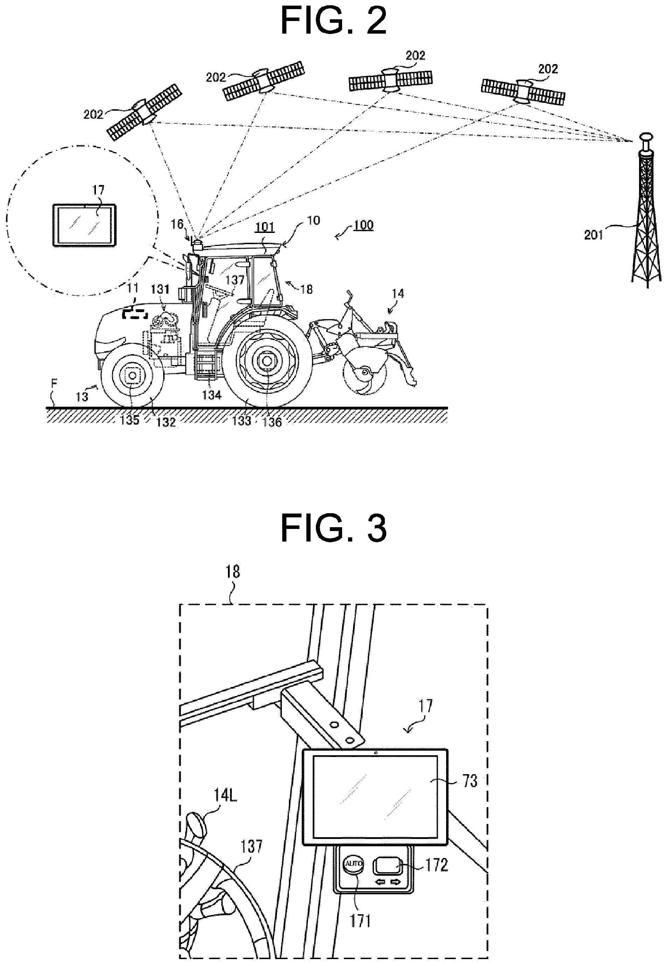

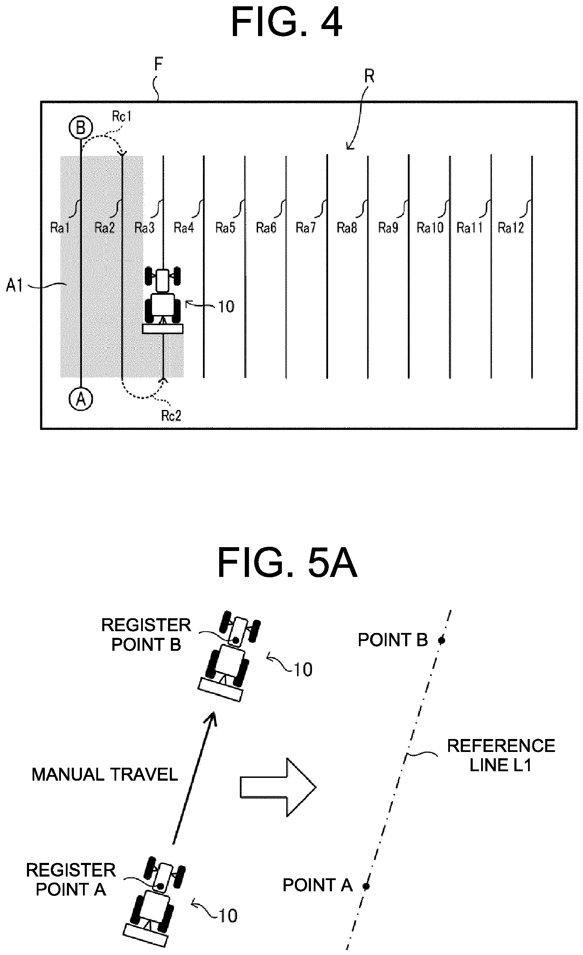

An automatic travel system 100 according to a first embodiment of the present invention (an example of the operation control system of the present invention) includes a work machine 10, a satellite 202 (see FIG. 2), and a base station 201 (see FIG. 2). In the present embodiment, a case where the work machine 10 is a tractor is taken as an example for the explanation. As another embodiment, the work machine 10 may be a work vehicle such as a rice transplanter, a combine harvester, a construction machine, and a snowplow, or a flying object such as a drone for spraying work. In response to an operation of an operator (user), the work machine 10 performs predetermined work (for example, tillage work) while traveling in accordance with a target route in a field F (see FIG. 4). Specifically, the work machine 10 travels straight ahead on the target route in response to automatic steering and travels while turning in response to manual steering (driving operation) by the operator. The work machine 10 travels in the field F and performs work while switching between automatic travel on a straight route and manual travel on a turning route. The target route may be generated in advance on the basis of the operation of the operator and stored as route data. The work machine 10 may automatically travel on each of the straight route and the turning route.

The work machine 10 travels in the field F illustrated in FIG. 4, for example, while repeating straight travel and turning travel until the work is finished. A target route R for automatic travel includes a plurality of straight routes (work routes). The plurality of work routes are substantially parallel to one another. FIG. 4 illustrates work routes Ra1 to Ra12. For example, the work machine 10 sequentially executes automatic travel on the work route Ra1, manual travel on a turning route Rc1, automatic travel on the work route Ra2, manual travel on a turning route Rc2, and automatic travel on the work route Ra3. A reference sign A1 illustrated in FIG. 4 indicates a work trajectory (worked area) in which the work machine 10 has traveled and performed work.

The target route R illustrated in FIG. 4 is an example, and the target route R is appropriately determined in accordance with a size of the work machine 10, a width of a work implement 14 (work width), a width in which adjacent work areas overlap each other (lap width), work contents, a shape of the field F, and the like.

Further, the automatic travel system 100 includes an operation terminal 17 operated by an operator. In other words, the operation terminal 17 constitutes the automatic travel system 100, which is an example of the operation control system, together with the work machine 10 and the like. The operation terminal 17 is, for example, a general-purpose terminal such as a tablet terminal, a smartphone, or a laptop computer. Dedicated application software (program) is installed in the operation terminal 17 configured with a general-purpose terminal, and the operation terminal 17 functions as the operation terminal 17 of the automatic travel system 100 by activating the application software. The operation terminal 17 can mutually communicate with the work machine 10. The term "can communicate" referred to in the present disclosure means that information can be transmitted/received directly or indirectly through a communication network (network) or a relay or the like by wired or wireless (radio wave or optical medium) communication methods, as appropriate. For example, the communication network includes the Internet, LAN (Local Area Network), WAN (Wide Area Network), a public telephone network, a mobile telephone network, a packet network, a wireless LAN, or the like.

For example, the operator performs an operation to register various types of information (work machine information, field information, work information, and the like) on the operation terminal 17. Further, in a location away from the work machine 10, the operator can grasp travel status, work status, and the like of the work machine 10 by a travel trajectory displayed on the operation terminal 17. In the present embodiment, as an example, as illustrated in FIG. 2, the operation terminal 17 is disposed in a cabin 18 serving as a boarding unit on which the operator boards in the work machine 10. The operation terminal 17 may be included in the components of the work machine 10, or may not be included in the components of the work machine 10.

### [Work Machine 10]

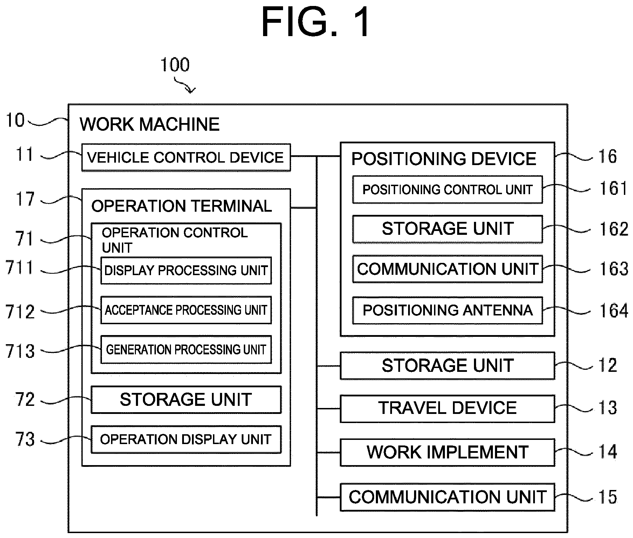

As illustrated in FIG. 1 and FIG. 2, the work machine 10 includes a vehicle control device 11, a storage unit 12, a travel device 13, the work implement 14, a communication unit 15, a positioning device 16, and the operation terminal 17. The vehicle control device 11 is electrically connected to the storage unit 12, the travel device 13, the work implement 14, the positioning device 16, the operation terminal 17, and the like. At least the travel device 13 is provided on the machine body 101 of the work machine 10. The vehicle control device 11 and the positioning device 16 may be capable of performing wireless communication. Moreover, the vehicle control device 11 and the operation terminal 17 may be capable of performing wireless communication.

The communication unit 15 is a communication interface that connects the work machine 10 to a communication network by wire or wirelessly and executes data communication in accordance with a predetermined communication protocol with an external device (an operation terminal, etc.) via the communication network.

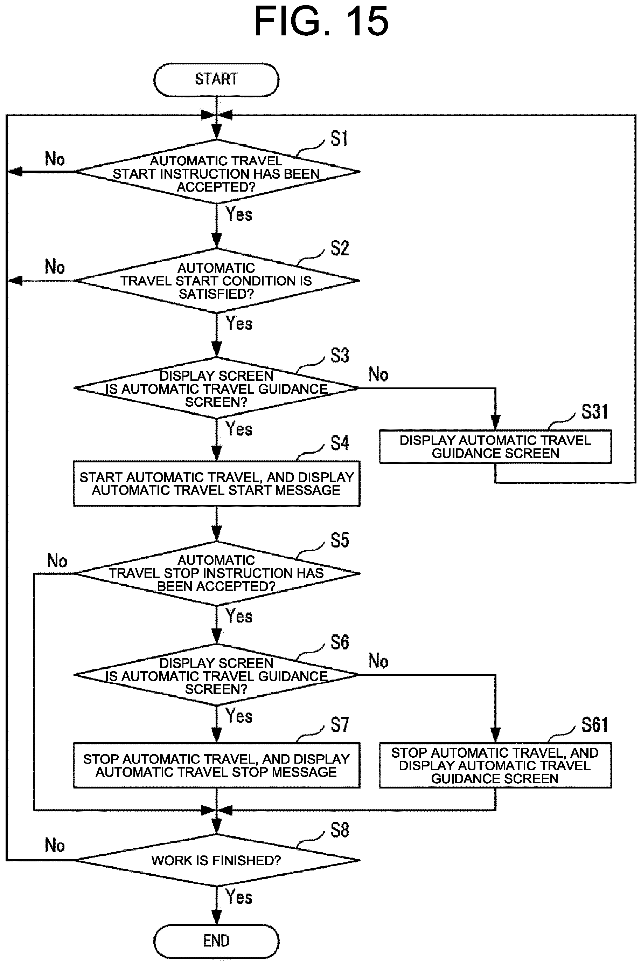

The storage unit 12 is a non-volatile storage unit, such as a hard disk drive (HDD) or a solid state drive (SSD), that stores various types of information. The storage unit 12 stores control programs such as an operation control program for causing the vehicle control device 11 to perform operation control processing (see FIG. 15) to be described below. For example, the operation control program is non-temporarily recorded on a computer-readable recording medium such as a compact disc (CD) or a digital versatile disc (DVD) and is read out by a predetermined reading device (not illustrated) to be stored in the storage unit 12. The operation control program may be downloaded from a server (not illustrated) to the work machine 10 via the communication network and then stored in the storage unit 12. Moreover, the storage unit 12 may store data of the target route generated in the operation terminal 17.

The travel device 13 is a drive unit that causes the work machine 10 to travel. As illustrated in FIG. 2, the travel device 13 includes an engine 131, a front wheel 132, a rear wheel 133, a transmission 134, a front axle 135, a rear axle 136, and a steering wheel 137. The front wheel 132 and the rear wheel 133 are provided on the right and left of the work machine 10, respectively. Moreover, the travel device 13 is not limited to a wheel type equipped with the front wheel 132 and the rear wheel 133, and may be a crawler type equipped with crawlers installed on the right and left of the work machine 10.

The engine 131 is a drive source such as a diesel engine or a gasoline engine driven by fuel supplied to a fuel tank (not illustrated). The travel device 13 may include an electric motor as a drive source, together with the engine 131 or instead of the engine 131. A generator (not illustrated) is connected to the engine 131, and electric power is supplied from the generator to electric components, such as the vehicle control device 11 provided in the work machine 10, a battery, and the like. The battery is charged by electric power supplied from the generator. The electric components such as the vehicle control device 11, the positioning device 16, and the operation terminal 17 provided in the work machine 10 can be driven by the electric power supplied from the battery even after the engine 131 is stopped.

A drive force of the engine 131 is transmitted to the front wheel 132 via the transmission 134 and the front axle 135, and is transmitted to the rear wheel 133 via the transmission 134 and the rear axle 136. Moreover, the drive force of the engine 131 is transmitted to the work implement 14 via a power take-off (PTO) shaft (not illustrated). The travel device 13 performs a travel action in accordance with a command of the vehicle control device 11.

The work implement 14 is, for example, a tiller, a seeder, a mower, a plow, or a fertilizer applicator and is detachably mounted to the machine body 101 of the work machine 10. Thus, the work machine 10 can perform various kinds of work with the use of each work implement 14. FIG. 2 illustrates a case where the work implement 14 is a tiller.

In the work machine 10, the work implement 14 may be supported by a lifting-lowering mechanism (not illustrated) so as to be lifted and lowered. The vehicle control device 11 can lift and lower the work implement 14 by controlling the lifting-lowering mechanism. For example, the vehicle control device 11 lowers the work implement 14 to a work position when the operator performs, by a lifting-lowering lever 14L (see FIG. 3), an operation to lower the work implement 14 (for example, an operation to place the lifting-lowering lever 14L in a "lowering" position) and lifts the work implement 14 to a non-work position when the operator performs, by the lifting-lowering lever 14L, an operation to lift the work implement 14 (for example, an operation to place the lifting-lowering lever 14L in a "lifting" position). The lifting-lowering lever 14L is provided, for example, near the steering wheel 137 (see FIG. 3), but may be provided at another position in a cabin 18.

Further, the vehicle control device 11 outputs a work stop command to the work implement 14 when acquiring a work stop instruction. When acquiring the work stop instruction, the vehicle control device 11 stops driving of the PTO shaft to stop an action (work) of the work implement 14.

The steering wheel 137 is an operation unit operated by the operator or the vehicle control device 11. For example, the travel device 13 changes an angle of the front wheel 132 by a hydraulic power steering mechanism (not illustrated) or the like in response to the operation of the steering wheel 137 by the operator or the vehicle control device 11 to change a travel direction of the work machine 10.

Moreover, the travel device 13 includes a main speed change lever, a PTO switch, a reverser lever, a shift lever, an accelerator, a clutch, a brake, and the like. For example, the travel device 13 increases the vehicle speed of the work machine 10 when the operator performs a speed increasing operation of increasing the vehicle speed of the work machine 10 by the main speed change lever, and decreases the vehicle speed of the work machine 10 when the operator performs a speed decreasing operation of decreasing the vehicle speed of the work machine 10 by the main speed change lever. The reverser lever is an operation tool for switching between forward movement and backward movement of the work machine 10 and can be set to "forward", "neutral", and "backward".

Moreover, for example, the travel device 13 transmits the drive force of the engine 131 to the work implement 14 via the PTO shaft to activate the work implement 14 when the operator performs an operation to set the PTO switch to ON (for example, an operation to place the PTO switch in an "ON" position) and blocks the transmission of the drive force from the engine 131 to the work implement 14 to stop the action of the work implement 14 when the operator performs an operation to set the PTO switch to OFF (for example, an operation to place the PTO switch in an "OFF" position).

Further, the travel device 13 brakes rotations of the front wheel 132 and the rear wheel 133 with the use of an electromagnetic brake in response to an operation of the brake. Further, the travel device 13 switches a gear of the transmission 134 to a forward gear, a backward gear, or the like in response to an operation of the shift lever and switches a travel mode of the work machine 10 to forward, backward, or the like. Furthermore, the travel device 13 controls a rotation speed of the engine 131 in response to an operation of the accelerator.

The positioning device 16 is a communication device including a positioning control unit 161, a storage unit 162, a communication unit 163, a positioning antenna 164, and the like. For example, as illustrated in FIG. 2, the positioning device 16 is provided at an upper portion of the cabin 18 where the operator rides. Moreover, an installation location of the positioning device 16 is not limited to the cabin 18. Further, the positioning control unit 161, the storage unit 162, the communication unit 163, and the positioning antenna 164 of the positioning device 16 may be arranged at different positions of the work machine 10 in a distributed manner. As described above, the battery is connected to the positioning device 16, and the positioning device 16 can operate even when the engine 131 is stopped. Furthermore, as the positioning device 16, for example, a mobile phone terminal, a smartphone, a tablet terminal, or the like may be substituted.

The positioning control unit 161 is a computer system having one or more processors, and a storage memory such as a non-volatile memory and a random access memory (RAM). The storage unit 162 is a non-volatile memory or the like that stores a positioning control program for causing the positioning control unit 161 to execute positioning processing, and data such as positioning information and movement information. For example, the positioning control program is non-temporarily recorded on a computer-readable recording medium such as a CD or a DVD and is read out by a predetermined reading device (not illustrated) to be stored in the storage unit 162. The positioning control program may be downloaded from a server (not illustrated) to the positioning device 16 via the communication network to be stored in the storage unit 162.

The communication unit 163 is a communication interface that connects the positioning device 16 to the communication network by wire or wirelessly and executes data communication with an external device such as a base station server in accordance with a predetermined communication protocol via the communication network.

The positioning antenna 164 is an antenna which receives a radio wave (global navigation satellite system (GNSS) signal) transmitted from a satellite.

The positioning control unit 161 calculates the current position of the work machine 10 on the basis of a Global Navigation Satellite System (GNSS) signal received by the positioning antenna 164 from a satellite. For example, in a case where the work machine 10 automatically travels in the field F, when the positioning antenna 164 receives radio waves (transmission time, orbit information, etc.) respectively transmitted from multiple satellites 202, the positioning control unit 161 calculates the distance between the positioning antenna 164 and each satellite 202 and calculates the current position (the latitude and longitude) of the work machine 10 on the basis of the calculated distance. Further, the positioning control unit 161 may perform positioning by a real-time kinematic method (RTK-GNSS positioning method (RTK method)) in which the current position of the work machine 10 is calculated using correction information corresponding to a base station (a reference station) 201 close to the work machine 10. In this way, the work machine 10 automatically travels using the positioning information based on the RTK method. The current position of the work machine 10 may be the same position as the position at which the positioning was performed (for example, the position of the positioning antenna 164), or may be a position shifted from the position at which the positioning was performed.

The operation terminal 17 is a device that is operated by the operator riding on the work machine 10, and displays various types of information and accepts operations of the operator. Specifically, the operation terminal 17 displays various setting screens to accept various setting operations from the operator, and displays a guidance screen to display information regarding the work machine 10 under traveling. A specific configuration of the operation terminal 17 will be described below.

The vehicle control device 11 has a control device such as a central processing unit (CPU), a read only memory (ROM), and a RAM. The CPU is a processor that performs various types of arithmetic processing. The ROM is a non-volatile storage unit in which control programs such as a basic input/output system (BIOS) and an operating system (OS) for causing the CPU to execute various kinds of arithmetic processing are stored in advance. The RAM is a volatile or non-volatile storage unit that stores various kinds of information, and is used as a temporary storage memory (work area) for various kinds of processing executed by the CPU. Further, the vehicle control device 11 controls the work machine 10 by causing the CPU to execute various kinds of control programs stored in advance in the ROM or the storage unit 12. Furthermore, the vehicle control device 11 causes the CPU to execute various types of processing in accordance with the automatic travel program. The vehicle control device 11 is an example of an action processing unit of the present invention.

Specifically, the vehicle control device 11 controls the travel of the work machine 10. For example, when a travel mode of the work machine 10 is manual travel (manual travel mode), the vehicle control device 11 causes the work machine 10 to manually travel on the basis of an operation of the operator (manual steering). For example, the vehicle control device 11 acquires operation information corresponding to driving operations by the operator, such as a steering wheel operation, a speed change operation, a shift operation, an accelerator operation, and a brake operation, and causes the travel device 13 to execute the travel action on the basis of the operation information.

Further, when the travel mode of the work machine 10 is automatic travel (automatic travel mode), the vehicle control device 11 causes the work machine 10 to automatically travel on the basis of position information (positioning information) indicating the current position of the work machine 10, which is measured and positioned by the positioning control unit 161. For example, when the work machine 10 satisfies an automatic travel start condition and acquires a travel start instruction from the operator, the vehicle control device 11 starts automatic travel of the work machine 10 on the basis of the positioning information. Moreover, the vehicle control device 11 causes the work machine 10 to automatically travel in accordance with the target route R (work route) (se FIG. 4) generated in advance.

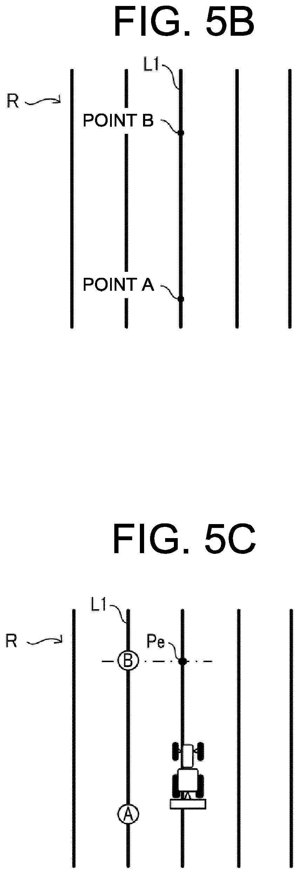

Further, when the work machine 10 reaches an end (end point) of the work route, the vehicle control device 11 switches the travel mode to manual travel. The vehicle control device 11 may switch the travel mode to the manual travel when determining that the work machine 10 has reached the end point or may switch the travel mode to the manual travel in response to an operation of the operator. When the travel mode is switched to the manual travel, for example, the operator causes the work machine 10 to travel while turning (manually travel) by manual steering (see FIG. 4). The position of the end point of each work route is a position inside an end of the field F by a predetermined distance, a position specified in advance by the operator, a position aligned with the position where the operator has switched from the automatic travel to the manual travel on an immediately preceding worked route (a position where the work route intersects with a line which passes through the position where the switching to the manual travel has performed and is perpendicular to the worked route, or a position where the work route intersects with a line which passes through the position where the switching to the manual travel has performed and is parallel to an edge line of the field F), a position where the work route intersects with a line which passes through a point B of a reference line L1 and is perpendicular to the reference line L1 (for example, a position Pe in FIG. 5C), or the like.

The end point of each work route on which the work machine 10 is caused to automatically travel corresponds to a position of a start point of a non-work route (turning route) on which the work machine 10 is caused to manually travel, and a start point of each work route corresponds to a position of an end point of the non-work route (turning route).

As described above, the vehicle control device 11 switches the travel mode in response to an operation by the operator on the operation terminal 17 to cause the work machine 10 to automatically travel on the work route (target route R) by automatic steering and to manually travel on the non-work route (turning route) by manual steering. Further, the vehicle control device 11 causes the work machine 10 to execute actions (a sound emission action, a display action, a travel control action, etc.) according to a setting operation of the operator at the end point of each work route.

Further, the "automatic travel" referred to in the present disclosure includes "autonomous travel" in which the work machine 10 autonomously travels without depending on an operation of the operator, and "semi-automatic travel" in which only steering is automated, for example, as is the case with straight travel assist.

The "autonomous travel" is, for example, a travel mode in which the vehicle speed and the like are automatically controlled in addition to the automatic steering of the steered wheels (the front wheels 132) in such a manner that the work machine 10 travels along the target route R. The "straight travel assist" is, for example, a travel mode in which only the automatic steering of the steered wheels (front wheels 132) is performed and the vehicle speed and the like are controlled by the operation of the operator in such a manner that the work machine 10 travels along a straight route parallel to a straight line (reference line) serving as a reference. That is, in the "semi-automatic travel", the work machine 10 cannot travel without the operation of the operator, but the burden on the operator for steering is reduced, and the work machine 10 can travel along the target route R such as a straight route, which leads to an improvement in work efficiency. In addition, since the steered wheels (front wheels 132) are automatically steered in both of the autonomous travel and the semi-automatic travel, it can be said that this is one mode of the automatic steering.

In the present embodiment, unless otherwise specified, "automatic travel" is "straight travel assist" in which only steering is automated and the work machine 10 is caused to travel along a straight route. In other words, as illustrated in FIG. 4, when the target route R including work routes Ra1 to Ra12 composed of a plurality of linear routes (straight routes) is set, the work machine 10 sequentially executes automatic traveling (straight travel assist) on a work route Ra1, manual traveling on a turning route Rc1, automatic traveling (straight travel assist) on a work route Ra2, manual traveling on a turning route Rc2, and automatic traveling (straight travel assist) on a work route Ra3.

### [Operation Terminal 17]

As illustrated in FIG. 1, the operation terminal 17 includes an operation control unit 71, a storage unit 72, and an operation display unit 73. The operation terminal 17 may be a device that is detachably mounted to the work machine 10. Moreover, the operation terminal 17 may be a mobile terminal (a tablet terminal, a smartphone, etc.) that can be carried by the operator. The operation terminal 17 is communicably connected to the vehicle control device 11 by wire or wirelessly.

The operation display unit 73 is a user interface including a display unit such as a liquid crystal display or an organic electroluminescent (EL) display, which displays various types of information, and an operation unit such as an operation button or a touch panel, which accepts operations. The operation display unit 73 displays various display screens in response to an instruction from the operation control unit 71. Moreover, the operation display unit 73 accepts an operation of the operator on each of the display screens.

Further, the operation unit includes an automatic travel button 171 with which the operator issues a travel start instruction when causing the work machine 10 to start automatic travel, and a shift button 172 with which a correction operation (shift operation) for correcting a positional deviation between the work machine 10 and the target route is performed (see FIG. 3). The automatic travel button 171 and the shift button 172 may be configured with physical buttons.

For example, as illustrated in FIG. 2 and FIG. 3, the operation terminal 17 is installed near the steering wheel 137 in the cabin 18.

The storage unit 72 is a non-volatile storage unit such as an HDD or an SSD that stores various kinds of information. The storage unit 72 stores a control program such as an operation control program for causing the operation terminal 17 to execute operation control processing (see FIG. 15), which will be described below. For example, the operation control program is non-temporarily recorded on a computer-readable recording medium such as a CD or a DVD and is read out by a predetermined reading device (not illustrated) to be stored in the storage unit 72. The operation control program may be downloaded from a server (not illustrated) to the operation terminal 17 via the communication network to be stored in the storage unit 72. Moreover, the storage unit 72 may store data of the target route generated in the operation terminal 17. Further, the control program may include a route generation program for generating a target route.

The operation control unit 71 has control devices such as a CPU, a ROM, and a RAM. The CPU is a processor that performs various types of arithmetic processing. The ROM is a non-volatile storage unit in which control programs such as a basic input/output system (BIOS) and an operating system (OS) for causing the CPU to execute various kinds of arithmetic processing are stored in advance. The RAM is a volatile or non-volatile storage unit that stores various kinds of information, and is used as a temporary storage memory (work area) for various kinds of processing executed by the CPU. Further, the operation control unit 71 controls the operation terminal 17 by causing the CPU to execute various control programs stored in advance in the ROM or the storage unit 72.

Specifically, as illustrated in FIG. 1, the operation control unit 71 includes various processing units such as a display processing unit 711, an acceptance processing unit 712, and a generation processing unit 713. The operation terminal 17 functions as the various processing units by causing the CPU to execute various types of processing in accordance with the control programs. Moreover, some or all of the processing units may be configured with an electronic circuit. The control programs may be programs for causing a plurality of processors to function as the processing units.

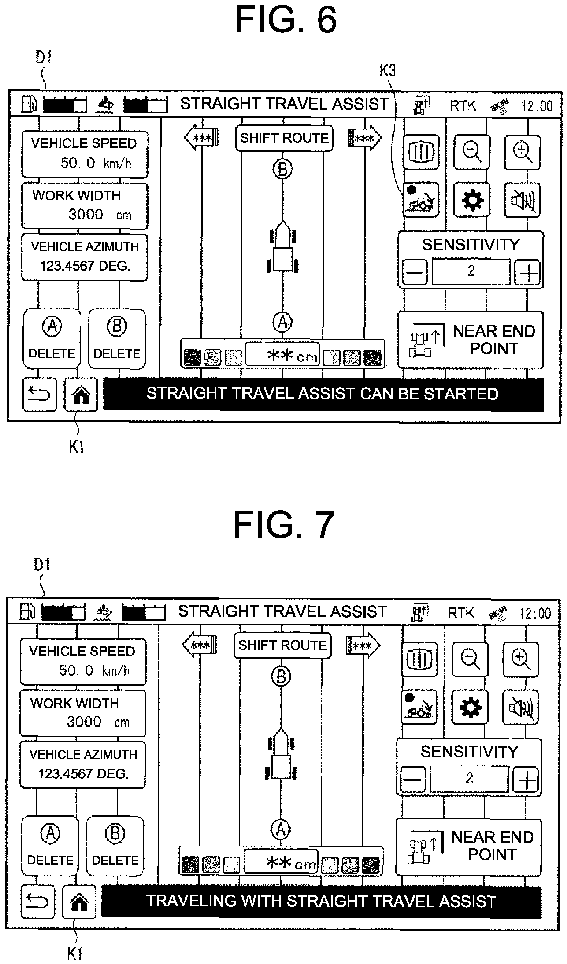

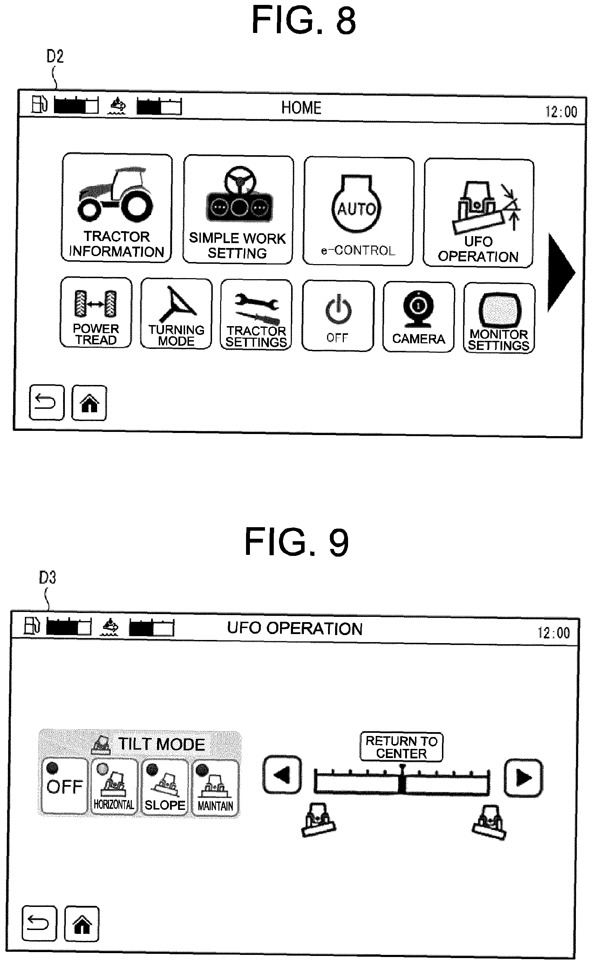

The display processing unit 711 displays various types of information on the operation display unit 73. For example, the display processing unit 711 displays on the operation display unit 73 an operation screen for generating a target route, an operation screen (guidance screen D1 in FIG. 6 and the like) for displaying information regarding automatic travel (travel status, work status, and the like of the work machine 10), a menu screen (a home screen D2 in FIG. 8 and the like), a setting screen (for example, a UFO operation screen D3 in FIG. 9 and the like) for performing various settings, and the like.

The acceptance processing unit 712 accepts various operations by the operator. For example, the acceptance processing unit 712 accepts, from the operator, an operation to input setting information for causing the work machine 10 to automatically travel, an operation to generate a target route for automatic travel, an operation to start or stop automatic travel, and the like.

The generation processing unit 713 generates the target route R on which the work machine 10 is caused to automatically travel. For example, the generation processing unit 713 generates the target route R including a plurality of straight routes (work routes) arranged at predetermined intervals (regular intervals) on the basis of the reference line L1 passing through a point A (first reference point) and the point B (second reference point) in the field F.

Hereinafter, an example of the procedure for generating the target route R will be described. For example, the display processing unit 711 displays on the operation display unit 73 an operation screen (not illustrated) that accepts, from the operator, a setting operation to set the reference line L1. The operator moves the work machine 10 to a desired position in the field F and presses a point A registration button (not illustrated). For example, the operator moves the work machine 10 to an outer peripheral end of the field F and presses the point A registration button. When the operator presses the point A registration button, the generation processing unit 713 registers the current position of the work machine 10 as a first reference point (point A). When the generation processing unit 713 registers the point A, the display processing unit 711 displays on the operation display unit 73 the operation screen (not illustrated) that accepts a registration operation of a second reference point (point B). The operator causes the work machine 10 to manually travel in a direction (target direction) in which the work machine 10 is desired to travel and work (see FIG. 5A). Specifically, the operator causes the work machine 10 to travel straight ahead in a direction parallel to a work direction (for example, tillage direction) when the work machine 10 works in the work area. In doing so, the work machine 10 may perform predetermined work (for example, tillage work) while manually traveling. Further, the operator presses a point B registration button (not illustrated) at a desired position (for example, the outer peripheral end of the field F). When the operator presses the point B registration button, the generation processing unit 713 registers the current position of the work machine 10 as a second reference point (point B).

When acquiring position information of the point A and the point B, the generation processing unit 713 registers a straight line passing through the point A and the point B as the reference line L1 (see FIG. 5A). The generation processing unit 713 may be capable of adjusting an orientation of the generated reference line L1. For example, the generation processing unit 713 displays the generated reference line L1 on the operation screen and sets (registers) the reference line L1 when the registration operation is accepted from the operator. Meanwhile, when accepting an operation to change the orientation of the reference line L1 (for example, a screen touch operation) from the operator, the generation processing unit 713 adjusts the orientation of the reference line L1 in response to the operation. When accepting the operation to register the point B, the generation processing unit 713 may display a selection screen for registering or adjusting the reference line L1.

The generation processing unit 713 generates a travel route (target route R) including the reference line L1 and a plurality of straight lines parallel to the reference line L1. For example, the generation processing unit 713 generates a plurality of parallel straight lines at equal intervals with reference to the reference line L1 on the basis of a work width (a lateral width of the work implement 14) and a lap width (a width that overlaps an adjacent worked area) set in advance (see FIG. 5B). The generation processing unit 713 registers the generated target route R in the storage unit 72 and displays the generated target route R on the operation display unit 73.

According to the above-described method, the target route R can be generated using the reference line L1 passing through the two points (point A and point B) at both ends of the field F (see FIG. 4), thereby improving the accuracy of work by the work machine 10. The generation processing unit 713 may be capable of registering the point B when the work machine 10 has traveled a predetermined distance (for example, 5 m) after registering the point A. Thus, a more accurate reference line L1 can be set.

The generation method of the target route R is not limited to the above-described method, and may be, for example, a method of generating the target route R on the basis of a reference line generated from the point A and an orientation of the work machine 10 ("point A + vehicle azimuth angle") or a method of generating the target route R on the basis of a reference line generated from the point A and a set azimuth angle ("point A + set azimuth angle").

After the target route R is generated, the operator issues an instruction to the work machine 10 to start automatic travel in the field F (travel start instruction). For example, when the automatic travel start condition is satisfied and automatic travel is possible by the work machine 10 being positioned within a predetermined range from the target route R and within a predetermined direction with respect to the target route R (see FIG. 5C), the display processing unit 711 displays the guidance screen D1 illustrated in FIG. 6. Further, the display processing unit 711 displays, on the guidance screen D1, a message indicating that the work machine 10 has entered a state where automatic travel is possible (for example, "straight travel assist can be started"). The guidance screen D1 illustrated in FIG. 6 is an example of an acceptance screen that accepts an instruction to start automatic travel of the work machine 10 from the operator.

Subsequently, the operator presses the automatic travel button 171 (see FIG. 3) to issue a travel start instruction. When the operator presses the automatic travel button 171 in a state where the guidance screen D1 is displayed on the operation terminal 17, the vehicle control device 11 accepts the travel start instruction, and starts automatic travel of the work machine 10 in such a manner that the work machine 10 follows the target route R. As illustrated in FIG. 4, the work machine 10 executes a predetermined work while automatically traveling along a work route included in the target route R, and switches to manual travel at the end point of the work route to travel while turning on a turning route by manual steering performed by the operator.

Further, when the operator presses the automatic travel button 171 in a state where the guidance screen D1 is displayed on the operation terminal 17, the display processing unit 711 displays a message indicating that the work machine 10 is automatically traveling (for example, "traveling with straight travel assist") on the guidance screen D1, as illustrated in FIG. 7.

Here, when the operator tries to start the automatic travel, a display screen different from the guidance screen D1 (see FIG. 6) may be displayed on the operation terminal 17. For example, the operator presses a home button K1 on the guidance screen D1 illustrated in FIG. 6 in a case where the operator wishes to perform setting relating to the horizontal control of the work machine 10 (UFO operation) before starting automatic travel. When the operator presses the home button K1, the display processing unit 711 displays the home screen D2 illustrated in FIG. 8. Subsequently, when the operator presses the icon of "UFO operation" on the home screen D2, the display processing unit 711 displays the UFO operation screen D3 illustrated in FIG. 9. The operator can perform setting related to the horizontal control on the UFO operation screen D3.

When the setting related to the horizontal control is completed, the operator issues a travel start instruction for starting automatic travel. For example, the operator presses the automatic travel button 171 (see FIG. 3) in a state where the UFO operation screen D3 (see FIG. 9) or the home screen D2 (see FIG. 8) is displayed on the operation terminal 17. When the automatic travel button 171 is pressed in a state where a display screen (the UFO operation screen D3 or the home screen D2) different from the guidance screen D1 is displayed on the operation terminal 17, the display processing unit 711 transitions (shifts) the display screen to the guidance screen D1 (see FIG. 6).

Further, in a case where the automatic travel button 171 is pressed in a state where a display screen different from the guidance screen D1 is displayed on the operation terminal 17, the vehicle control device 11 does not start automatic travel of the work machine 10 even when the travel start instruction is accepted. When the display screen transitions to the guidance screen D1 (see FIG. 6) and the operator presses the automatic travel button 171 in a state where the automatic travel start condition is satisfied, the vehicle control device 11 accepts the travel start instruction and starts automatic travel of the work machine 10 in such a manner that the work machine 10 follows the target route R. Further, as illustrated in FIG. 7, the display processing unit 711 displays a message indicating that the work machine 10 is automatically traveling ("traveling with straight travel assist") on the guidance screen D1.

In this way, when the automatic travel button 171 is operated by the operator in a state where the guidance screen D1 (see FIG. 6) relating to the automatic travel of the work machine 10 is displayed on the operation terminal 17, the vehicle control device 11 causes the work machine 10 to start automatic travel, and the display processing unit 711 displays information regarding the automatic travel ("traveling with straight travel assist") on the guidance screen D1.

On the other hand, when the automatic travel button 171 is operated by the operator in a state where a non-guidance screen (the UFO operation screen D3 (see FIG. 9), home screen D2 (see FIG. 8), or the like) different from the guidance screen D1 is displayed on the operation terminal 17, the vehicle control device 11 does not cause the work machine 10 to start automatic travel and the display processing unit 711 causes the non-guidance screen to transition to the guidance screen D1.

That is, when the automatic travel button 171 is operated by the operator in a state where the guidance screen D1 is displayed on the operation terminal 17, the vehicle control device 11 causes the work machine 10 is to execute automatic travel, and when the automatic travel button 171 is operated by the operator in a state where the non-guidance screen is displayed on the operation terminal 17, the vehicle control device 11 does not cause the work machine 10 to execute automatic travel. Moreover, when the automatic travel button 171 is operated by the operator and the automatic travel start condition is satisfied in a state where the guidance screen D1 is displayed on the operation terminal 17, the vehicle control device 11 causes the work machine 10 is to automatically travel, and when the automatic travel button 171 is operated by the operator in a state where the non-guidance screen is displayed on the operation terminal 17, the vehicle control device 11 does not cause the work machine 10 to automatically travel even if the automatic travel start condition is satisfied.

Further, when the automatic travel button 171 is operated by the operator in a state where the guidance screen D1 is displayed on the operation terminal 17, the display processing unit 711 displays information indicating that automatic travel has started (see FIG. 7) on the guidance screen D1, and when the automatic travel button 171 is operated by the operator in a state where the aforementioned non-guidance screen is displayed on the operation terminal 17, the display processing unit 711 causes the non-guidance screen to transition to the guidance screen D1 (see FIG. 6).

In this way, a different function is assigned to the automatic travel button 171 in accordance with the content of the display screen displayed on the operation terminal 17. In the above-described example, the automatic travel button 171 functions as a shortcut button for transitioning to the guidance screen D1 when the automatic travel button 171 is pressed in a state where the non-guidance screen (the UFO operation screen D3, the home screen D2, or the like) is displayed. According to the above-described configuration, the operator can transition the non-guidance screen to the guidance screen D1 by pressing the automatic travel button 171, and can start the automatic travel by pressing the automatic travel button 171 again. Therefore, it is possible to improve the convenience of the operation unit (automatic travel button 171).

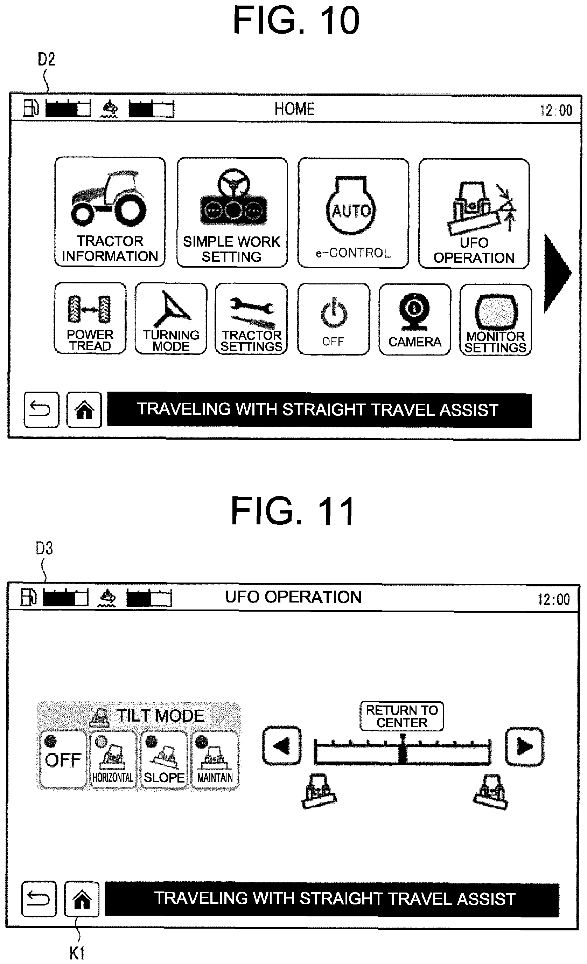

Here, after the automatic travel of the work machine 10 is started, the operator can shift the guidance screen D1 (see FIG. 7) to another setting screen during the automatic travel. For example, when the operator presses the home button K1 on the guidance screen D1 illustrated in FIG. 7 during the automatic travel, the display processing unit 711 displays the home screen D2 illustrated in FIG. 10. The display processing unit 711 displays a message indicating that the work machine 10 is automatically traveling (for example, "traveling with straight travel assist") on the home screen D2 illustrated in FIG. 10. Moreover, when the operator presses the icon of "UFO operation" on the home screen D2 illustrated in FIG. 10, the display processing unit 711 displays the UFO operation screen D3 illustrated in FIG. 11. The display processing unit 711 displays a message indicating that the work machine 10 is automatically traveling (for example, "traveling with straight travel assist") on the UFO operation screen D3 illustrated in FIG. 11.

In this way, the operator can switch the guidance screen D1 to another display screen while the work machine 10 is automatically traveling. Further, even when the operator switches the guidance screen D1 while the work machine 10 is automatically traveling, the vehicle control device 11 causes the work machine 10 to continue automatic travel. According to the above-described configuration, since the operator can perform various operations by switching the display screen even when the work machine 10 is automatically traveling, convenience can be improved.

In a case where the guidance screen D1 (see FIG. 7) transitions to the non-guidance screen, when the operator does not perform an operation on the non-guidance screen continuously for a predetermined time, the display processing unit 711 may automatically transition the non-guidance screen to the guidance screen D1 (see FIG. 7) or display a message for prompting the operator to return the screen to the guidance screen D1.

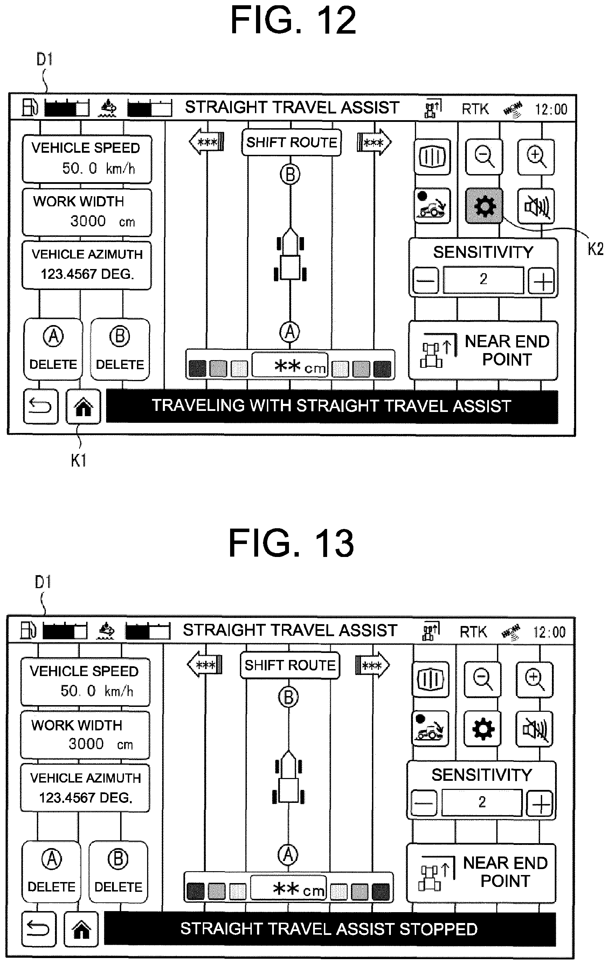

Further, the functions that the operator can operate on the guidance screen D1 while the work machine 10 is automatically traveling may be limited. For example, a setting icon K2 displayed on the guidance screen D1 (see FIG. 12) is an operation button for setting a route relating to the target route for automatic travel.
In consideration of safety, the information of the route setting can be set and changed only when the work machine 10 is stopped, and the setting and the change are prohibited during the automatic travel. Accordingly, when the work machine 10 is automatically traveling, the display processing unit 711 displays (grays out) the setting icons K2 on the guidance screen D1 in a non-selectable manner, as illustrated in FIG. 12. When the setting icon K2 is in the gray-out state, even when the operator presses the setting icon K2, the display processing unit 711 does not cause the guidance screen D1 to transition to a setting screen (not illustrated). In this case, the display processing unit 711 may display a message indicating that the setting icon K2 cannot be operated, that the operations are possible when the automatic travel is stopped, or the like.

When stopping the automatic travel of the work machine 10 (automatic travel OFF), the operator performs an automatic travel stop operation. For example, the operator presses the automatic travel button 171 while the work machine 10 is automatically traveling. When the automatic travel stop operation is accepted, the vehicle control device 11 stops the automatic travel and switches to the manual travel. For example, when the operator presses the automatic travel button 171 while the work machine 10 is automatically traveling in a state where the guidance screen D1 illustrated in FIG. 7 is displayed on the operation terminal 17, the vehicle control device 11 stops the automatic travel, and the display processing unit 711 displays a message indicating that the automatic travel has been stopped (for example, "straight travel assist stopped") on the guidance screen D1, as illustrated in FIG. 13.

Moreover, for example, when the operator presses the automatic travel button 171 while the work machine 10 is automatically traveling in a state where the home screen D2 illustrated in FIG. 10 or the UFO operation screen D3 illustrated in FIG. 11 is displayed on the operation terminal 17, the vehicle control device 11 stops the automatic travel, and the display processing unit 711 transitions the display screen (non-guidance screen) to the guidance screen D1 illustrated in FIG. 13 and displays a message indicating that the automatic travel has been stopped (for example, "straight travel assist stopped") on the guidance screen D1.

In this way, while the work machine 10 is automatically traveling, when the automatic travel button 171 is operated by the operator in a state where the guidance screen D1 (see FIG. 7) relating to the automatic travel of the work machine 10 is displayed on the operation terminal 17, the vehicle control device 11 causes the work machine 10 to stop the automatic travel, and the display processing unit 711 displays information regarding the automatic travel ("straight travel assist stopped") on the guidance screen D1. On the other hand, while the work machine 10 is automatically traveling, when the automatic travel button 171 is operated by the operator in a state where the non-guidance screen different from the guidance screen D1 is displayed on the operation terminal 17, the vehicle control device 11 stops the automatic travel, and the display processing unit 711 causes the non-guidance screen to transition to the guidance screen D1.

In the above-described present embodiment, the automatic travel is started or stopped in response to the operation on the automatic travel button 171, and the display screen on the operation terminal 17 is switched. That is, the automatic travel button 171 is an example of the operation unit of the present invention. The operation unit of the present invention is not limited to the automatic travel button 171, and may be any operation unit capable of operating the work machine 10. For example, the operation unit of the present invention may be an operation unit that changes the posture of the work implement 14 between the working posture and the non-working posture. Specifically, the operation unit of the present invention may be a lifting-lowering lever 14L (see FIG. 3) that lifts and lowers the work implement 14.

Here, the operation control unit 71 of the operation terminal 17 may accept, from the operator, an operation to set whether to start the automatic travel of the work machine 10 in interlock with a change in the posture of the work implement 14.
For example, on the guidance screen D1 (see FIG. 6 and the like), the operator can press the work implement interlock icon K3 to enable (ON) the function of starting the automatic travel of the work machine 10 in interlock with a change in the posture of the work implement 14 (work implement interlock function). In a case where the work implement interlock function is set to ON, for example, when the operator performs an operation to place the lifting-lowering lever 14L in the "lowering" position, if the automatic travel start condition is satisfied, the vehicle control device 11 lowers the work implement 14 to the work position and stars the automatic travel of the work machine 10. Thus, the operator can start automatic travel and work by performing an operation to move the work machine 10 to the start position of automatic travel and lower the work implement 14. Further, the pressing operation of the automatic travel button 171 can be omitted. Therefore, it is possible to improve the convenience.

Further, in the case where the work implement interlock function is set to ON and the guidance screen D1 (see FIG. 6) is displayed on the operation terminal 17, when the operator performs an operation to place the lifting-lowering lever 14L in the "lowering" position, the display processing unit 711 displays a message indicating that the work machine 10 is automatically traveling ("traveling with straight travel assist") on the guidance screen D1, as illustrated in FIG. 7.

Even in the case where the work implement interlock function is set to ON, when a display screen different from the guidance screen D1 (the non-guidance screen such as the home screen D2 (see FIG. 8) or the UFO operation screen D3 (see FIG. 9)) is displayed on the operation terminal 17, the vehicle control device 11 does not start the automatic travel of the work machine 10 even if the operator performs an operation to place the lifting-lowering lever 14L in the "lowering" position. In this case, the vehicle control device 11 executes only the action of lowering the work implement 14, and does not execute the automatic travel action. Further, in a case where the operator performs an operation to place the lifting-lowering lever 14L in the "lowering" position in a state where the aforementioned non-guidance screen is displayed, the display processing unit 711 maintains the display of the aforementioned non-guidance screen without transitioning same to the guidance screen D1 (see FIG. 6). For example, in a case where the UFO operation screen D3 illustrated in FIG. 9 is displayed on the operation terminal 17, when the operator performs an operation to place the lifting-lowering lever 14L in the "lowering" position, the display processing unit 711 displays the UFO operation screen D3 as it is. In this case, the display processing unit 711 may display, on the UFO operation screen D3, a message that the operation of the lifting-lowering lever 14L has been accepted, a message that the lowering operation of the work implement 14 is to be executed, a message that the automatic travel action is not to be executed, or the like. In this way, in a case where the non-guidance screen that displays information different from information regarding automatic travel is displayed, when the operator performs an operation different from the automatic travel instruction (an operation to lift or lower the work implement 14), the intention of the operator of the automatic travel start instruction is unknown, and therefore processing to start automatic travel or to transition to the guidance screen D1 is not executed.

Further, in the case where the work implement interlock function is set to ON, when the operator stops the automatic travel, the operator performs an operation to place the lifting-lowering lever 14L in the "lifting" position. When the operator performs the operation to place the lifting-lowering lever 14L in the "lifting" position, the vehicle control device 11 lifts the work implement 14 up to the non-work position, and stops the automatic travel of the work machine 10.
Regardless of whether the guidance screen D1 or the non-guidance screen is displayed on the operation terminal 17, the vehicle control device 11 lifts the work implement 14 up to the non-work position in response to the lifting operation of the lifting-lowering lever 14L and stops the automatic travel of the work machine 10. Thus, the operator can stop the automatic travel and the work by performing the operation of lifting the work implement 14. Further, the pressing operation of the automatic travel button 171 can be omitted. Therefore, it is possible to improve the convenience.

Further, in the case where the work implement interlock function is set to ON and the guidance screen D1 (see FIG. 7) is displayed on the operation terminal 17 (during automatic travel), when the operator performs an operation to place the lifting-lowering lever 14L in the "lifting" position, the display processing unit 711 displays a message indicating that the automatic travel has been stopped (for example, "straight travel assist stopped") on the guidance screen D1, as illustrated in FIG. 13. Similarly, in a case where the non-guidance screen (the home screen D2 (see FIG. 10) or the UFO operation screen D3 (see FIG. 11)) is displayed on the operation terminal 17 (during automatic travel), when the operator performs an operation to place the lifting-lowering lever 14L in the "lifting" position, the display processing unit 711 transitions the non-guidance screen to the guidance screen D1, and displays a message indicating that the automatic travel has been stopped (for example, "straight travel assist stopped") on the guidance screen D1, as illustrated in FIG. 13. In this way, even when the guidance screen D1 is displayed on the operation terminal 17, or even when the non-guidance screen is displayed, the display processing unit 711 displays the guidance screen D1 in response to the lifting operation of the lifting-lowering lever 14L, and displays a message indicating that the automatic travel has been stopped on the guidance screen D1.

The operation to stop the automatic travel when the work machine 10 is automatically traveling is not limited to the operation of the automatic travel button 171 and the operation of the lifting-lowering lever 14L described above, and may be, for example, a steering wheel operation. Specifically, when the operator riding on the work machine 10 rotates (steers) the steering wheel 137 by a predetermined angle or more during the automatic travel of the work machine 10, the vehicle control device 11 stops the automatic travel. For example, in a case where the work machine 10 is automatically traveling and the UFO operation screen D3 illustrated in FIG. 11 is displayed on the operation terminal 17, when the operator rotates the steering wheel 137 by a predetermined angle or more, the vehicle control device 11 stops the automatic travel, and the display processing unit 711 transitions the UFO operation screen D3 to the guidance screen D1 (see FIG. 13) and displays a message indicating that the automatic travel has been stopped (for example, "straight travel assist stopped") on the guidance screen D1.

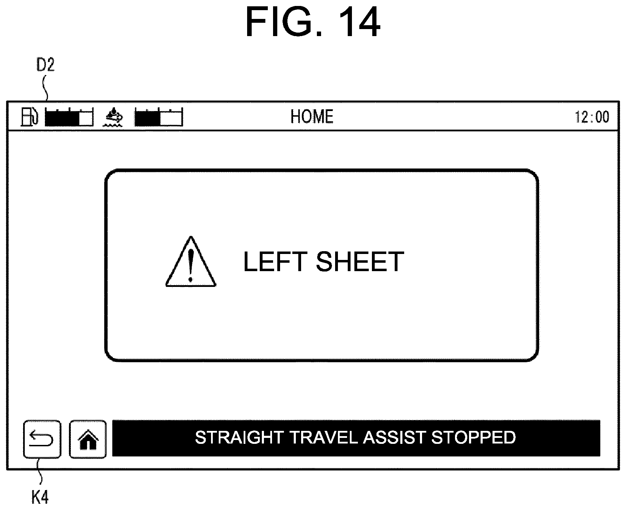

Further, in a case where the work machine 10 is automatically traveling, the operation to stop the automatic travel may be, for example, an operation (action) in which the operator leaves the seat (cockpit) in the cabin 18. Specifically, when the operator riding on the work machine 10 stands up from the seat during the automatic travel of the work machine 10, the vehicle control device 11 stops the automatic travel. For example, in a case where the work machine 10 is automatically traveling and the UFO operation screen D3 illustrated in FIG. 11 is displayed on the operation terminal 17, when the operator stands up from the seat, the vehicle control device 11 stops the automatic travel, and the display processing unit 711 transitions the UFO operation screen D3 to the home screen D2 (see FIG. 14) and displays a warning message regarding the factor that stopped the automatic travel (for example, "left sheet") on the home screen D2. When the operator presses a "back" button K4 on the home screen D2 illustrated in FIG. 14, the display processing unit 711 transitions the screen to the UFO operation screen D3 illustrated in FIG. 9. When the operator stands up from the seat, the display processing unit 711 may transition the UFO operation screen D3 to the guidance screen D1 (see FIG. 13), and may display a message indicating that the automatic travel has been stopped (for example, "straight travel assist stopped") on the guidance screen D1.

The factor that stops the automatic travel is not limited to each of the above cases, and includes, for example, a decrease in the positioning accuracy (position accuracy) of the work machine 10, an action abnormality, and the like. The aforementioned warning message includes a message indicating these factors.

### [Operation Control Processing]

Hereinafter, an example of the operation control processing executed by the vehicle control device 11 and the operation terminal 17 (operation control unit 71) will be described with reference to FIG. 15. The present invention may be viewed as an invention of an operation control method in which the vehicle control device 11 and the operation terminal 17 execute part or all of the operation control processing, or as an invention of an operation control program with the purpose of causing the vehicle control device 11 and the operation terminal 17 to execute part or all of the operation control method. Moreover, one or more processors may execute the operation control processing.

In step S1, the operation control unit 71 determines whether an automatic travel start instruction has been accepted from the operator. For example, the operator moves the work machine 10 to a work start position and presses the automatic travel button 171 (see FIG. 3). If having accepted the automatic travel start instruction from the operator (S1: Yes), the operation control unit 71 shifts the processing to step S2. The operation control unit 71 waits until accepting, from the operator, the automatic travel start instruction (S1: No).

In step S2, the vehicle control device 11 determines whether the work machine 10 satisfies the automatic travel start condition. Specifically, the vehicle control device 11 determines whether the work machine 10 is positioned within a predetermined distance from the target route R and within a predetermined direction with respect to the target route R. If determining that the work machine 10 satisfies the automatic travel start condition (S2: Yes), the vehicle control device 11 shifts the processing to step S3. If determining that the work machine 10 does not satisfy the automatic travel start condition (S2: No), the vehicle control device 11 returns the processing to step S 1.

In step S3, the operation control unit 71 determines whether the display screen displayed on the operation terminal 17 is the guidance screen D1 for automatic travel (see FIG. 6). If determining that the display screen displayed on the operation terminal 17 is the guidance screen D1 (S3: Yes), the operation control unit 71 shifts the processing to step S4. On the other hand, if determining that the display screen displayed on the operation terminal 17 is a display screen (non-guidance screen) different from the guidance screen D1 (S3: No), the operation control unit 71 shifts the processing to step S31.

If the work machine 10 satisfies the automatic travel start condition, the operation control unit 71 displays, on the guidance screen D1, a message indicating that the work machine 10 has entered a state where automatic travel is possible (for example, "straight travel assist can be started") (see FIG. 6).

In step S31, the operation control unit 71 transitions (shifts) the non-guidance screen to the guidance screen D1. For example, when the operator presses the automatic travel button 171 in a state where the UFO operation screen D3 illustrated in FIG. 9 is displayed on the operation terminal 17, the operation control unit 71 transitions the UFO operation screen D3 to the guidance screen D1 illustrated in FIG. 6. After step S31, the operation control unit 71 returns the processing to step S 1.

In step S4, the vehicle control device 11 causes the work machine 10 to start automatic travel, and the operation control unit 71 displays, on the guidance screen D1, a message indicating that the work machine 10 is automatically traveling (for example, "traveling with straight travel assist") (see FIG. 7).

Thus, for example, the work machine 10 performs predetermined work (for example, tillage work) while automatically traveling on the work route Ra1 (see FIG. 4).

Next, in step S5, the operation control unit 71 determines whether an automatic travel stop instruction has been accepted from the operator. For example, the operator presses the automatic travel button 171 (see FIG. 3) when the work machine 10 reaches the end point of the work route Ra1. If having accepted the automatic travel stop instruction from the operator (S5: Yes), the operation control unit 71 shifts the processing to step S6. If the operation control unit 71 has not accepted the automatic travel stop instruction from the operator (S5: No), the operation control unit 71 shifts the processing to step S8.

In step S6, the operation control unit 71 determines whether the display screen displayed on the operation terminal 17 is the guidance screen D1 (see FIG. 7). If determining that the display screen displayed on the operation terminal 17 is the guidance screen D1 (S6: Yes), the operation control unit 71 shifts the processing to step S7. On the other hand, if determining that the display screen displayed on the operation terminal 17 is a display screen (non-guidance screen) different from the guidance screen D1 (S6: No), the operation control unit 71 shifts the processing to step S61.

In step S7, the vehicle control device 11 causes the work machine 10 to stop automatic travel, and the operation control unit 71 displays, on the guidance screen D1, a message indicating that the automatic travel of the work machine 10 has been stopped (for example, "straight travel assist stopped") (see FIG. 13). After step S7, the processing proceeds to step S8.

In step S61, the vehicle control device 11 stops the automatic travel of the work machine 10, and the operation control unit 71 transitions (shifts) the non-guidance screen to the guidance screen D 1. For example, when the operator presses the automatic travel button 171 in a state where the UFO operation screen D3 illustrated in FIG. 11 is displayed on the operation terminal 17, the vehicle control device 11 stops the automatic travel of the work machine 10, and the operation control unit 71 transitions the UFO operation screen D3 to the guidance screen D1 illustrated in FIG. 13 and displays a message indicating that the automatic travel has been stopped (for example, "straight travel assist stopped") on the guidance screen D1. After step S61, the processing proceeds to step S8.

In step S8, the vehicle control device 11 and the operation control unit 71 determine whether the work by the work machine 10 is finished. For example, when the work machine 10 has reached the end point of the work route Ra12 included in the target route R, the vehicle control device 11 and the operation control unit 71 determine that the work by the work machine 10 is finished. If the work is finished (S8: Yes), the aforementioned operation control processing ends. On the other hand, if the work is not finished (S8: No), the processing returns to step S1, and the vehicle control device 11 and the operation control unit 71 repeat the processing described above.

As described above, the work machine 10 according to the present embodiment causes the work machine 10 to execute a first action (for example, automatic travel) when an operation unit (automatic travel button 171, lifting-lowering lever 14L, etc.) that can operate the work machine 10 is operated by a user (operator) in a state where a first display screen (guidance screen D1) relating to the automatic travel of the work machine 10 is displayed on the operation terminal 17, and does not cause the work machine 10 to execute the first action when the aforementioned operation unit is operated by a user in a state where a second display screen (non-guidance screen) different from the first display screen is displayed on the operation terminal 17.

According to the above configuration, the work machine 10 is caused to start automatic travel when the operator issues an automatic travel start instruction in a state where the guidance screen D1 relating to automatic travel is displayed on the operation terminal 17, whereas the work machine 10 is not caused to start automatic travel when the operator issues an automatic travel start instruction in a state where the guidance screen D1 relating to automatic travel is not displayed on the operation terminal 17. Here, in a case where the automatic travel start instruction is issued by the operator when the guidance screen D1 relating to automatic travel is not displayed, there is a possibility that the instruction is not intended by the operator. In this regard, according to the above configuration, it is possible to prevent the work machine 10 from starting automatic travel due to an unintentional automatic travel start instruction from the operator.

Further, the work machine 10 according to the present embodiment displays information regarding automatic travel on the first display screen when the operation unit (automatic travel button 171 or the like) that can operate the work machine 10 is operated by the user (operator) in a state where the first display screen (guidance screen D1) relating to automatic travel of the work machine 10 is displayed on the operation terminal 17, and transitions a second display screen different from the first display screen (non-guidance screen) to a display screen (for example, guidance screen D1) relating to automatic travel when the operation unit is operated by the user in a state where the second display screen is displayed on the operation terminal 17.

According to the above configuration, information indicating that automatic travel has started is displayed on the guidance screen D1 when the operator issues an automatic travel start instruction in a state where the guidance screen D1 relating to automatic travel is displayed on the operation terminal 17, whereas the screen is transitioned to the guidance screen D1 when the operator issues the automatic travel start instruction in a state where the guidance screen D1 relating to automatic travel is not displayed on the operation terminal 17. In this way, since a plurality of functions (functions such as an automatic travel start instruction and screen transition) according to the content of the display screen are assigned to one operation unit (for example, the automatic travel button 171), it is possible to improve the convenience of the operation unit.

The operation unit of the present invention may be provided in the work machine 10 (for example, the automatic travel button 171, the lifting-lowering lever 14L, or the like), or may be provided outside the work machine 10. For example, the operation unit of the present invention may be provided in an operation terminal 17 (a tablet terminal, a smartphone, or the like) capable of communicating with the work machine 10. For example, the automatic travel button 171 which is the operation unit of the present invention may be displayed as an icon image on a display screen (for example, a display screen different from the guidance screen D1) of the operation terminal 17, or may be provided as a physical switch on the operation terminal 17. Further, the operation terminal 17 of the present invention may be configured to be brought into the work machine 10 and taken out from the work machine 10.

The present invention is not limited to the above-described embodiment. For example, the operation unit of the present invention may be an operation unit that accepts, from the user, an operation to change the position or orientation of the target route of the work machine 10. Specifically, the operation unit of the present invention may be a shift button 172 (see FIG. 3) that performs a correction operation (shift operation) that corrects the positional deviation between the work machine 10 and the target route.

For example, when the shift button 172 is operated by the operator in a state where the work machine 10 is executing automatic travel, the position or orientation of the target route of the work machine 10 is changed. On the other hand, when the shift button 172 is operated by the operator in a state where the work machine 10 is not executing automatic travel, an action according to the display content of the operation terminal 17 is executed.

For example, when the guidance screen D1 illustrated in FIG. 7 is displayed on the operation terminal 17 and the work machine 10 is automatically traveling, if the operator presses the right side of the shift button 172, the vehicle control device 11 shifts the position of the target route of the work machine 10 to the right side.

On the other hand, when the guidance screen D1 illustrated in FIG. 6 is displayed on the operation terminal 17 and the work machine 10 is not automatically traveling, if the operator presses the right side of the shift button 172, the operation control unit 71 changes the "sensitivity" in the guidance screen D1 illustrated in FIG. 6 to a large value. The sensitivity indicates correction sensitivity when the work machine 10 returns to the target route in a case where the work machine 10 is displaced from the target route. That is, a function is assigned to the shift button 172 in such a manner that the right side of the shift button 172 corresponds to the "+" button of the "sensitivity" of the guidance screen D1, and the left side of the shift button 172 corresponds to the "-" button of the "sensitivity" of the guidance screen D1.

Further, when the UFO operation screen D3 illustrated in FIG. 9 is displayed on the operation terminal 17 and the work machine 10 is not automatically traveling, if the operator presses the right side of the shift button 172, the operation control unit 71 changes the degree of "tilt" in the UFO operation screen D3 illustrated in FIG. 9. That is, a function is assigned to the shift button 172 in such a manner that the right side of the shift button 172 corresponds to the right arrow of the UFO operation screen D3, and the left side of the shift button 172 corresponds to the left arrow of the UFO operation screen D3.

The operation of changing the setting contents by the shift button 172 includes an operation of changing the offset change amount. For example, in a case where the change amount (shift amount) of the target route when the right side of the shift button 172 is pressed once is set to "X1", if the operator presses the shift button 172 during the automatic travel of the work machine 10, the target route is shifted by "X1". On the other hand, when the shift amount is set to "X1" and the work machine 10 is not automatically traveling, if the operator presses the shift button 172, the shift amount can be changed from "X1" to "X2". If the shift amount is changed to "X2", the target route is shifted by "X2" when the operator presses the shift button 172 during automatic travel of the work machine 10. As described above, a function of changing the setting information ("shift amount" in the above example) relating to the original function ("shift route" in the above example) of the operation unit may be assigned to the operation unit.

As described above, the operation control unit 71 changes the setting content of the work machine 10 when the operation unit (for example, the shift button 172) is operated by an operator in a state where the work machine 10 is not executing automatic travel and a setting screen relating to the work machine 10 is displayed on the operation terminal 17. Thus, since a plurality of functions are assigned to the aforementioned operation unit, it is possible to improve the convenience of the aforementioned operation unit.

Although the setting item of "sensitivity" can be set on the guidance screen D1 illustrated in FIG. 6, the operator may be able to optionally register the setting item that can be set on the guidance screen D1. For example, the operation control unit 71 may display the setting item of the shift amount, the setting item of the UFO, and the like on the guidance screen D1 in response to the registration operation of the operator.

As another embodiment of the present invention, the second display screen of the present invention may be a non-display screen (turned-off screen) in which the operation display unit 73 is turned off. For example, when the operator presses down the icon of "OFF" on the home screen D2 (see FIG. 8), the display processing unit 711 turns off the operation display unit 73. Further, for example, when the operator does not continuously operate the operation display unit 73 for a predetermined time, the display processing unit 711 turns off the operation display unit 73.

For example, when the automatic travel button 171 is operated by the operator to start automatic travel (travel start instruction) in a state where the operation display unit 73 is in the turned-off screen state, the vehicle control device 11 does not cause the work machine 10 to start automatic travel, and the display processing unit 711 tuns on the operation display unit 73 (turns on the screen) and displays the guidance screen D1 (transitions the tuned-off screen to the guidance screen D1). Moreover, when the automatic travel button 171 is operated by the operator to stop automatic travel (travel stop instruction) in a state where the operation display unit 73 is in the turned-off screen state during the automatic travel of the work machine 10, the vehicle control device 11 causes the work machine 10 to stop automatic travel, and the display processing unit 711 turns on the operation display unit 73 (turns on the screen) and displays the guidance screen D1.

Further, in the case where the work implement interlock function is set to ON, if the operation display unit 73 is the turned-off screen, the vehicle control device 11 does not start the automatic travel of the work machine 10 even if the operator performs an operation to place the lifting-lowering lever 14L in the "lowering" position. In this case, the vehicle control device 11 executes only the action of lowering the work implement 14, and does not execute the automatic travel action. In addition, in this case, the display processing unit 711 turns on the operation display unit 73 (turns on the screen) and displays the display screen before the turn-off (does not transition the screen to the guidance screen D1).

Moreover, in the case where the work implement interlock function is set to ON, if the operation display unit 73 is the turned-off screen, when the operator performs an operation to place the lifting-lowering lever 14L in the "lifting" position, the vehicle control device 11 lifts the work implement 14 up to the non-work position and stops the automatic travel of the work machine 10, and the display processing unit 711 turns on the operation display unit 73 (turns on the screen) and displays the guidance screen D1 (transitions the turned-off screen to the guidance screen D1) to display a message indicating that the automatic travel has been stopped (for example, "straight travel assist stopped").

The operation control system of the present invention may be configured with the operation terminal 17 alone or may be configured with a server provided with each of the processing units included in the operation terminal 17. Further, the operation control system may be configured with the work machine 10 provided with the operation terminal 17.

### (Second Embodiment)

An automatic travel system 100A (an example of the operation control system) according to the present embodiment is different from that of the first embodiment mainly in the configurations of the operation control unit 71 and the vehicle control device 11 and the mode of the display screen displayed on the operation terminal 17. Hereinafter, the same configurations as those in the first embodiment will be denoted by the same reference numerals, and the explanation will be omitted as appropriate.

### [1] Configuration of Automatic Travel System

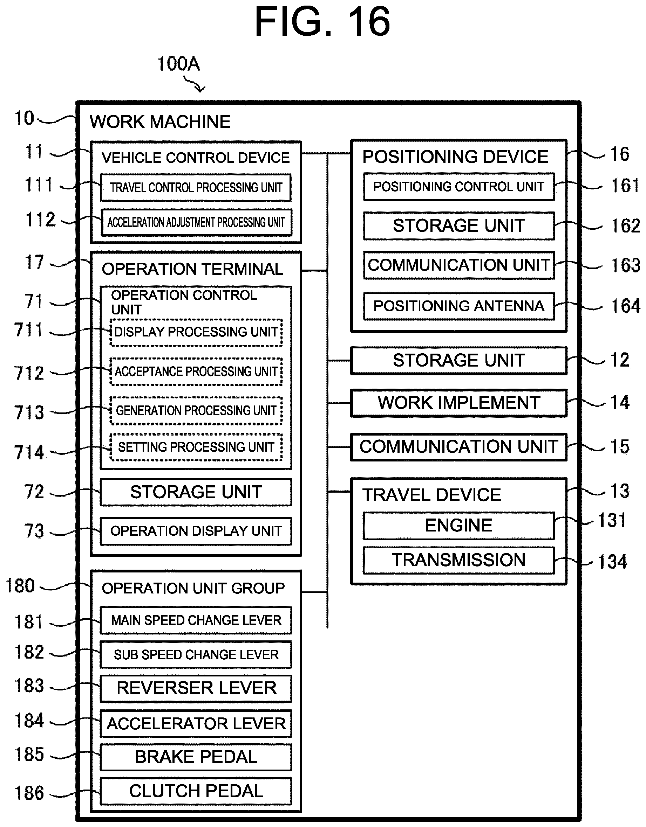

In the automatic travel system 100A according to the present embodiment, as illustrated in FIG. 16, the operation control unit 71 of the operation terminal 17 includes a setting processing unit 714 in addition to the display processing unit 711, the acceptance processing unit 712, and the generation processing unit 713. Further, the vehicle control device 11 of the work machine 10 includes a travel control processing unit 111 and an acceleration adjustment processing unit 112.

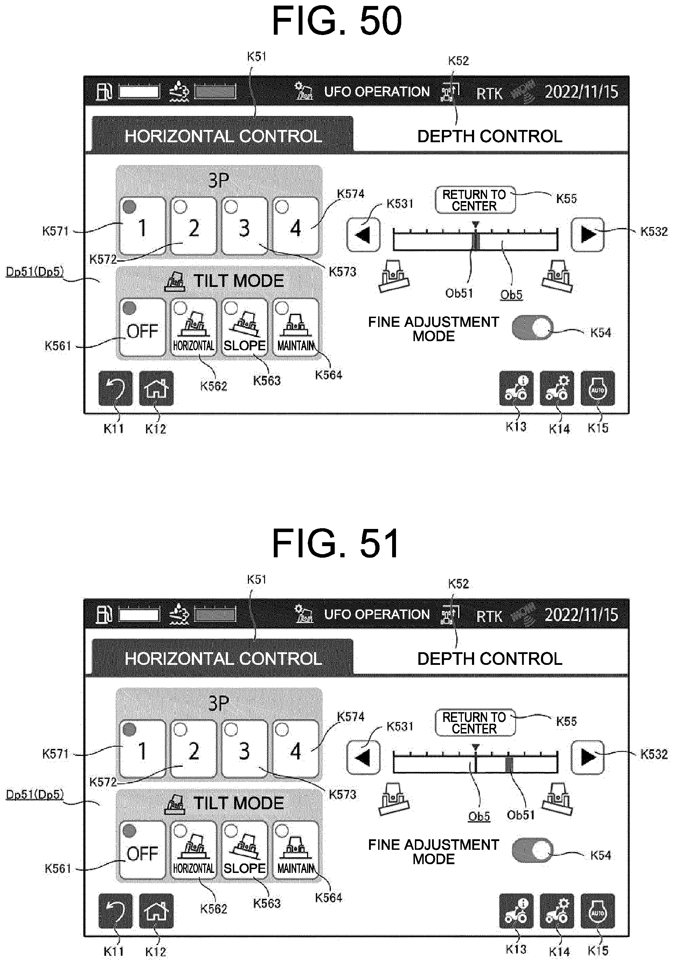

The setting processing unit 714 executes setting processing of performing various settings in accordance with operations of a user (operator) on various display screens displayed on the operation display unit 73. In the present embodiment, the setting processing unit 714 performs settings related to horizontal control in accordance with a user operation on the control operation unit (first operation elements K531 and K532, etc., see FIG. 50) included at least in a UFO (horizontal control) operation screen Dp5 (see FIG. 50).

The travel control processing unit 111 performs travel control relating to the travel of the work machine 10. Specifically, for example, the travel control processing unit 111 adjusts the moving speed (vehicle speed) of the work machine 10 by controlling the transmission 134 of the travel device 13 in accordance with the operation of a main speed change lever 181 by the user (operator). Further, for example, the travel control processing unit 111 controls the number of revolutions of the engine 131 of the travel device 13 in accordance with the operation of an accelerator lever 184 by the user (operator).

The acceleration adjustment processing unit 112 performs acceleration adjustment for adjusting the acceleration until the moving speed (vehicle speed) of the work machine 10 reaches a target speed (target vehicle speed). The "acceleration" referred to in the present disclosure means a change rate (inclination) of a speed with respect to a time from a current speed which is a current moving speed of the work machine 10 to a target speed different from the current speed when the target speed is set. That is, as the acceleration increases, the time required to reach the target speed from the current speed decreases, but the speed change shock increases, and as the acceleration decreases, the time required to reach the target speed from the current speed increases, but the speed change shock decreases.

Further, the acceleration at the time of acceleration of the work machine 10 is defined as positive (plus) acceleration, and the acceleration at the time of deceleration of the work machine 10 is defined as negative (minus) acceleration. Therefore, when a positive acceleration acts on the work machine 10 traveling at a certain moving speed (vehicle speed), the work machine 10 accelerates and the vehicle speed changes to the high speed side, whereas when a negative acceleration acts, the work machine 10 decelerates and the vehicle speed changes to the low speed side. The negative acceleration is synonymous with "deceleration".

In the present embodiment, the acceleration adjustment processing unit 112 can adjust at least the acceleration (that is, "negative acceleration") until the moving speed of the work machine 10 reaches the target vehicle speed at the time of deceleration of the work machine 10 in accordance with a user operation. Further, the acceleration adjustment processing unit 112 can also adjust the acceleration (that is, "positive acceleration") until the moving speed of the work machine 10 reaches the target vehicle speed at the time of acceleration of the work machine 10 in accordance with a user operation.

In short, in the present embodiment, it is possible to adjust both the acceleration at the time of deceleration and the acceleration at the time of acceleration of the work machine 10, that is, both the negative acceleration and the positive acceleration in accordance with the operation of the user (operator).

Specifically, for example, when the operator changes the target speed by operating the main speed change lever 181, the travel control processing unit 111 controls the travel device 13 (transmission 134) to change the moving speed of the work machine 10 in such a manner that the moving speed of the work machine 10 matches the changed target speed. Here, the travel control processing unit 111 determines the change rate of the moving speed of the work machine 10 on the basis of the acceleration adjusted by the acceleration adjustment processing unit 112. For example, when the acceleration is set to be small, the travel control processing unit 111 gradually changes the moving speed of the work machine 10 by gradually changing the target speed. Conversely, when the acceleration is set to be large, the travel control processing unit 111 steeply changes the moving speed of the work machine 10 by steeply changing the target speed.

Further, in FIG. 16, an operation unit group 180 including a plurality of operation units which are arranged in the cabin 18 (see FIG. 2) as a boarding unit on which the operator boards and operated by the operator is illustrated. The operation unit group 180 includes, for example, various operation units such as the main speed change lever 181, a sub speed change lever 182, a reverser lever 183, the accelerator lever 184, a brake pedal 185, and a clutch pedal 186. Although not illustrated in FIG. 16, the operation unit group 180 also includes the lifting-lowering lever 14L (see FIG. 3) and the like. However, the operation unit group 180 illustrated in FIG. 16 is merely an example, and the operation units included in the operation unit group 180 are not limited to the operation units illustrated in FIG. 16. For example, the operation unit group 180 may include an accelerator pedal in addition to or as an alternative to the accelerator lever 184.

The main speed change lever 181 accepts an operation (an acceleration operation and a deceleration operation) for steplessly increasing and decreasing the vehicle speed of the work machine 10. The sub speed change lever 182 accepts an operation of switching the speed range of the work machine 10 across a plurality of speed ranges. As an example, an auxiliary transmission has three speed ranges of "C stage", "first speed", and "second speed", and each time the speed range of the auxiliary transmission is switched from "C stage" to "first speed" and further from "first speed" to "second speed" in response to the operation of the sub speed change lever 182, the speed range of the work machine 10 becomes high (high speed). The "C stage" and the "first speed", which are low speed stages, are used for work such as tillage work, and the "second speed" is not used for work.

The reverser lever 183 accepts an operation for switching between forward and reverse of the work machine 10. If the reverser lever 183 is in "forward" or "reverse", the vehicle speed of the work machine 10 does not become "0" even if the vehicle speed is minimized by the main speed change lever 181, and the work machine 10 travels at a very low speed in the travel direction instructed by the reverser lever 183. When the reverser lever 183 is operated to the "neutral" position, the vehicle speed of the work machine 10 becomes "0" and the work machine 10 stops. The accelerator lever 184 accepts an operation of adjusting the number of revolutions of the engine 131. The brake pedal 185 accepts an operation for braking the work machine 10. The clutch pedal 186 accepts an operation for interrupting the power of the engine 131.

### [2] Display Screen

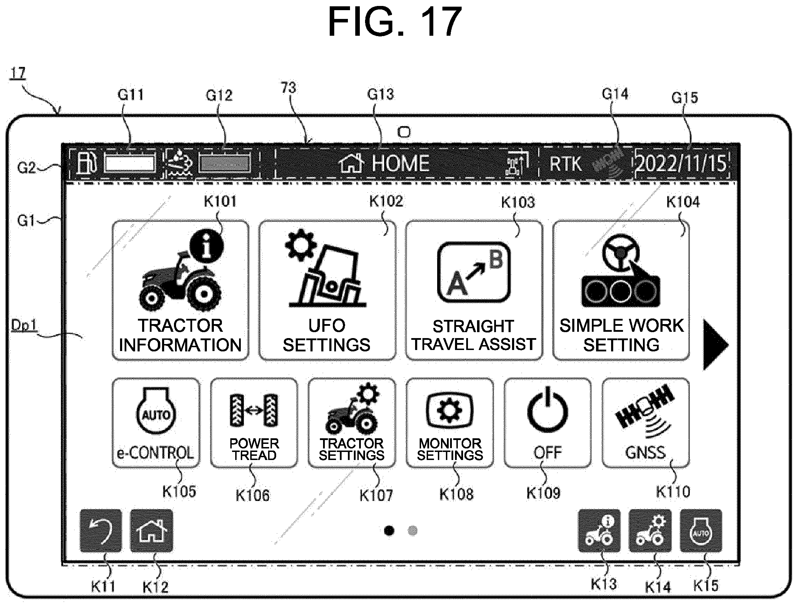

Hereinafter, modes of display screens displayed on the operation terminals 17 in the automatic travel system 100A according to the present embodiment will be described with reference to FIGs. 17 to 52.

FIG. 17 and the like illustrate a display screen displayed on the operation display unit 73 of the operation terminal 17 including a touch panel display. The "screen" such as a display screen referred to in the present disclosure means a video (image) displayed on the operation display unit 73 and the like, and includes figures, graphics, photographs, texts, and moving images. In other words, in the automatic travel system 100A, for example, the operation control unit 71 (the display processing unit 711) of the operation terminal 17 can generate various display surfaces and display the display surfaces on the operation display unit 73. Here, when the display screen includes a moving image or the like, the display screen includes not a certain video but a video that is changing at every moment. In the drawings such as FIG. 17 illustrating the display screen displayed on the operation display unit 73, a one-dot chain line that indicates a region, a lead line, and reference numerals are all given merely for explanation and not actually displayed on the operation display unit 73.

Further, the design, arrangement, and size of the object on the display screen described below are merely examples, and can be appropriately changed. The objects or regions in the display screen may or may not be clearly demarcated by the boundary lines.

Here, the automatic travel system 100A (an example of the operation control system) executes processing relating to display of various display screens in the operation control method when a specific start operation set in advance for executing the operation control program is performed. The start operation includes, for example, connection of the operation terminal 17 to the vehicle control device 11 of the work machine 10 (activation of application software), and login to a dedicated site that requires input of a user identification (ID) and a password. Meanwhile, when a specific end operation set in advance is performed on the operation terminal 17, the automatic travel system 100A ends the processing relating to the display of the various display screens in the operation control method. The end operation includes, for example, logout, disconnection of the operation terminal 17 from the vehicle control device 11 of the work machine 10, and the like.

### [2.1] Home Screen

First, a home screen Dp1 displayed on the operation display unit 73 of the operation terminal 17 by the operation control method according to the present embodiment will be described with reference to FIGs. 17, 18, and 19.

The home screen Dp1 is a basic display screen to be displayed on the operation display unit 73 by the operation control method. The display screen displayed on the operation display unit 73 including a touch panel display can be changed from the home screen Dp1 to various display screens including an operation screen (guidance screen D1) or the like in accordance with an operation on the operation display unit 73. The home screen Dp1 corresponds to the home screen D2 (see FIG. 8) in the first embodiment.

As illustrated in FIG. 17, the home screen Dp1 includes a main region G1 and a strip region G2. Specifically, the home screen Dp1 is divided in a longitudinal direction (up-down direction) into two regions. In addition, the main region G1 and the strip region G2 are arranged in the order of the strip region G2 and the main region G1 from the top. The main region G1 is a region that occupies most of the home screen Dp1, whereas the strip region G2 is a strip-shaped region that has a length in the horizontal direction (left-right direction) and occupies only the upper end portion of the home screen Dp1.

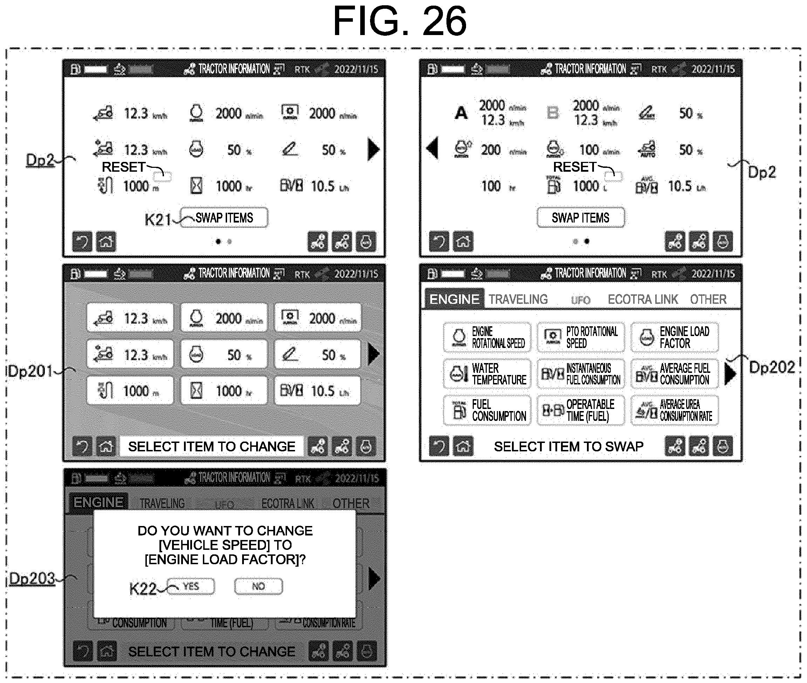

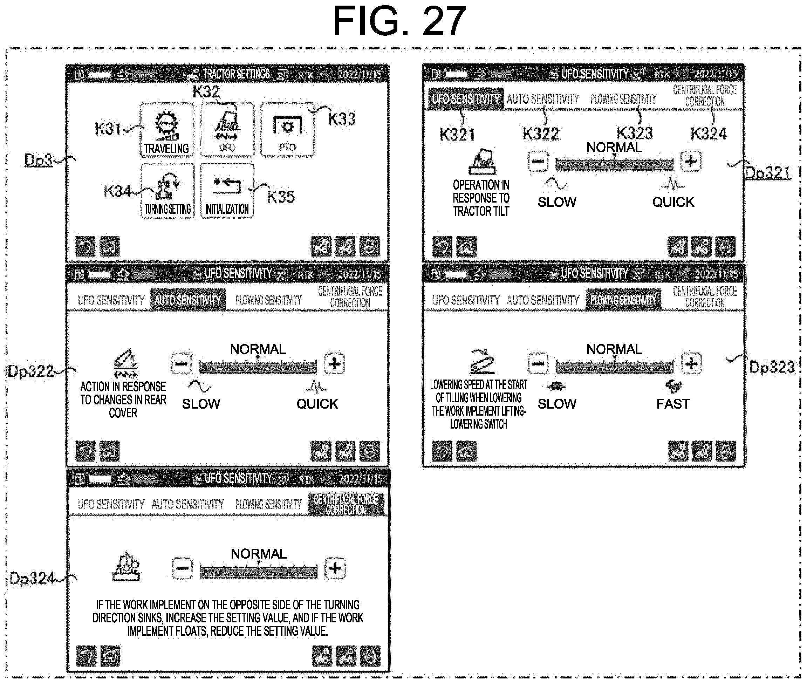

In the main region G1 of the home screen Dp1, a plurality of home icons K101 to K110 are displayed. Each of the plurality of home icons K101 to K110 is an object that accepts an operation of the user (operator). An individual function is assigned to each of the plurality of home icons K101 to K110. For example, when the home icon K101 to which the function of "tractor information" is assigned is operated by the user (operator), the home screen Dp1 transitions to a tractor information screen Dp2 indicating "tractor information" (see FIG. 26). Meanwhile, when the home icon K107 to which the function of "tractor settings" is assigned is operated by the user, the home screen Dp1 transitions to a tractor settings screen Dp3 indicating "tractor settings" (see FIG. 27).

Further, a plurality of shortcut keys K11 to K15 are displayed in the main region G1 of the home screen Dp1. Each of the plurality of shortcut keys K11 to K15 is an object that accepts an operation of the user (operator). An individual function is assigned to each of the plurality of shortcut keys K11 to K15. For example, when the shortcut key K13 to which the function of "tractor information" is assigned is operated by the user (operator), the home screen Dp1 transitions to the tractor information screen Dp2 indicating "tractor information". Meanwhile, when the shortcut key K14 to which the function of "tractor settings" is assigned is operated by the user (operator), the home screen Dp1 transitions to a tractor settings screen Dp3 indicating "tractor settings".

The plurality of shortcut keys K11 to K15 are arranged in a lower end portion of the main region G1. The plurality of shortcut keys K11 to K15 are displayed at the same positions as those in the home screen Dp1, for example, on display screens other than the home screen Dp1, such as the tractor information screen Dp2 and the tractor settings screen Dp3. That is, the plurality of shortcut keys K11 to K15 are basically constantly displayed on the operation display unit 73 of the operation terminal 17.

Fuel remaining amount information G11, urea water remaining amount information G12, title information G13, antenna reception information G14, and date information G15 are displayed in the strip region G2 of the home screen Dp1. These pieces of information are displayed in a row in the strip region G2 in the order of the fuel remaining amount information G11, the urea water remaining amount information G12, the title information G13, the antenna reception information G14, and the date information G15 from the left.

As the fuel remaining amount information G11, a graph indicating the remaining amount of fuel (diesel oil) is displayed. As the urea water remaining amount information G12, a graph indicating the remaining amount of urea water is displayed. As the title information G13, the title of the current display screen ("HOME" in the case of the home screen Dp1) is displayed. The antenna reception information G14 indicates the reception status of the positioning antenna 164, and the date information G15 indicates the current date.

The strip region G2 is displayed at the same position as that in the home screen Dp1, for example, on display screens other than the home screen Dp1, such as the tractor information screen Dp2 and the tractor settings screen Dp3. That is, the strip region G2 is basically constantly displayed on the operation display unit 73 of the operation terminal 17.

The display position of each piece of information in the strip region G2 is fixedly determined. Therefore, for example, in the work machine 10 that does not use the urea water, the title information G13 is displayed on the right of the fuel remaining amount information G11 with a space for displaying the urea water remaining amount information G12.

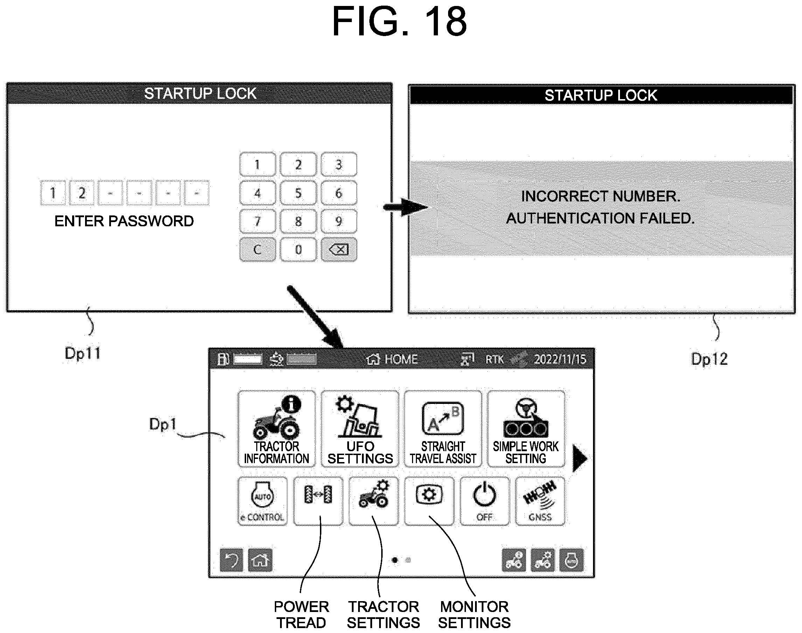

As illustrated in FIG. 18, it is preferable that the home screen Dp1 is displayed after a password (passcode) is input on a startup lock screen Dp11. In other words, when a specific start operation is performed, first, the startup lock screen Dp11 is displayed on the operation display unit 73. On the startup lock screen Dp11, for example, a key for accepting an operation for inputting a password, such as a numeric keypad, is displayed, and when a regular password is input on the startup lock screen Dp11, the display screen transitions from the startup lock screen Dp11 to the home screen Dp1. On the other hand, when a wrong password is input on the startup lock screen Dp 11, as illustrated in FIG. 18, the display screen transitions from the startup lock screen Dp11 to an error screen Dp12.

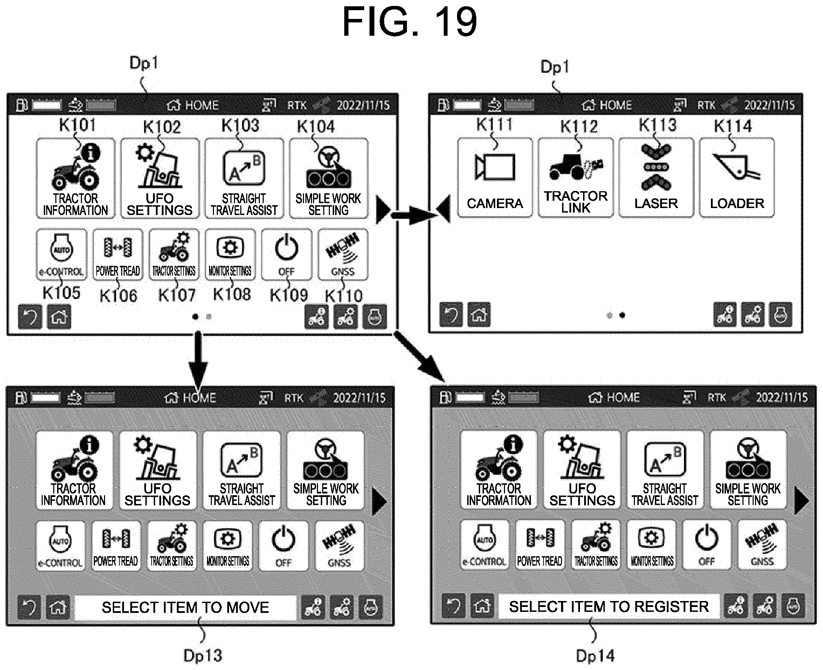

Further, in the present embodiment, as illustrated in FIG. 19, the home screen Dp1 includes a number of home icons K101 to K114 that cannot be displayed on one screen. In this case, when the home screen Dp1 is swiped in the left-right direction or the left and right cursors are pressed, a state where the home icons K101 to K110 are displayed in the main region G1 and a state where the home icons K111 to K114 are displayed in the main region G1 are alternately switched, as illustrated in the upper part of FIG. 19.

Further, the home screen Dp1 can be customized. Specifically, when any one of the plurality of home icons K101 to K114 is long-pressed on the home screen Dp1, the display screen transitions from the home screen Dp1 to a customization screen Dp13 such as that illustrated in FIG. 19. On the customization screen Dp13, for example, any home icons K101 to K114 can be moved by a drag operation, and the layout of the plurality of home icons K101 to K114 can be changed.

Similarly, when any one of the plurality of the shortcut keys K11 to K15 is long-pressed on the home screen Dp1, the display screen transitions from the home screen Dp1 to a shortcut registration screen Dp14 such as that illustrated in FIG. 19. On the shortcut registration screen Dp14, for example, by an operation of selecting any home icon K101 to K114, it is possible to assign the same function as the home icons K101 to K114 to the shortcut keys K11 to K15.

### [2.2] Screen Transition Pattern

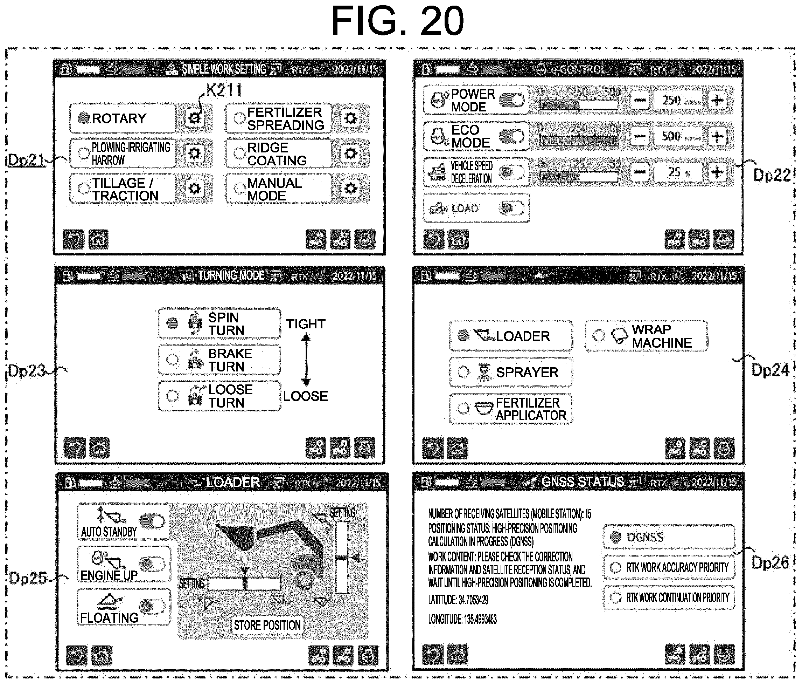

Next, screen transition patterns of display screens displayed on the operation display unit 73 of the operation terminal 17 by the operation control method according to the present embodiment will be described with reference to FIGs. 20 to 41.

FIG. 20 illustrates an example of display screens that can be directly transitioned from the home screen Dp1. A work setting screen Dp21 is a display screen for setting the work implement 14, and is displayed when the home icon K104 is operated on the home screen Dp1. An automatic work control screen Dp22 is a display screen for performing setting related to automatic work control for automatically controlling the number of revolutions of the engine 131 and the vehicle speed in accordance with the work load, and is displayed when the home icon K105 is operated on the home screen Dp1.

A turning setting screen Dp23 is a display screen for setting the turning mode of the work machine 10, and is displayed when a home icon (not illustrated) to which the function of "turning mode setting" is assigned is operated on the home screen Dp1. A link setting screen Dp24 is a display screen for setting a link between the work machine 10 and an external device, and is displayed when the home icon K112 is operated on the home screen Dp1.

A loader setting screen Dp25 is a display screen for setting the operation of the (front) loader attached to the work machine 10, and is displayed when the home icon K114 is operated on the home screen Dp1. A global navigation satellite system (GNSS) setting screen Dp26 is a display screen for setting the positioning device 16 of the work machine 10, and is displayed when the home icon K110 is operated on the home screen Dp1.

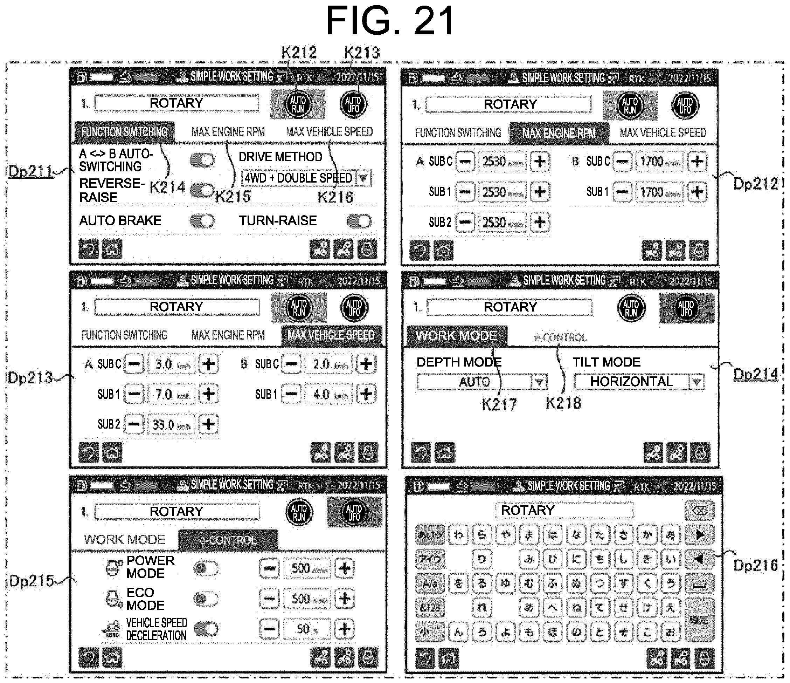

FIG. 21 illustrates an example of display screens that can be transitioned from the work setting screen Dp21. Detail setting screens Dp211 to Dp215 are display screens for setting the details of the work to be performed by the work implement 14, and are displayed when a gear icon K211 (see FIG. 20) associated with each work implement 14 is operated on the work setting screen Dp21.

The detail setting screens Dp211 to Dp213 are display screens for setting the "travel system" related to the automatic travel of the work machine 10, and the detail setting screens Dp214 and Dp215 are display screens for setting the "UFO system" related to the horizontal control of the work machine 10. The detail setting screens Dp211 to Dp213 and the detail setting screens Dp214 and Dp215 are alternately switched by the operation of a travel system key K212 or a UFO system key K213 in each screen. That is, when the travel system key K212 is operated, the detail setting screens Dp211 to Dp213 of the "travel system" are displayed, and when the UFO system key K213 is operated, the detail setting screens Dp214 and Dp215 of the "UFO system" are displayed.

Each of the detail setting screens Dp211 to Dp213 includes three tabs K214 to K216, and the detail setting screens Dp211 to Dp213 are switched by a selection operation of the tabs K214 to K216. That is, when the tab K214 of "FUNCTION SWITCHING" is operated, the detail setting screen Dp211 for settings related to function switching is displayed. When the tab K215 of "MAX ENGINE RPM" is operated, the detail setting screen Dp212 for settings related to the maximum number of revolutions of the engine 131 is displayed. When the tab K216 of "MAX VEHICLE SPEED" is operated, the detail setting screen Dp213 for settings related to the maximum vehicle speed of the work machine 10 is displayed.

Each of the detail setting screens Dp214 and Dp215 includes two tabs K217 and K218, and the detail setting screens Dp214 and Dp215 are switched by a selection operation of the tabs K217 and K218. That is, when the tab K214 of "WORK MODE" is operated, the detail setting screen Dp214 for settings related to a work mode is displayed. When the tab K215 of "e-CONTROL" is operated, the detail setting screen Dp215 for settings related to automatic work control is displayed.

When a text box of work name is selected in each of the detail setting screens Dp211 to Dp215, a character input screen Dp216 is displayed. The character input screen Dp216 is a screen for accepting text input by the user (operator), and the text input here is input to the text box of each of the detail setting screens Dp211 to Dp215.

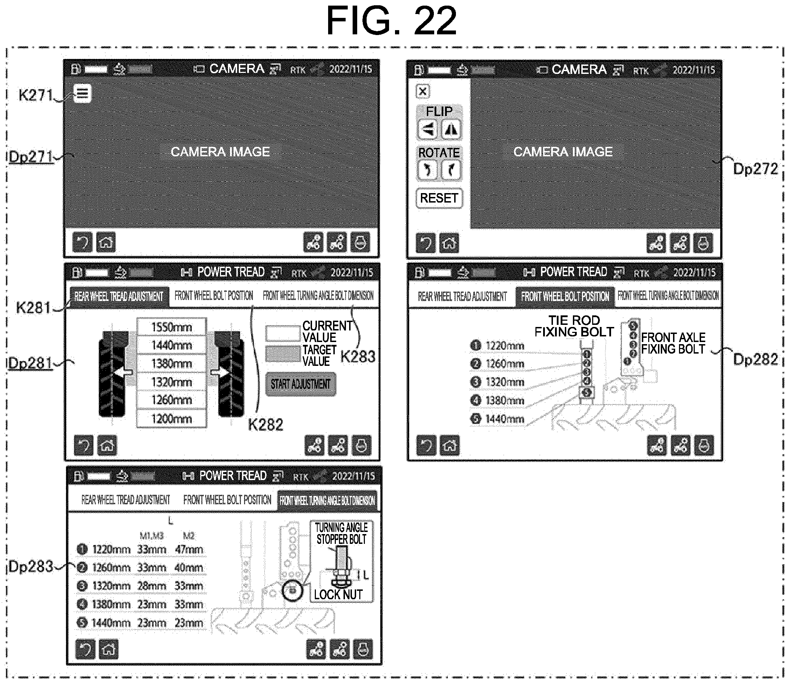

FIG. 22 illustrates an example of display screens that can be transitioned from the home screen Dp1. A camera setting screen Dp271 is a display screen on which a captured image of a camera provided in the work machine 10 is displayed, and is displayed when the home icon K111 is operated on the home screen Dp1. Further, when a menu icon K271 in the camera setting screen Dp271 is operated, the camera setting screen Dp271 transitions to a camera setting screen Dp272. On the camera setting screen Dp272, it is possible to set image processing (for example, flip processing, rotation processing, and the like) on a camera video.

Each of power tread screens Dp281 to Dp283 is a display screen for setting a tread or the like of the travel device 13, and is displayed when the home icon K106 is operated on the home screen Dp1. Further, each of the power tread screens Dp281 to Dp283 includes three tabs K281 to K283, and the power tread screens Dp281 to Dp283 are switched by a selection operation of the tabs K281 to K283. That is, when the tab K281 of "REAR WHEEL TREAD ADJUSTMENT" is operated, the power tread screen Dp281 for settings related to the rear wheel tread is displayed. When the tab K282 of "FRONT WHEEL BOLT POSITION" is operated, the power tread screen Dp282 for settings related to the front wheel bolt position is displayed. When the tab K283 of "FRONT WHEEL TURNING ANGLE BOLT DIMENSION" is operated, the power tread screen Dp283 for settings related to the maximum turning angle of the steered wheels (front wheels) of the work machine 10 is displayed.

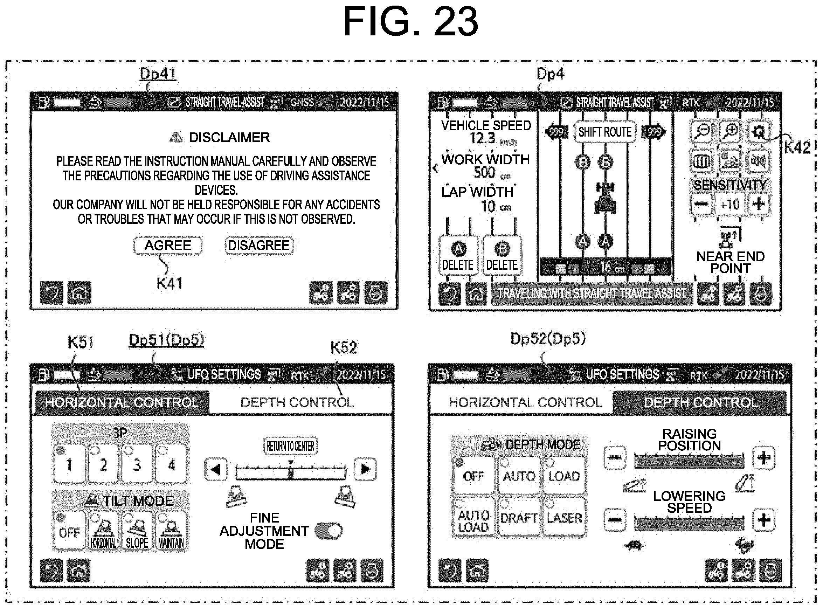

FIG. 23 illustrates an example of display screens that can be transitioned from the home screen Dp1. A guidance screen Dp4 is a display screen for settings related to straight travel assist, and is displayed when the home icon K103 is operated on the home screen Dp1. The guidance screen Dp4 corresponds to the guidance screen D1 (see FIG. 6) in the first embodiment. Here, when the guidance screen Dp4 is displayed for the first time after the work machine 10 is activated (or after the operation terminal 17 is activated), a disclaimer confirmation screen Dp41 is displayed prior to the display of the guidance screen Dp4. The disclaimer confirmation screen Dp41 is a display screen for requesting consent for exemption matters related to the use of the driving assistance device such as straight travel assist, and transitions to the guidance screen Dp4 when an agreement key K41 is operated. The guidance screen Dp4 will be described in detail in the section of "[2.4] Guidance Screen Dp4".

The UFO operation screen Dp5 is a display screen for setting related to the horizontal control of the work implement 14, and is displayed when the home icon K102 is operated on the home screen Dp1. The UFO operation screen Dp5 corresponds to the UFO operation screen D3 (see FIG. 9) in the first embodiment. The UFO operation screen Dp5 includes a UFO operation screen Dp51 relating to horizontal control and a UFO operation screen Dp52 relating to depth control. Each of the UFO operation screens Dp51 and Dp52 includes two tabs K51 and K52, and the UFO operation screens Dp51 and Dp52 are switched by a selection operation of the tabs K51 and K52. That is, when the tab K51 of "HORIZONTAL CONTROL" is operated, the UFO operation screen Dp51 for settings related to horizontal control is displayed. When the tab K52 of "DEPTH CONTROL" is operated, the UFO operation screen Dp52 for settings related to depth control is displayed. The UFO operation screen Dp5 will be described in detail in the section of "[2.5] UFO Operation Screen Dp5".

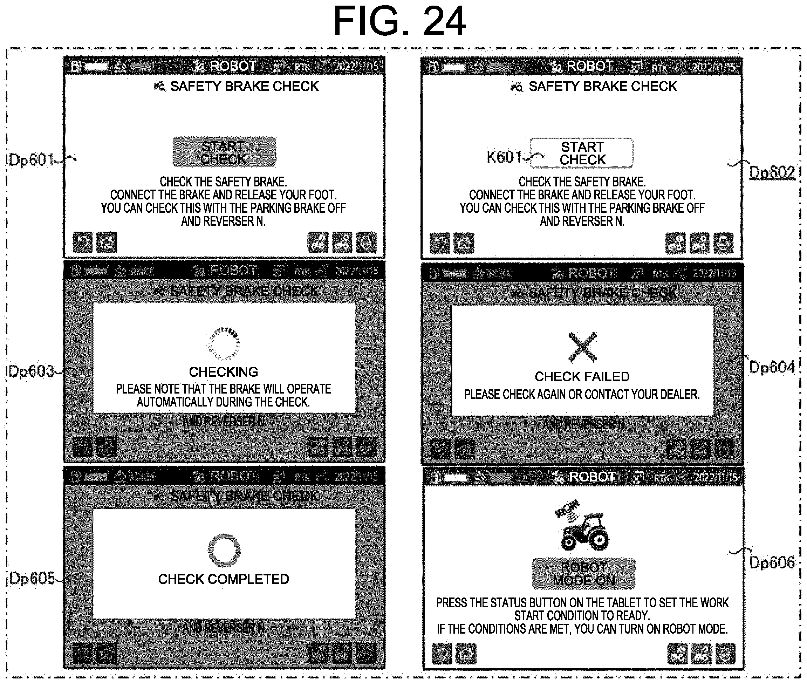

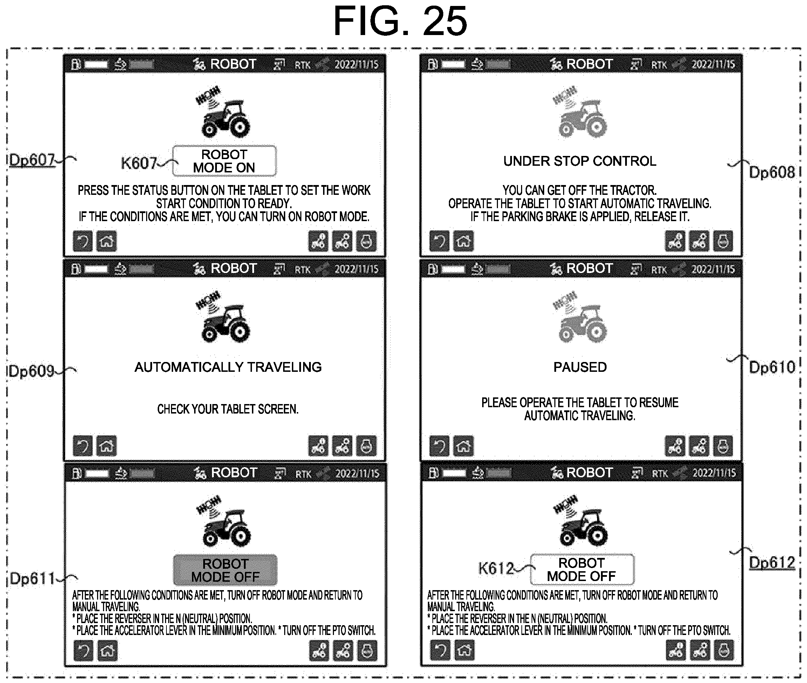

FIGs. 24 and 25 illustrate an example of display screens that can be transitioned from the home screen Dp1. Robot setting screens Dp601 to Dp612 are display screens for performing settings related to a robot tractor mode in which the work machine 10 automatically travels (autonomously travels) in a state where an operator is not on board (that is, an unmanned state), and are displayed when a home icon (not illustrated) associated with the robot tractor mode is operated on the home screen Dp1.

Specifically, if the safety brake has not been checked in a predetermined period (for example, on the day), first, the robot setting screen Dp601 of the robot setting screens Dp601 to Dp612 is displayed. During the display of the robot setting screen Dp601, when a condition that the parking brake is OFF and the reverser lever 183 is in the "neutral" position is satisfied, the screen transitions to the robot setting screen Dp602. During the display of the robot setting screen Dp602, when a check start key K601 is operated the screen transitions to the robot setting screen Dp603. During the display of the robot setting screen Dp603, a brake device is automatically controlled, and the operation of the safety brake is checked. At this time, if the operation check fails, the screen transitions to a robot setting screen Dp604 indicating a check failure. On the other hand, if the operation check is successful, the screen transitions to the robot setting screen Dp605 indicating that the check is successful.

Further, when the safety brake is checked in a predetermined period (for example, on the day), or when a predetermined time elapses after the transition to the robot setting screen Dp605, the screen transitions to the robot setting screen Dp606.

During the display of the robot setting screen Dp606, when the status button of the remote operation terminal (tablet) for remote operation in the robot tractor mode is pressed and the work start condition of being ready is satisfied, the screen transitions to the robot setting screen Dp607. During the display of the robot setting screen Dp607, when a robot mode start key K607 is operated the screen transitions to the robot setting screen Dp608. In this state, the work machine 10 is still stopped and does not start automatic traveling.

During the display of the robot setting screen Dp608, when an automatic travel start operation is performed on the remote operation terminal, the screen transitions to the robot setting screen Dp609. While the display of the robot setting screen Dp609 is being displayed, the work machine 10 performs automatic traveling (autonomous traveling). During the display of the robot setting screen Dp609, when a pause operation is performed on the remote operation terminal, the screen transitions to the robot setting screen Dp610. While the robot setting screen Dp610 is being displayed, the work machine 10 is stopped, and when a restart operation is performed on the remote operation terminal, the screen transitions to the robot setting screen Dp609.

During the display of any of the robot setting screens Dp608 to Dp610, when an abnormality occurs in the function relating to the automatic traveling of the work machine 10 or the operator directly operates the work machine 10, the screen transitions to the robot setting screen Dp611. Further, the screen also transitions to the robot setting screen Dp609 when the work of the work machine 10 is completed or an emergency shutdown operation is performed on the remote operation terminal while the robot setting screen Dp611 is being displayed.

During the display of the robot setting screen Dp611, when a condition that the reverser lever 183 is in the "neutral" position, the accelerator lever 184 is in the minimum position, and the power take off (PTO) switch is turned OFF is satisfied, the screen transitions to the robot setting screen Dp612. During the display of the robot setting screen Dp612, when a robot mode end key K612 is operated, the screen transitions to the robot setting screen Dp606. At this time, the robot tractor mode ends, and the work machine 10 returns to manual traveling.

FIG. 26 illustrates an example of display screens that can be transitioned from the home screen Dp1. The tractor information screen Dp2 is a display screen indicating each setting information of the work machine 10, and is displayed when the home icon K101 is operated on the home screen Dp1.

Further, in the present embodiment, as illustrated in FIG. 26, the tractor information screen Dp2 includes a number of items that cannot be displayed on one screen, such as the vehicle speed and the number of revolutions of the engine 131. In this case, when the tractor information screen Dp2 is swiped in the left-right direction or the left and right cursors are pressed, the displayed items are alternately switched as illustrated in the uppermost part of FIG. 26.

Further, the tractor information screen Dp2 can be customized. Specifically, when an item swap key K21 is operated on the tractor information screen Dp2, the display screen transitions from the tractor information screen Dp2 to a customization screen Dp201 such as that illustrated in FIG. 26. When any item to be changed is selected on the customization screen Dp201, the screen transitions to a customization screen Dp202. On the customization screen Dp202, when an item to be swapped with the change target item selected in the customization screen Dp201 is selected, the screen transitions to a change confirmation screen Dp203. On the change confirmation screen Dp203, when a YES key K22 is operated the item to be changed (for example, "vehicle speed") on the tractor information screen Dp2 is swapped with another item (for example, "engine load factor"), and the display screen transitions to the tractor information screen Dp2.

FIG. 27 illustrates an example of display screens that can be transitioned from the home screen Dp1. The tractor settings screen Dp3 is a display screen for performing each setting of the work machine 10, and is displayed when the home icon K107 is operated on the home screen Dp1. A plurality of setting icons K31 to K35 are displayed on the tractor settings screen Dp3.

UFO sensitivity setting screens Dp321 to Dp324 are display screens for setting the sensitivity of the horizontal control of the work implement 14, and are displayed when the setting icon K32 associated with the UFO sensitivity is operated on the tractor settings screen Dp3.

Each of the UFO sensitivity setting screens Dp321 to Dp324 includes four tabs K321 to K324, and the UFO sensitivity setting screens Dp321 to Dp324 are switched by a selection operation of the tabs K321 to K324. That is, when the tab K321 of "UFO SENSITIVITY" is operated, the UFO sensitivity setting screen Dp321 for setting the sensitivity of the horizontal control with respect to the tilt of the work machine 10 is displayed. When the tab K322 of "AUTO SENSITIVITY" is operated, the UFO sensitivity setting screen Dp322 for setting an operation in response to a change in the rear cover is displayed. When the tab K323 of "PLOWING SPEED" is operated, the UFO sensitivity setting screen Dp323 for setting the lowering speed of the work implement 14 at the start of tilling is displayed. When a tab K324 of "CENTRIFUGAL FORCE CORRECTION" is operated, the UFO sensitivity setting screen Dp324 for setting centrifugal force correction is displayed.

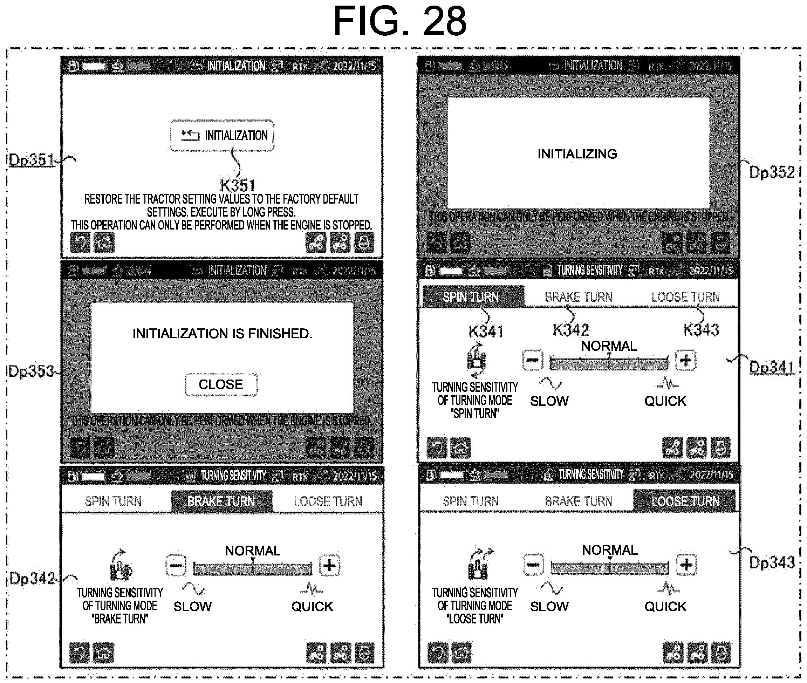

FIG. 28 illustrates an example of display screens that can be transitioned from the tractor settings screen Dp3. Initialization screens Dp351 to Dp353 are display screens for initializing the settings of the work machine 10, and are displayed when the setting icon K35 associated with initialization is operated on the tractor settings screen Dp3. On the initialization screen Dp351, when the initialization key K351 is pressed for a long time, the screen transitions to the initialization screen Dp352, and the initialization processing of each setting value that has been set is executed. When the initialization processing ends, the screen transitions to the initialization screen Dp353.

Turning sensitivity setting screens Dp341 to Dp343 are display screens for setting the turning sensitivity of the work machine 10, and are displayed when a setting icon (not illustrated) associated with the turning sensitivity is operated on the tractor settings screen Dp3.

Each of the turning sensitivity setting screens Dp341 to Dp343 includes three tabs K341 to K343, and the turning sensitivity setting screens Dp341 to Dp343 are switched by a selection operation of the tabs K341 to K343. That is, when the tab K341 of "SPIN TURN" is operated, the turning sensitivity setting screen Dp341 for setting the turning sensitivity at the time of spin turn of the work machine 10 is displayed. When the tab K342 of "BRAKE TURN" is operated, a turning sensitivity setting screen Dp342 for setting the turning sensitivity of the work machine 10 at the time of a brake turn is displayed. When the tab K343 of "LOOSE TURN" is operated, a turning sensitivity setting screen Dp343 for setting the turning sensitivity of the work machine 10 at the time of a loose turn is displayed.

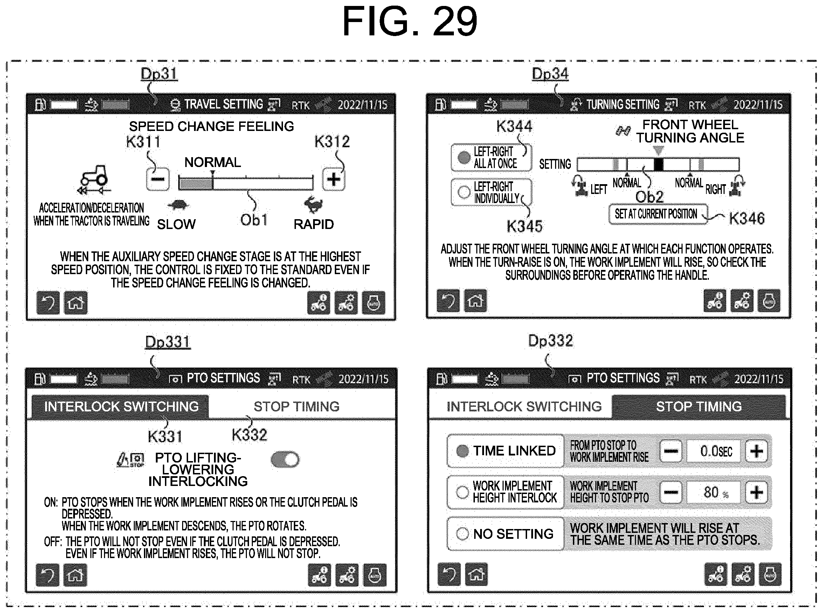

FIG. 29 illustrates an example of display screens that can be transitioned from the tractor settings screen Dp3. A travel setting screen Dp31 is a display screen for performing settings related to the speed change feeling (acceleration) of the travel device 13, and is displayed when the setting icon K31 associated with travel setting is operated on the tractor settings screen Dp3. The turning sensitivity setting screen Dp34 is a display screen for settings related to the maximum turning angle of the steered wheels (front wheels) of the work machine 10, and is displayed when the setting icon K34 associated with turning setting is operated on the tractor settings screen Dp3. The settings related to the speed change feeling (acceleration) will be described in detail in the section "[2.3] Acceleration Adjustment Function".

PTO setting screens Dp331 and Dp332 are display screens for settings related to PTO, and are displayed when the setting icon K33 associated with PTO setting is operated on the tractor settings screen Dp3.

Each of the PTO setting screens Dp331 and Dp332 includes two tabs K331 and K332, and the PTO setting screens Dp331 and Dp332 are switched by a selection operation of the tabs K331 and K332. That is, when the tab K331 of the "INTERLOCK SWITCHING" is operated, the PTO setting screen Dp331 for setting the PTO relating to the interlocking with the lifting operation of the work implement 14 is displayed. When the tab K332 of "STOP TIMING" is operated, the PTO setting screen Dp332 for settings related to stopping of the PTO is displayed.

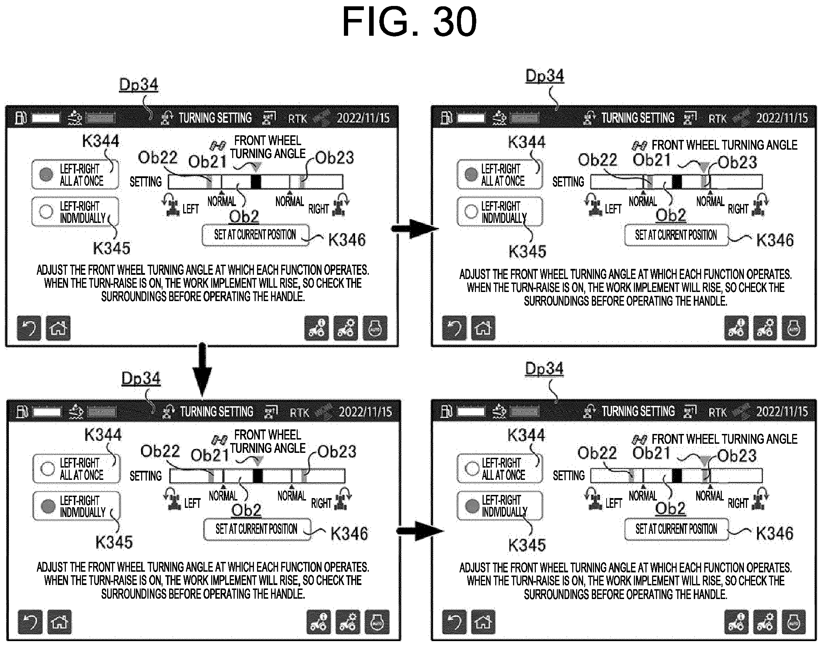

FIG. 30 illustrates details of the turning sensitivity setting screen Dp34. The turning sensitivity setting screen Dp34 includes a batch key K344, an individual key K345, a setting key K346, and a turning angle object Ob2. The turning angle object Ob2 includes a cursor Ob21 that moves in conjunction with the steering wheel 137, a cursor Ob22 representing the currently set maximum turning angle on the left side, and a cursor Ob23 representing the currently set maximum turning angle on the right side. On the turning sensitivity setting screen Dp34, the batch key K344 and the individual key K345 can be alternatively selected.

In addition, on the turning sensitivity setting screen Dp34, in a state where the batch key K344 is selected, when the setting key K346 is pressed in a state where the steering wheel (front wheel) is turned to any one side by the operation of the steering wheel 137, the maximum turning angles on both the left side and the right side are collectively set to the steering angle at that time. That is, as an example, as illustrated in the upper right of FIG. 30, when the setting key K346 is pressed in a state where the steering wheel is turned to the right by the operation of the steering wheel 137, not only the cursor Ob23 indicating the maximum turning angle on the right side but also the cursor Ob22 indicating the maximum turning angle on the left side is updated in accordance with the position of the cursor Ob21.

Meanwhile, on the turning sensitivity setting screen Dp34, when the individual key K345 is selected as illustrated in the lower left of FIG. 30, and when the setting key K346 is pressed in a state where the steering wheel (front wheel) is turned to any one side by the operation of the steering wheel 137, the maximum turning angle of the side where the steering wheel is actually turned between the left side and the right side is set to the steering angle at that time. That is, as an example, as illustrated in the lower right of FIG. 30, when the setting key K346 is pressed in a state where the steering wheel is turned to the right by the operation of the steering wheel 137, only the cursor Ob23 indicating the maximum turning angle on the right side is updated to the position of the cursor Ob21.

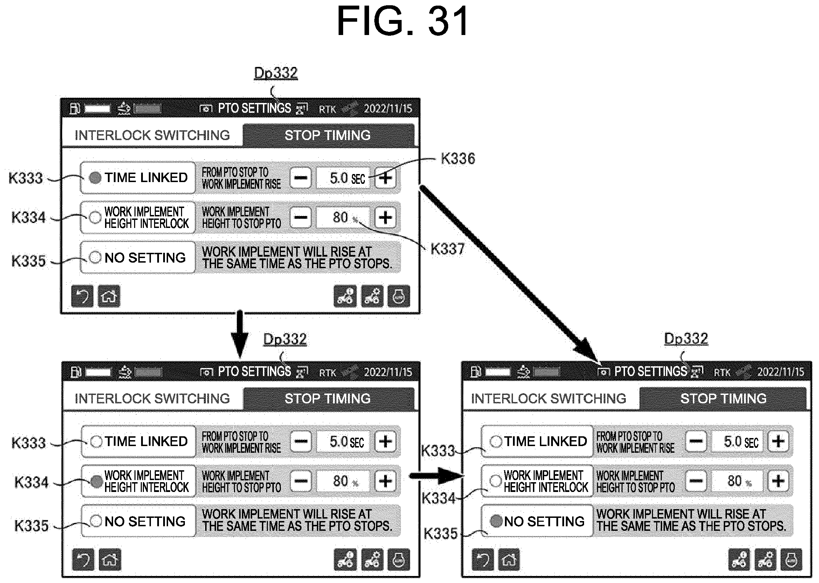

FIG. 31 illustrates details of the PTO setting screen Dp332. The PTO setting screen Dp332 includes a time linked key K333, a height interlock key K334, and a non-setting key K335. The PTO setting screen Dp332 further includes a time designation field K336 and a height designation field K337. On the PTO setting screen Dp332, the time linked key K333, the height interlock key K334, and the non-setting key K335 can be alternatively selected. Each value of the time designation field K336 and the height designation field K337 can be adjusted by a plus button and a minus button.

In addition, in the PTO setting screen Dp332, as illustrated in the upper part of FIG. 31, in a state where the time linked key K333 is selected, the delay time from the stop of the PTO to the lifting of the work implement 14 is set to the time designated in the time designation field K336 ("5.0 seconds" in the example of FIG. 31). Further, on the PTO setting screen Dp332, as illustrated in the lower left of FIG. 31, in a state where the height interlock key K334 is selected, the height of the work implement 14 when stopping the PTO is set to the height designated in the height designation field K337 ("80%" in the example of FIG. 31). Meanwhile, on the PTO setting screen Dp332, as illustrated in the lower right of FIG. 31, in a state where the non-setting key K335 is selected, the setting is made such that the work implement 14 is raised simultaneously with the stop of the PTO irrespective of the values of the time designation field K336 and the height designation field K337.

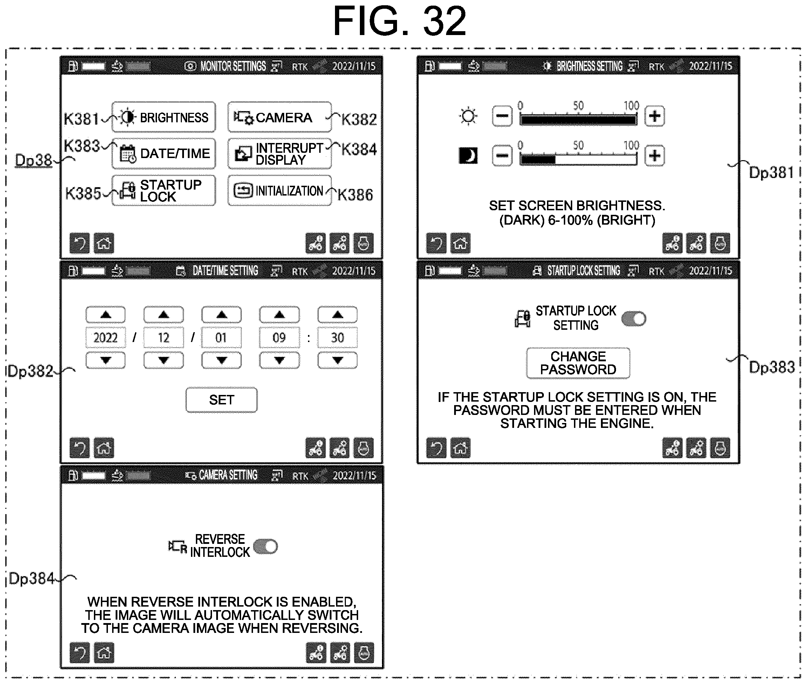

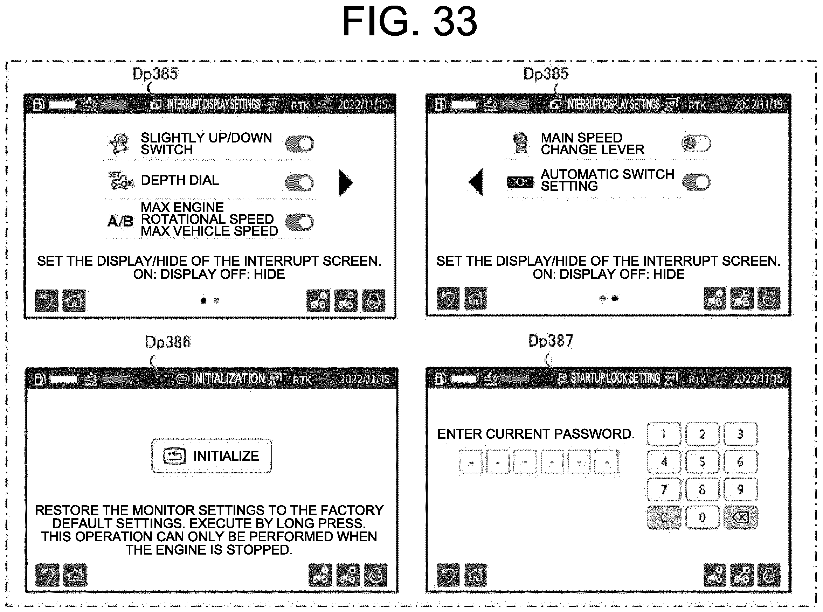

FIGs. 32 and 33 illustrate an example of a monitor settings screen Dp38 that can be transitioned from the home screen Dp1 and display screens that can be further transitioned from the monitor settings screen Dp38. The monitor settings screen Dp38 is a display screen for performing settings related to the operation display unit 73 of the operation terminal 17, and is displayed when the home icon K108 is operated on the home screen Dp1. A plurality of setting icons K381 to K386 are displayed on the monitor settings screen Dp38.

A brightness setting screen Dp381 is a display screen for setting the brightness of the operation display unit 73, and is displayed when the setting icon K381 associated with the brightness setting is operated on the monitor settings screen Dp38. In the brightness setting screen Dp381, for example, the brightness in each case of ON and OFF of the headlight of the work machine 10 is divided into two bar graphs and displayed. A date setting screen Dp382 is a display screen for setting the date (and time) to be displayed on the operation display unit 73, and is displayed when the setting icon K383 associated with the date setting is operated on the monitor settings screen Dp38.

A startup lock setting screen Dp383 is a display screen for setting the lock (password, etc.) at the time of startup of the operation display unit 73, and is displayed when the setting icon K385 associated with the startup lock setting is operated on the monitor settings screen Dp38. A camera setting screen Dp384 is a display screen for performing settings related to a camera image to be displayed on the operation display unit 73, and is displayed when the setting icon K382 associated with the camera setting is operated on the monitor settings screen Dp38.

An interrupt display settings screen Dp385 is a display screen for performing settings related to an interrupt display on the operation display unit 73, and is displayed when the setting icon K384 associated with the interrupt display settings is operated on the monitor settings screen Dp38. In the present embodiment, as illustrated in FIG. 33, the interrupt display settings screen Dp385 includes a number of items that cannot be displayed on one screen, such as a depth dial and a maximum vehicle speed. In this case, when the interrupt display settings screen Dp385 is swiped in the left-right direction or the left and right cursors are pressed, the displayed items are alternately switched as illustrated in the uppermost part of FIG. 33.

An initialization screen Dp386 is a display screen for initializing the setting values relating to display setting, and is displayed when the setting icon K386 associated with the initialization setting is operated on the monitor settings screen Dp38. When initialization is performed on the initialization screen Dp386, if a startup lock is set, a password input screen Dp387 for requesting password input is displayed as illustrated in FIG. 33.

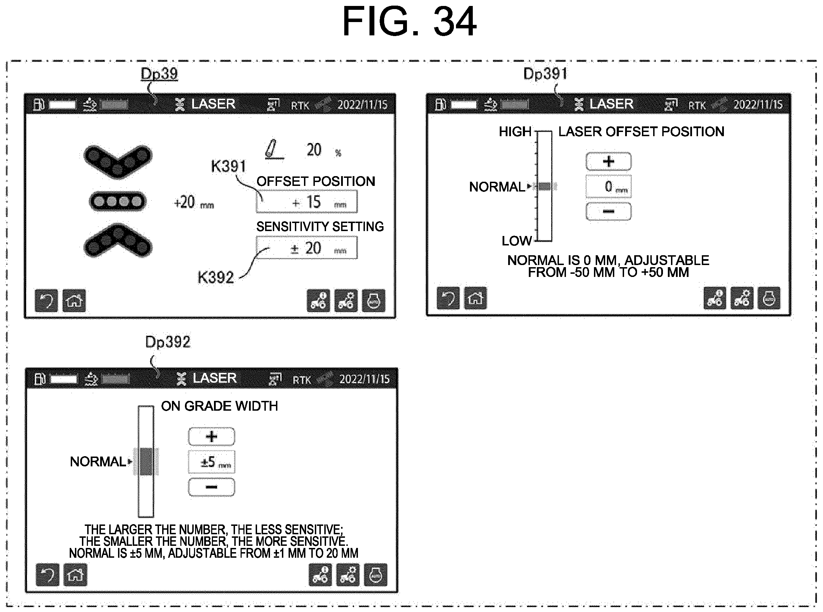

FIG. 34 illustrates an example of a laser setting screen Dp39 that can be transitioned from the home screen Dp1 and display screens that can be further transitioned from the laser setting screen Dp39. The laser setting screen Dp39 is a display screen for performing settings related to laser, and is displayed when the home icon K113 is operated on the home screen Dp1. A plurality of setting icons K391 and K392 are displayed on the laser setting screen Dp39.

An offset setting screen Dp391 is a display screen for setting a laser offset position, and is displayed when the setting icon K391 associated with the offset setting is operated on the laser setting screen Dp39. A sensitivity setting screen Dp392 is a display screen for setting laser sensitivity, and is displayed when the setting icon K392 associated with the sensitivity setting is operated on the laser setting screen Dp39.

Next, display screens that can be transitioned from the guidance screen Dp4 will be described.

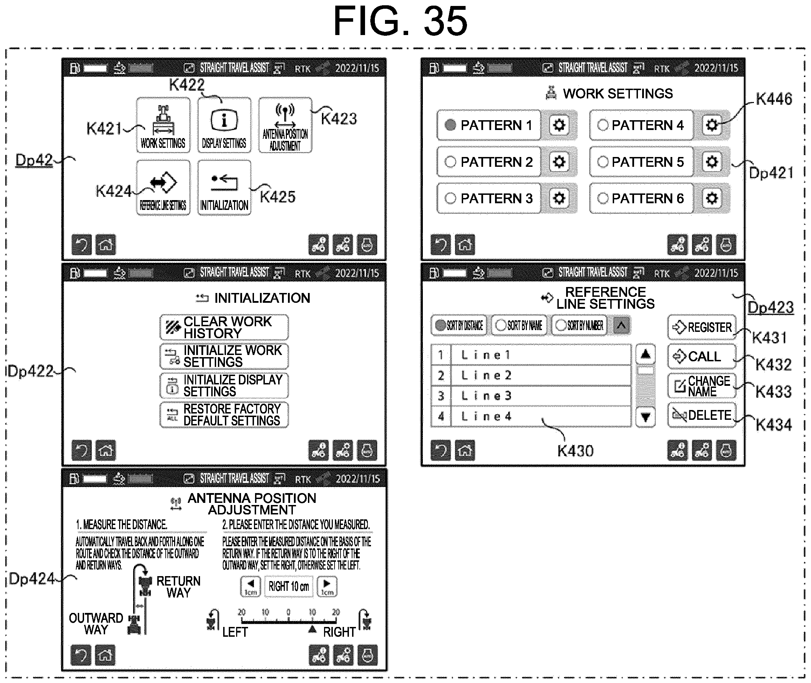

FIG. 35 illustrates an example of a straight travel assist setting screen Dp42 that can be transitioned from the guidance screen Dp4 and display screens that can be further transitioned from the straight travel assist setting screen Dp42. A straight traveling assist setting screen Dp42 is a display screen for performing various settings related to the straight travel assist, and is displayed when a setting icon K42 (see FIG. 23) is operated on the guidance screen Dp4. The setting icon K42 corresponds to the setting icon K2 (see FIG. 12) in the first embodiment. A plurality of setting icons K421 to K425 are displayed on the straight travel assist setting screen Dp42.

A work setting screen Dp421 is a display screen for performing the setting of the work implement 14 related to the straight travel assist, and is displayed when the setting icon K421 associated with the work setting is operated on the straight travel assist setting screen Dp42. An initialization screen Dp422 is a display screen for initializing the setting value relating to straight travel assist, and is displayed when the setting icon K425 associated with the initialization setting is operated on the straight travel assist setting screen Dp42.

A reference line setting screen Dp423 is a display screen for setting a reference line used for straight travel assist, and is displayed when the setting icon K424 associated with the reference line setting is operated on the straight travel assist setting screen Dp42. An antenna setting screen Dp424 is a display screen for performing settings related to antenna position adjustment, and is displayed when the setting icon K423 associated with the antenna position adjustment is operated on the straight travel assist setting screen Dp42.

The reference line setting screen Dp423 has a screen configuration in which the list display of the plurality of reference lines and the processing for the reference lines are integrated into one screen. In other words, the reference line setting screen Dp423 includes a reference line list K430 that displays a list of a plurality of reference lines, such as "Line1" and "Line2"..., and a plurality of instruction keys K431 to K434. In the reference line list K430, any one of a plurality of reference lines can be selected. In addition, in a state where any one of the reference lines is selected in the reference line list K430, it is possible to perform processing instructed by the instruction keys K431 to K434 on the reference line.

For example, when the operator presses the instruction key K432 of "CALL" in a state where "Line 2" is selected in the reference line list K430, "Line 2" can be called. Further, when the operator presses the instruction key K431 of "REGISTER" in a state where "Line 4" is selected in the reference line list K430, a new reference line can be registered by updating "Line 4". The instruction key K433 is a key for instructing to change the name of the reference line, and the instruction key K434 is a key for instructing to erase the reference line.

Further, the screen configuration in which the list display of the plurality of pieces of data and the processing for the data are integrated into one screen can be applied to other than the reference line. For example, in a case where data of a plurality of fields is registered, the list display of the plurality of fields and the processing for the fields may be integrated into one screen.

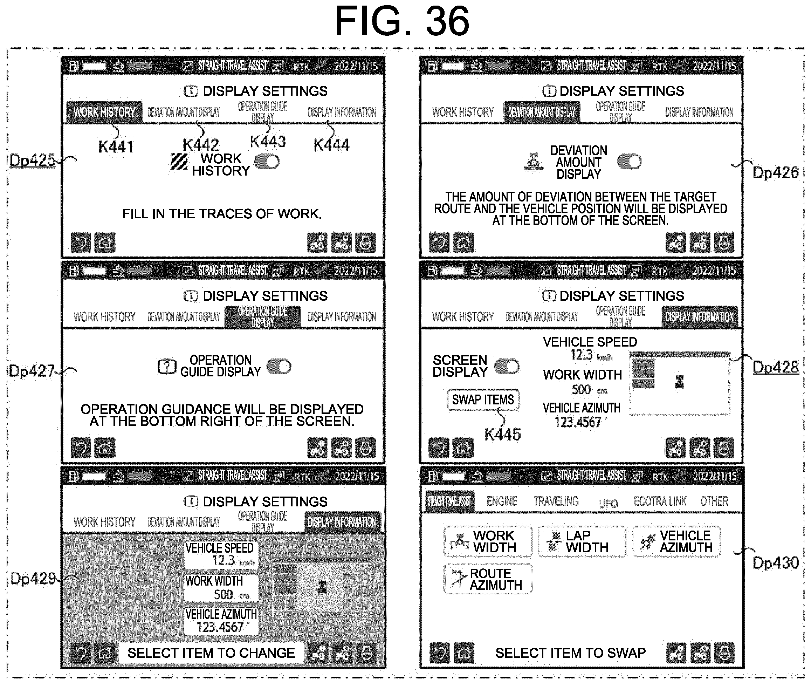

FIG. 36 illustrates an example of display screens that can be transitioned from the straight travel assist setting screen Dp42. Display settings screens Dp425 to Dp428 are display screens for performing the display setting related to the straight travel assist, and are displayed when the setting icon K422 associated with the display setting is operated on the straight travel assist setting screen Dp42.

Each of the display settings screens Dp425 to Dp428 includes four tabs K441 to K444, and the display setting screens Dp425 to Dp428 are switched by a selection operation of the tabs K441 to K444. That is, when the tab K441 of the "WORK HISTORY" is operated, the display settings screen Dp425 for setting whether to fill the work traces is displayed. When the tab K442 of "DEVIATION AMOUNT DISPLAY" is operated, the display settings screen Dp426 for setting whether to display the deviation amount between the target route and the position of the work machine 10 is displayed. When the tab K443 of "OPERATION GUIDE DISPLAY" is operated, the display settings screen Dp427 for setting whether to display the operation guidance on the screen is displayed. When the tab K444 of "DISPLAY INFORMATION" is operated, the display settings screen Dp428 for setting information to be displayed on the guidance screen Dp4 is displayed.

Further, when the item swap key K445 is operated on the display settings screen Dp428, the display screen transitions to a customization screen Dp429. When any item to be changed is selected on the customization screen Dp429, the screen transitions to a customization screen Dp430. On the customization screen Dp430, when an item to be swapped with the change target item selected in the customization screen Dp429 is selected, the item is swapped.

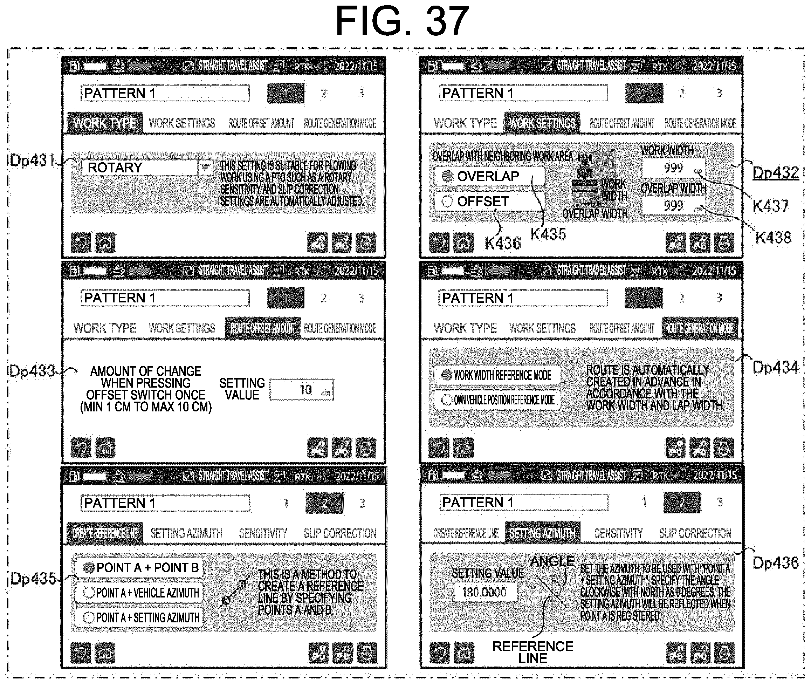

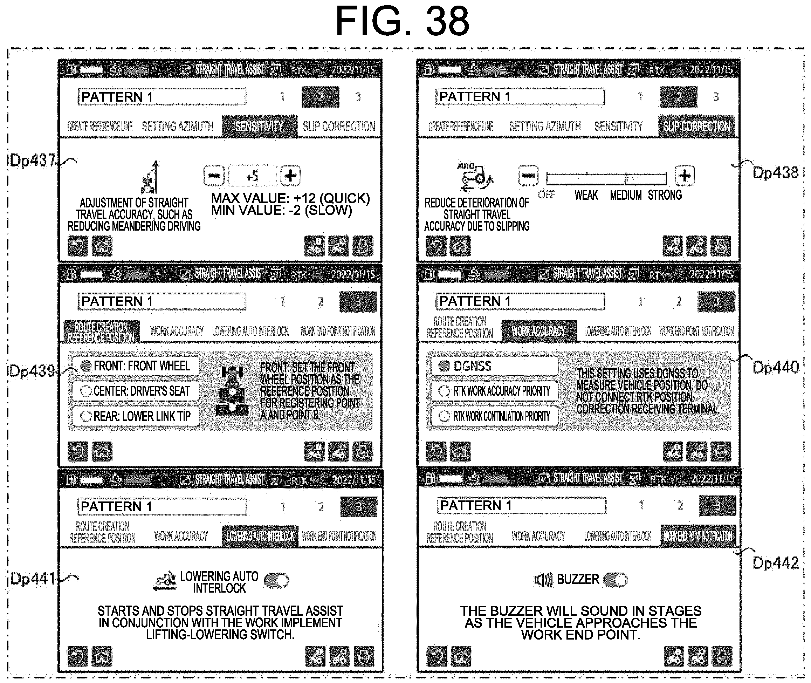

FIGs. 37 and 38 illustrate an example of display screens that can be transitioned from the work setting screen Dp421. Detail setting screens Dp431 to Dp442 are display screens for setting the details of the work to be performed by the work implement 14, and are displayed when a gear icon K446 (see FIG. 35) associated with each work pattern is operated on the work setting screen Dp421.

Each of the detail setting screens Dp431 to Dp442 includes a plurality of tabs (here, twelve tabs), and the detail setting screens Dp431 to Dp442 are switched by a tab selection operation. Further, not all of the plurality of tabs are displayed on the same screen, but all of the tabs are displayed by page switching.

The detail setting screen Dp432 has a screen configuration in which the setting of the width (work width) of the work implement 14 and the setting of the width (lap width) in which adjacent work areas overlap each other in the straight travel assist are integrated into one screen. In other words, the detail setting screen Dp432 includes an overlap button K435 and an offset button K436. In a state where the overlap button K435 is selected, on the detail setting screen Dp432, as illustrated in FIG. 37, the work width is input to a work width input field K437, and the lap width is input to a lap width input field K438, and thus the lap width is defined. That is, if the work width and the lap width are designated, the offset amount of the work implement 14 is also determined naturally, and thus the input of the offset amount is not required. Here, when the work width input field K437 or the lap width input field K438 is pressed, a numeric keypad for inputting a work width or a lap width is popped up and displayed.

Next, other transitionable display screens will be described.

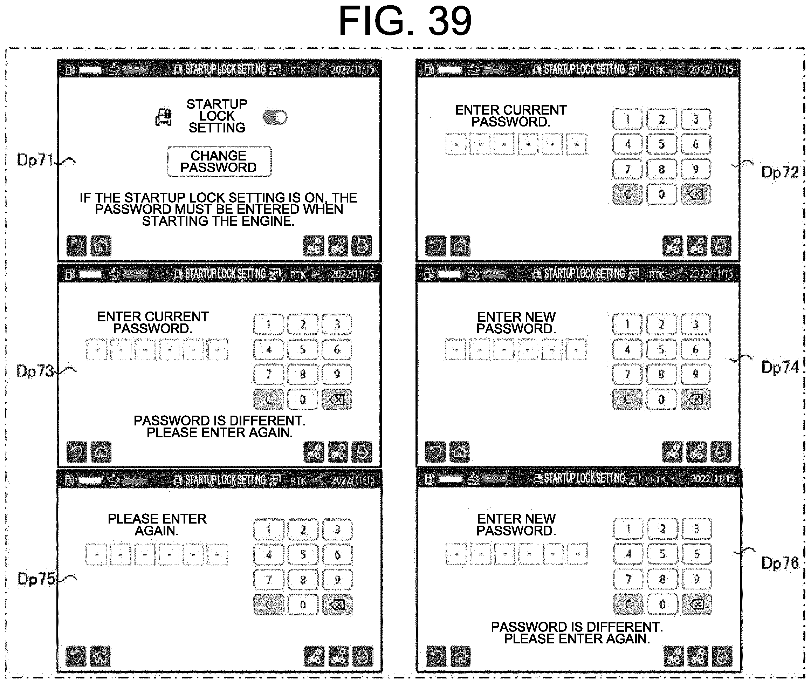

FIG. 39 illustrates an example of startup lock setting screens Dp71 to Dp76. On the startup lock setting screens Dp71 to Dp76, the password at the time of the startup lock release can be changed. Specifically, when an operation to start changing the password is accepted on the startup lock setting screen Dp71, the input of the current password is requested on the startup lock setting screen Dp72. If the input current password is incorrect, the screen changes to the startup lock setting screen Dp73, and the user is requested to input the current password again. If the input current password is correct, the screen transitions to the startup lock setting screen Dp74, and the user is requested to input a password to be newly set. Further, the screen transitions to the startup lock setting screen Dp75, and re-input of a password to be newly set is requested. At this time, if the re-input password is incorrect, the screen is shifted to the startup lock setting screen Dp76, and re-input of a password to be newly set is requested.

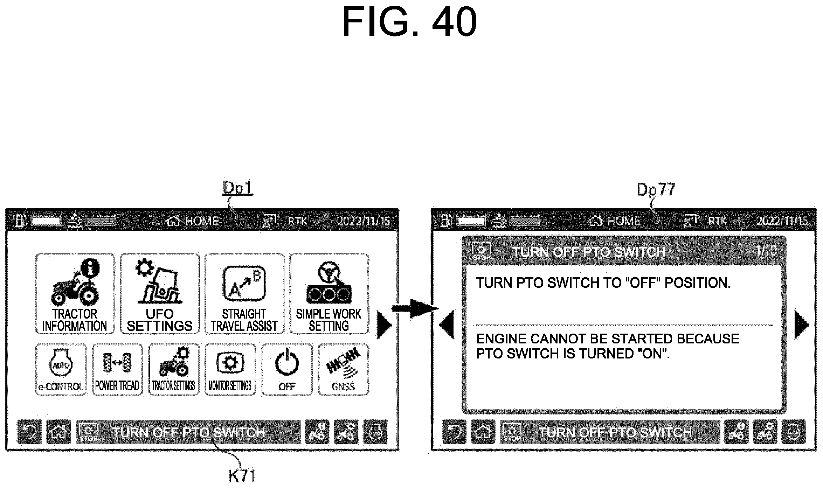

FIG. 40 illustrates an example of screen transition when a warning or an error occurs. In other words, for example, during the display of the home screen Dp1, when a warning or an error occurs in the work machine 10, first, an error message K71 is displayed in the lower portion of the home screen Dp1, as illustrated on the left side of FIG. 40. The error message K71 indicates only a message with a high priority, and when the error message K71 is pressed in this state, the screen transitions to a warning screen Dp77 such as that illustrated on the right side of FIG. 40. The warning screen Dp77 is a display screen on which all messages relating to warnings or errors currently occurring can be checked. The background color of the warning screen Dp77 is preferably changed in accordance with the content of the message.

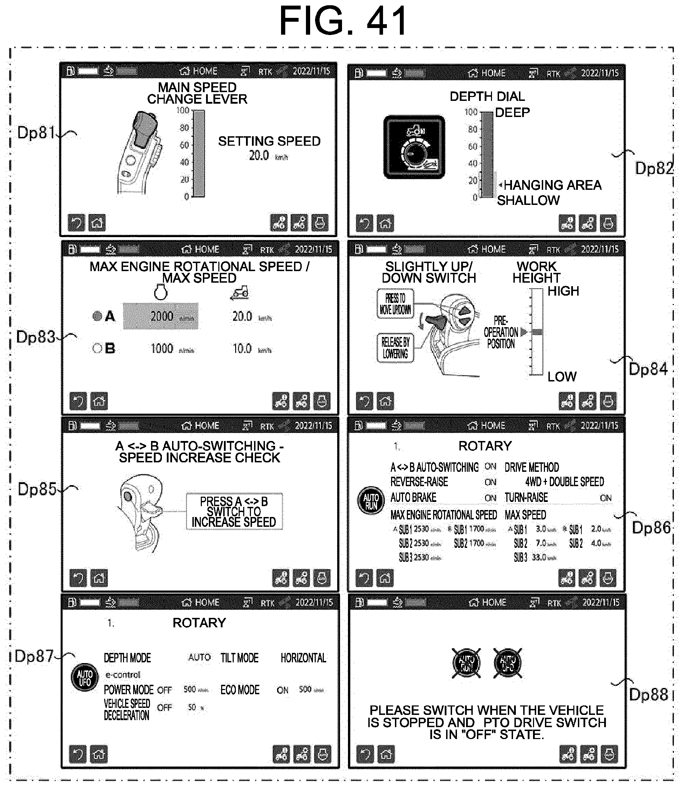

FIG. 41 illustrates an example of interrupt screens Dp81 to Dp88. The interrupt screen Dp81 is a display screen relating to the set speed of the main speed change lever 181. The interrupt screen Dp82 is a display screen relating to a depth dial. The interrupt screen Dp83 is a display screen relating to a maximum engine rpm/maximum vehicle speed. The interrupt screen Dp84 is a display screen relating to the height adjustment of the work implement 14. The interrupt screen Dp85 is a display screen relating to a speed increase check. The interrupt screen Dp86 is a display screen relating to an automatic travel switch. The interrupt screen Dp87 is a display screen relating to a UFO automatic switch. The interrupt screen Dp88 is a display screen relating to automatic switch prohibition.

As described above, for example, in the display screens such as the detail setting screens Dp211 to Dp213, by adopting the tab division, it is possible to suppress the amount of information to be displayed per screen and to enhance the visibility of individual information. Further, by appropriately displaying a pull-down list, a text box, a numeric keypad, or the like, it is possible to support input of options, text, numbers, or the like by the operator.

### [2.3] Acceleration Adjustment Function

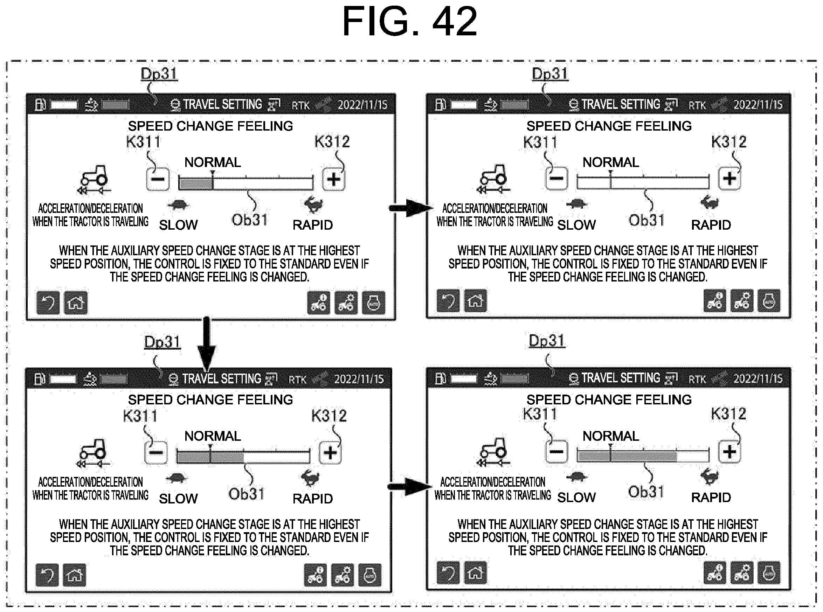

Next, the settings related to the speed change feeling (acceleration) of the travel device 13 performed on the travel setting screen Dp31 will be described with reference to FIGs. 42 to 45.

In other words, in the present embodiment, as described above, it is possible to perform the settings related to the speed change feeling (acceleration) of the travel device 13 on the travel setting screen Dp31. Specifically, when the operator performs an operation of designating the acceleration (speed change feeling) on the travel setting screen Dp31, the acceleration adjustment processing unit 112 performs the acceleration adjustment so as to obtain the designated acceleration.

FIG. 42 illustrates the details of the travel setting screen Dp31. The travel setting screen Dp31 includes a minus key K311, a plus key K312, and an acceleration object Ob31. The acceleration object Ob31 is a bar graph representing the currently set acceleration, and as an example, indicates that the absolute value of the acceleration increases as the graph extends (to the right). Further, a standard acceleration is indicated in the acceleration object Ob31 as a guide.

On the travel setting screen Dp31, when the operator presses the minus key K311, the acceleration indicated by the acceleration object Ob31 decreases, as illustrated in the upper right of FIG. 42. On the other hand, when the operator presses the plus key K312 on the travel setting screen Dp31, the acceleration indicated by the acceleration object Ob31 increases as illustrated in the lower left of FIG. 42, and when the operator further presses the plus key K312, the acceleration indicated by the object Ob31 further increases as illustrated in the lower right of FIG. 42. In the present embodiment, as an example, the acceleration can be adjusted in steps (for example, five steps). However, the present invention is not limited to this example, and the acceleration may be adjusted steplessly.

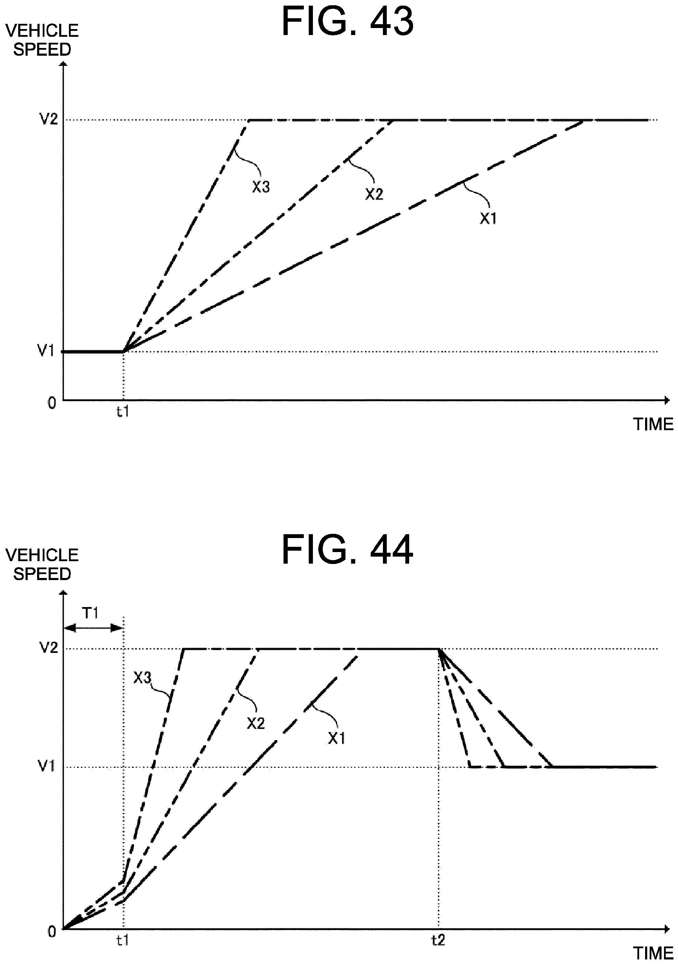

When the acceleration is adjusted on the travel setting screen Dp31, the acceleration adjustment processing unit 112 adjusts the change rate (inclination) of the speed with respect to the time from the current speed to the target speed in accordance with the acceleration. That is, as illustrated in FIG. 43, the change rate in the speed from a current speed V1 to a target speed V2 (> V1) is determined by the adjusted acceleration. FIG. 43 illustrates a speed change in a case where the target speed is switched from "V1" to "V2" at a time point t1, with the horizontal axis representing the time and the vertical axis representing the moving speed (vehicle speed) of the work machine 10. In other words, in the example of FIG. 43, (the absolute values of) an acceleration of "X1" is the smallest, and (the absolute values of) an acceleration of "X3" is the largest. Therefore, as the acceleration increases, the time required to reach the target speed V2 from the current speed V1 decreases, but the speed change shock increases, and as the acceleration decreases, the time required to reach the target speed V2 from the current speed V1 increases, but the speed change shock decreases.

In the operation control method according to the present embodiment, at least the acceleration (that is, "negative acceleration") until the moving speed of the work machine 10 reaches the target vehicle speed at the time of deceleration of the work machine 10 can be adjusted in accordance with the operation of the user (operator).

Therefore, according to the operation control method according to the present embodiment, for example, in a case where the forward movement and the backward movement of the work machine 10 are switched little by little, it is possible to suppress an impact from being applied to the work machine 10 at the time of deceleration due to sudden deceleration of the work machine 10. In other words, if (the absolute value of) the negative acceleration is adjusted to be small, it is possible to gently decelerate the work machine 10 at the time of deceleration, and it is easy to alleviate the impact applied to the work machine 10 at the time of deceleration. As a result, there is an advantage in that it is possible to avoid a situation where the accuracy of work performed by the work implement 14 decreases due to an impact applied to the work machine 10 during deceleration, or a shock during deceleration is transmitted to the operator.

Further, in the operation control method according to the present embodiment, the acceleration (that is, "positive acceleration") until the moving speed of the work machine 10 reaches the target vehicle speed at the time of acceleration of the work machine 10 can also be adjusted in accordance with the operation of the user (operator). Therefore, for example, in a case where the forward movement and the backward movement of the work machine 10 are switched little by little, or the like, it is also possible to suppress an impact from being applied to the work machine 10 at the time of acceleration due to sudden acceleration of the work machine 10. In other words, if (the absolute value of) the positive acceleration is adjusted to be small, it is possible to gently accelerate the work machine 10 at the time of acceleration, and it is also easy to alleviate the impact applied to the work machine 10 at the time of acceleration.

Here, the acceleration at the time of deceleration and the acceleration at the time of acceleration are collectively adjusted. That is, the accelerations to be adjusted on the travel setting screen Dp31 are not divided between the deceleration (negative acceleration) and the acceleration (positive acceleration), and the negative acceleration and the positive acceleration are collectively adjusted. As an example, when the acceleration is adjusted to the lowest "0" level on the travel setting screen Dp31, the acceleration is the lowest (in absolute values) at the "0" level both during deceleration and during acceleration. Accordingly, the speed change feeling at the time of deceleration and the speed change feeling at the time of acceleration can be matched with each other, the operator hardly feels a sense of discomfort, and the operability is improved.

Further, the operation control method according to the present embodiment further includes suppressing the acceleration in a start period T1, in which the work machine 10 accelerates from the stopped state, to be smaller than the acceleration outside the start period T1. That is, as illustrated in FIG. 44, in the start period T1 in which the work machine 10 starts from the stopped state where the vehicle speed is "0", the acceleration is suppressed to be smaller than that in the normal state. FIG. 44 illustrates a speed change in a case where the target speed is switched from "V2" to "V1" (< V2) at a time point t2, with the horizontal axis representing the time and the vertical axis representing the moving speed (vehicle speed) of the work machine 10. In the example of FIG. 44, the acceleration is suppressed to be smaller during the start period t1 of a certain time (for example, several hundred msec) from the stopped state to the time point t1.

Accordingly, particularly at the time of starting from a stopped state where an impact is likely to be applied to the work machine 10, the acceleration is suppressed to be small, and the effect of alleviating the impact applied to the work machine 10 is enhanced. Moreover, since there is only the start period T1, the delay time until the target speed is reached is also hardly noticeable to the operator, and is unlikely to lead to decrease in workability.

More specifically, the operation control method according to the present embodiment further includes setting the target speed in response to the operation of the first operation unit. When the target speed is changed in response to the operation of the first operation unit, the acceleration until the moving speed of the work machine 10 reaches the changed target speed is adjusted in accordance with the operation of the user. The "first operation unit" referred to herein includes at least one of the main speed change lever 181, the sub speed change lever 182, and the reverser lever 183. That is, even if the user (operator) operates the first operation unit such as the main speed change lever 181 without being particularly conscious of it, the adjusted acceleration is applied to the actual change in the moving speed of the work machine 10. Therefore, operability is improved.

Further, the operation control method according to the present embodiment further includes decreasing the target speed in response to the operation of the second operation unit different from the first operation unit. In addition, when the target speed is decreased in response to the operation of the second operation unit, the acceleration until the moving speed of the work machine 10 reaches the decreased target speed is adjusted in accordance with the operation of the user. The "second operation unit" referred to herein includes at least one of the brake pedal 185 and the clutch pedal 186. That is, the adjusted acceleration is applied not only when the user (operator) operates the first operation unit such as the main speed change lever 181 to decrease the target speed, but also when the user operates the second operation unit such as the brake pedal 185. Therefore, operability is improved.

Further, the work machine 10 is provided with an auxiliary transmission capable of switching the speed range of the work machine 10 across a plurality of speed ranges. Here, the acceleration can be adjusted in accordance with a user operation only when the vehicle is in a part of the plurality of speed ranges. In other words, the adjusted acceleration is applied only when the speed range of the auxiliary transmission is in a specific speed range, and the adjusted acceleration is not applied when the speed range of the auxiliary transmission is in a speed range other than this. As an example, it is assumed that the acceleration can be adjusted in accordance with a user operation only when the speed range of the auxiliary transmission is "C stage" or "first speed" used for work such as tillage work in response to the operation of the sub speed change lever 182. That is, when the speed range of the auxiliary transmission is the "second speed", a fixedly determined acceleration is applied, not a value adjusted by the operator. However, this does not apply to the start period T1.

According to this configuration, for example, the acceleration can be adjusted only in a certain situation such as a speed range for work. Therefore, the operability of the work machine 10 is improved.

Further, in the present embodiment, even when the work machine 10 is moving, the acceleration can be adjusted in accordance with the operation of the user. In other words, the travel setting screen Dp31 can be displayed even when the work machine 10 is moving (traveling), and the acceleration can be adjusted on the travel setting screen Dp31 while the work machine 10 is moving. Accordingly, it is not necessary to stop the work machine 10 in order to adjust the acceleration, and it is possible to suppress a reduction in work efficiency.

Here, the operation control method according to the present embodiment includes displaying the travel setting screen Dp31 for acceleration adjustment as described above. In addition, it is possible to adjust the acceleration in accordance with a user operation on the acceleration operation unit included in the travel setting screen Dp31. The "acceleration operation unit" referred to herein includes, for example, the minus key K311 and the plus key K312. That is, the user (operator) can adjust the acceleration on the display screen, and it becomes easy to adjust the parameter of the acceleration which cannot be visually recognized originally.

Further, the present embodiment further includes causing the work machine 10 to autonomously travel. During the autonomous traveling of the work machine 10, the adjustment of the acceleration is disabled. In other words, the acceleration adjusted by the operator is not applied at least during the autonomous traveling in which the control of the vehicle speed or the like is automatically performed, and the acceleration adjusted by the operator is applied only during the manual traveling or the semi-automatic traveling in which the operator performs the control of the vehicle speed or the like. Therefore, the acceleration adjusted by the operator is less likely to affect the work efficiency during autonomous traveling.

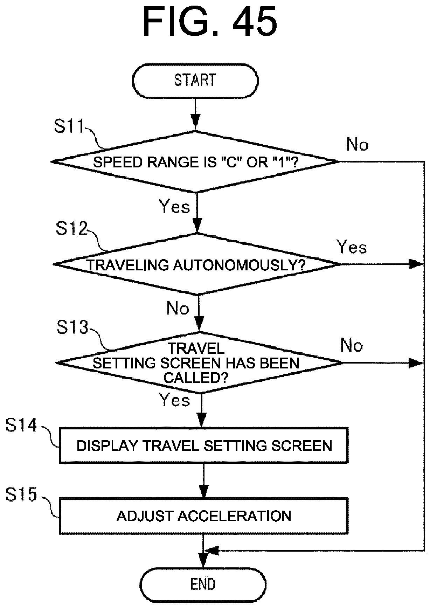

FIG. 45 is a flowchart illustrating an example of processing relating to the acceleration adjustment in the operation control method according to the present embodiment.

In other words, the acceleration adjustment processing unit 112 checks whether the speed range of the auxiliary transmission is "C stage" or "first speed" (S11). If the speed range of the auxiliary transmission is the "C stage" or the "first speed" (S11: Yes), the acceleration adjustment processing unit 112 checks whether the vehicle is traveling autonomously (S12). If the work machine 10 is not traveling autonomously (S12: No), the acceleration adjustment processing unit 112 determines whether the travel setting screen Dp31 has been called (S13). If the travel setting screen Dp31 is called (S13: Yes), the display processing unit 711 displays the travel setting screen Dp31 on the operation display unit 73 (S14). In addition, the acceleration adjustment processing unit 112 adjusts the positive and negative accelerations in accordance with the operation of the user (operator) on the travel setting screen Dp31 (S15).

The automatic travel system 100A repeats the processing of the above steps S11 to S15. However, the flowchart illustrated in FIG. 45 is merely an example, and the processing may be added or omitted as appropriate, or the order of processing may be changed as appropriate.

### [2.4] Guidance Screen Dp4

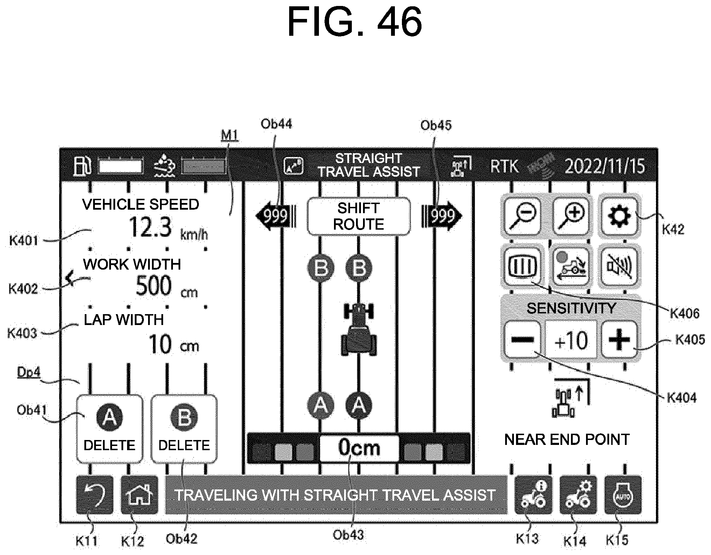

Next, the guidance screen Dp4 relating to the straight travel assist will be described with reference to FIGs. 46 to 49.

On the guidance screen Dp4, as illustrated in FIG. 46, a map M1 including a target route (a reference line and a plurality of straight lines parallel to the reference line) and objects such as various icons superimposed on the map M1 are displayed. The map M1 is displayed in such a manner that the current position of the work machine 10 is at the center in the lateral direction (left-right direction) of the guidance screen Dp4.

The objects superimposed and displayed on the map M1 include a first operation object Ob41, a second operation object Ob42, an offset guide object Ob43, and hidden route objects Ob44 and Ob45. Further, the objects superimposed and displayed on the map M1 include information icons K401 to K403, a minus key K404, a plus key K405, a viewpoint switching icon K406, and the like.

In the information icons K401 to K403, for example, information related to work by the work machine 10, such as (current) vehicle speed, work width, and lap width, is displayed. The minus key K404 and the plus key K405 are used for the operation for adjusting the sensitivity of the straight travel assist, that is, how strictly the automatic steering is performed along the target route. That is, the user (operator) can lower the sensitivity by operating the minus key K404 or raise the sensitivity by operating the plus key K405 on the guidance screen Dp4. The viewpoint switching icon K406 is an icon for switching between displaying the map M1 with reference to the direction of the reference line L1 and displaying the map M1 with reference to the direction of the work machine 10. That is, each time the user (operator) operates the viewpoint switching icon K406, the viewpoint of the map M1 is switched.

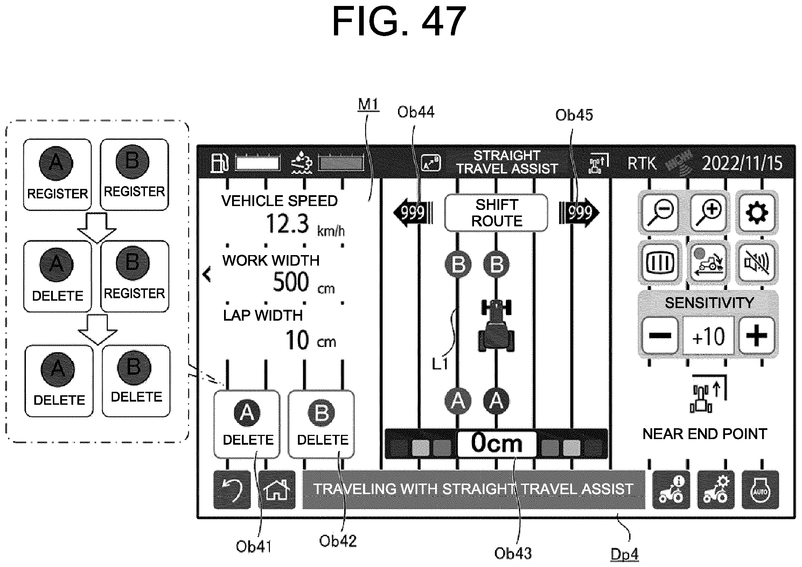

As illustrated in FIG. 47, the first operation object Ob41 and the second operation object Ob42 are objects operated by the user (operator) when the reference line L1 is generated or edited. Specifically, the first operation object Ob41 is used for registration and deletion of the point A (first reference point), and the second operation object Ob42 is used for registration and deletion of the point B (second reference point).

Specifically, the points A and B registered when the reference line L1 is generated are displayed in gray on the map M1, and the points A and B on the target route (straight route) during traveling are displayed in color. Here, it is preferable that the point A and the point B displayed in color have different colors. That is, by registering the point A and the point B displayed in gray, the reference line L1 is generated so as to connect the point A and the point B.

Here, with the first operation object Ob41, an operation of deleting the registered (that is, gray-displayed) point A can be performed, and an operation of registering the unregistered point A can be performed. Similarly, with the second operation object Ob42, an operation of deleting the registered (that is, gray-displayed) point B can be performed, and an operation of registering the unregistered point B can be performed. In short, the functions assigned to the first operation object Ob41 and the second operation object Ob42 are switched in accordance with the generation status of the target route.

Further, for example, it is determined that the point B is registered at a position away from the point A by a predetermined distance or more, and thus even if the point B is not registered, the point B cannot be registered in a case where the work machine 10 is at a position less than the predetermined distance from the registered point A. In short, the functions assigned to the first operation object Ob41 and the second operation object Ob42 are also switched in accordance with the operation status of the work machine 10.

In this way, the first display screen (the guidance screen Dp4) includes the operation objects (the first operation object Ob41 and the second operation object Ob42) that accept a user operation relating to the generation of the target route R for the automatic steering. In addition, the functions assigned to the operation objects are switched in accordance with at least one of the generation status of the target route R and the operation status of the work machine 10.

Thus, a single first operation object Ob41 (or second operation object Ob42) can have a plurality of functions. Therefore, compared to a case where an individual operation object is prepared for each function, the operation object can be formed larger in the display screen (guidance screen Dp4), and operability is improved.

In the present embodiment, in particular, a plurality of functions which are assignable to the operation object (the first operation object Ob41 and the second operation object Ob42) include at least a function of registration operation of a reference point (point A, point B) serving as a reference of the target route R and a function of deletion operation of the reference point.

Therefore, when it is necessary to generate the reference line L1 as in the case of the straight travel assist, the target route R can be generated relatively easily by using the operation objects (the first operation object Ob41 and the second operation object Ob42).

Further, in the present embodiment, as illustrated in FIG. 47, the display modes of the operation objects (the first operation object Ob41 and the second operation object Ob42) change in accordance with the functions assigned to the operation objects. As an example, as illustrated in a balloon in FIG. 47, in a situation where both the point A and the point B are not registered and can be registered, the text notations of the first operation object Ob41 and the second operation object Ob42 are "REGISTER". On the other hand, in a situation where the point A is registered and can be deleted, and the point B is unregistered and can be registered, the text notation of the first operation object Ob41 is "DELETE", and the text notation of the second operation object Ob42 is "REGISTER". Further, in a situation where both the point A and the point B are registered and can be deleted, the text notations of the first operation object Ob41 and the second operation object Ob42 are "DELETE".

In addition to this, for example, even if the point B is not registered, when the operation object does not accept an operation, such as when the work machine 10 is at a position less than a predetermined distance from the registered point A, the operation object is displayed in a gray-out (inactive) manner.

In this way, the display mode of the operation object is changed according to the function, and thus operability for the user (operator) is significantly improved.

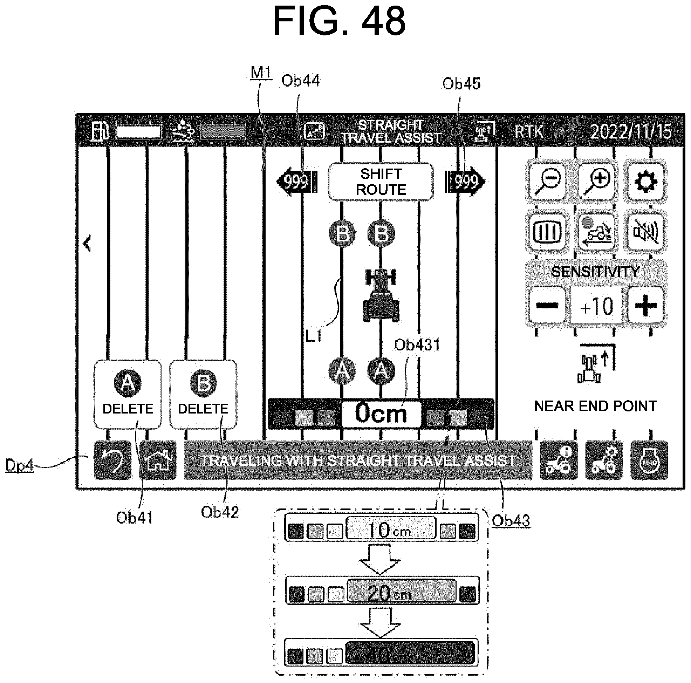

Further, as illustrated in FIG. 48, the offset guide object Ob43 is an object representing how much the work machine 10 is deviated (offset) from the target route. Specifically, as illustrated in the balloon of FIG. 48, the offset guide object Ob43 has a display mode in which an offset amount display frame Ob431 at the center thereof extends in the offset direction of the work machine 10 from the target route.

For example, if the work machine 10 is deviated to the right side from the target route, the offset amount display frame Ob431 is extended to the right side, whereby the operator can easily visually grasp the deviation from the target route. In particular, the offset amount display frame Ob431 extends in accordance with the offset amount, and the display color of the offset amount display frame Ob431 changes depending on how far the offset amount display frame Ob431 extends. Therefore, the operator can visually recognize the deviation from the target route more easily.

Further, in the present embodiment, the information icons K401 to K403 can be hidden as illustrated in FIG. 48 by an operation on the guidance screen Dp4. Thus, the display area of the map M1 is enlarged, and the visibility of the map M1 is improved. Moreover, since the display/non-display of the information icons K401 to K403 can be switched by an operation on the guidance screen Dp4, the number of operations of the user can be suppressed to be small, and the switching can be performed even during the work.

Here, the information displayed on each of the information icons K401 to K403 can be changed (edited) by long-pressing the information icons K401 to K403. That is, for example, in the example of FIG. 46, when "vehicle speed" is displayed in the information icon K401, the number of revolutions of the engine 131 or the like can be displayed in the information icon K401.

In addition, by relatively increasing the number of target routes (straight routes) drawn in the lateral direction on the map M1, the operator can easily grasp the work range of the work machine 10. Further, the hidden route objects Ob44 and Ob45 display the number of target routes (straight routes) hidden (not displayed) on the left side or the right side of the guidance screen Dp4. This makes it easier for the operator to grasp the work range of the work machine 10.

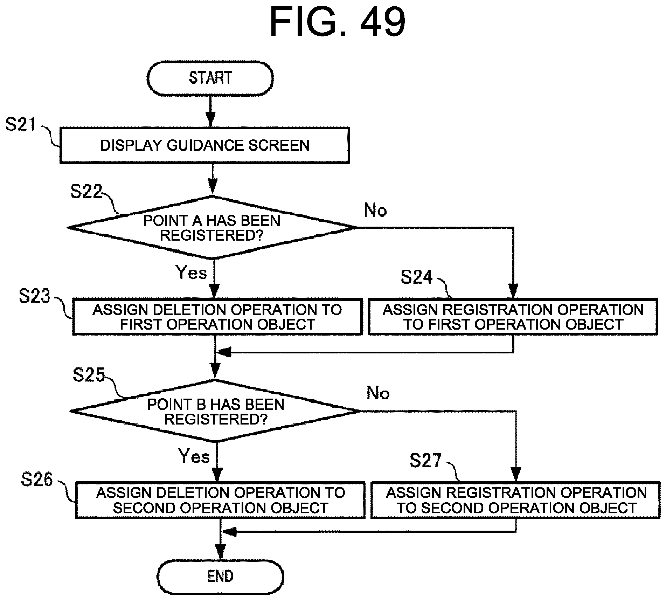

FIG. 49 is a flowchart illustrating an example of processing relating to the guidance screen Dp4 in the operation control method according to the present embodiment.

In other words, first, the display processing unit 711 displays the guidance screen Dp4 on the operation display unit 73 (S21). The display processing unit 711 determines whether the point A (first reference point) has been registered (S22). If the point A has been registered (S22: Yes), the display processing unit 711 assigns the deletion operation of the point A to the first operation object Ob41 (S23). If the point A is not registered (S22: No), the display processing unit 711 assigns the registration operation of the point A to the first operation object Ob41 (S24).

In addition, the display processing unit 711 determines whether the point B (second reference point) has been registered (S25). If the point B has been registered (S25: Yes), the display processing unit 711 assigns the deletion operation of the point B to the second operation object Ob42 (S26). If the point B is not registered (S25: No), the display processing unit 711 assigns the registration operation of the point B to the second operation object Ob42 (S27).

The automatic travel system 100A repeats the processing of the above steps S21 to S27. However, the flowchart illustrated in FIG. 49 is merely an example, and the processing may be added or omitted as appropriate, or the order of processing may be changed as appropriate.

### [2.5] UFO Operation Screen Dp5

Next, the UFO operation screen Dp5 related to the horizontal control of the work implement 14 will be described with reference to FIGs. 50 to 53.

The UFO operation screen Dp5 (the UFO operation screen Dp51 relating to the horizontal control) is an example of the "horizontal control operation screen". The UFO operation screen Dp51 includes a control operation unit that accepts an operation of the user (operator). As illustrated in FIG. 50, the control operation unit includes first operation elements K531 and K532, a second operation element K54, a third operation element K55, and fourth operation elements K561 to K564. Further, the UFO operation screen Dp51 includes a tilt display object Ob5, fifth operation elements K571 to K574 of the control operation unit, and the like. The fifth operation elements K571 to K574 are used for an operation for 3P switching (attachment type of the work implement 14).

The fourth operation elements K561 to K564 are assigned with a function of switching the control mode in the horizontal control. That is, any one of the fourth operation elements K561 to K564 is alternatively selected, and the control mode corresponding to the selected fourth operation elements K561 to K564 is applied. The control modes include an "OFF mode" associated with the fourth operation element K561, a "horizontal mode" associated with the fourth operation element K562, a "slope mode" associated with the fourth operation element K563, and a "maintain mode" associated with the fourth operation element K564.

The "OFF mode" is a mode in which the horizontal control does not function and the work implement 14 is not fixed to the machine body 101 so as not to be tilted. The "horizontal mode" is a mode in which the work implement 14 is controlled to be kept horizontal even when the machine body 101 is tilted. The "slope mode" is a mode in which the tilt of the work implement 14 is controlled so as to be parallel to the machine body 101 in a tilted state. The "maintain mode" is a mode for traction system work, and is a mode in which control is performed in such a manner that the length of the cylinder for controlling the tilt of the work implement 14 is held constant.

The fourth operation elements K561 to K564 are included in the UFO operation screen Dp51 (horizontal control operation screen) as the control operation unit, and thus the user (operator) can easily perform the operation of switching the control mode in the horizontal control.

The tilt display object Ob5 is a graph representing the currently set tilt of the work implement 14 (in the roll direction of the machine body 101). As an example, when the indicator Ob51 deviates from the center in any of the lateral directions (left and right directions), it indicates that the work implement 14 is tilted with respect to the machine body 101. In addition, as the distance from the center increases (as the distance to the end of the graph decreases), the tilt angle increases. Further, the tilt display object Ob5 is indicated with the center position (that is, the position of the tilt "0") as a guide.

The first operation elements K531 and K532 are assigned with a function of adjusting the tilt angle of the work implement 14 with respect to the machine body 101. That is, when the operator presses the first operation element K531 formed of the left cursor, the indicator Ob51 of the tilt display object Ob5 moves leftward, and the work implement 14 is tilted downward to the left with respect to the machine body 101. Conversely, when the operator presses the first operation element K532 formed of the right cursor, the indicator Ob51 of the tilt display object Ob5 moves rightward, and the work implement 14 is tilted downward to the right with respect to the machine body 101, as illustrated in FIG. 51. In the present embodiment, as an example, the tilt angle can be adjusted in steps each time the first operation elements K531 and K532 are pressed. However, the present invention is not limited to this example, and the tilt angle of the work implement 14 may be adjusted steplessly.

The first operation elements K531 and K532 are included in the UFO operation screen Dp51 (horizontal control operation screen) as the control operation unit, and thus the user (operator) can manually adjust the tilt of the work implement 14 with respect to the machine body 101.

The second operation element K54 is assigned with a function of changing the amount of change in the tilt angle for the operations of the first operation elements K531 and K532. Specifically, the second operation element K54 accepts an operation of switching ON/OFF of the fine adjustment mode. That is, when the operator presses the second operation element K54, the amount of change in the tilt angle (the amount of movement of the indicator Ob51) during the operation of the first operation elements K531 and K532 changes. When the fine adjustment mode is ON, the step size (the amount of change) of the tilt angle with respect to one pressing of the first operation elements K531 and K532 is smaller than that when the fine adjustment mode is OFF.

The second operation elements K54 is included in the UFO operation screen Dp51 (horizontal control operation screen) as the control operation unit, and thus the user (operator) can easily perform manual fine adjustment of the tilt of the work implement 14 with respect to the machine body 101.

The third operation element K55 is assigned with a function of resetting the tilt angle of the work implement 14 adjusted by the first operation elements K531 and K532. Specifically, the third operation element K55 is a return-to-center button, the tilt angle of the work implement 14 with respect to the machine body 101 is set to "0", and the indicator Ob51 of the tilt display object Ob5 is moved to the center position (that is, the position of the tilt "0").

The third operation element K55 is included in the UFO operation screen Dp51 (horizontal control operation screen) as the control operation unit, and thus the user (operator) can reset the tilt of the work implement 14 with respect to the machine body 101 only by operating the third operation element K55 without operating the first operation elements K531 and K532 many times.

Moreover, since the tilt display object Ob5 included in the UFO operation screen Dp51 (horizontal control operation screen) is changed in conjunction with the change in the tilt angle of the work implement 14 with respect to the machine body 101, the tilt angle of the work implement 14 can be easily grasped by the tilt display object Ob5. In other words, when the indicator Ob51 of the tilt display object Ob5 is moved by the operation of the first operation elements K531 and K532, the inclination angle of the work implement 14 with respect to the machine body 101 is changed so as to follow the movement.

As described above, the operation control method according to the present embodiment includes displaying the horizontal control operation screen (UFO operation screen Dp51) relating to the horizontal control that controls the tilt of the work implement 14 with respect to the machine body 101, for the work machine 10 including the machine body 101 and the work implement 14 attached to the machine body 101. Further, the operation control method includes performing setting related to the horizontal control in accordance with a user operation on the control operation unit (the first operation elements K531 and K532, and the like) included in the horizontal control operation screen.

Regarding the horizontal control, for example, when the user (operator) needs to adjust the tilt angle or the like of the work implement 14 with respect to the machine body 101, the work efficiency may be reduced depending on the skill level of the user. However, according to the configuration of the present embodiment, since such adjustment can be performed on the UFO operation screen Dp51, the difficulty level is reduced. Therefore, there is an advantage that it is possible to improve the work efficiency of the work machine 10 including the machine body 101 and the work implement 14 attached to the machine body 101.

In the present embodiment, the tilt display object Ob5 is not in conjunction with a change in the tilt angle associated with the switching of the control mode of the horizontal control. That is, as a premise, the tilt display object Ob5 is always included in the UFO operation screen Dp51 regardless of the control mode of the horizontal control. For example, even in the "OFF mode", the tilt display object Ob5 remains displayed, the indicator Ob51 of the tilt display object Ob5 is moved by the operation of the first operation elements K531 and K532, and the tilt angle of the work implement 14 is also changed.

However, since the tilt angle of the work implement 14 may change along with the switching of the control mode, the interlocking of the tilt display object Ob5 is temporarily released during a period in which the tilt angle of the work implement 14 changes along with the switching of the control mode. Thus, for example, when the control mode is switched from the "slope mode" to the "horizontal mode", even if the tilt angle of the work implement 14 changes, the indicator Ob51 of the tilt display object Ob5 does not move in accordance with the change in the tilt angle at this time. Therefore, for example, if the indicator Ob51 of the tilt display object Ob5 is at the center position in the control mode before the switching, the indicator Ob51 of the tilt display object Ob5 is at the center position also in the control mode after the switching.

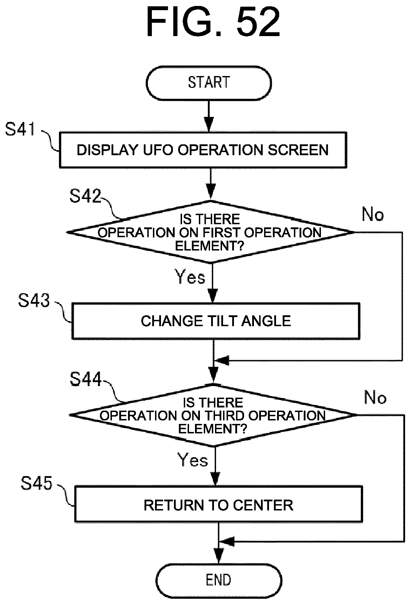

FIG. 52 is a flowchart illustrating an example of processing relating to the UFO operation screen Dp51 in the operation control method according to the present embodiment.

In other words, first, the display processing unit 711 displays the UFO operation screen Dp51 on the operation display unit 73 (S41). The setting processing unit 714 determines whether there is a user operation on the first operation elements K531 and K532 included in the UFO operation screen Dp51 (S42), and if the first operation elements K531 and K532 are operated (S42: Yes), the processing proceeds to step S43. If the first operation elements K531 and K532 are not operated (S42: No), step S43 is skipped, and the processing proceeds to step S44.

In step S43, the setting processing unit 714 changes the tilt angle of the work implement 14 in response to the first operation elements K531 and K532 in consideration of the operation state (ON/OFF of the fine adjustment mode) of the second operation element K54. At this time, the indicator Ob51 of the tilt display object Ob5 also moves.

In addition, the setting processing unit 714 determines whether there is a user operation on the third operation element K55 included in the UFO operation screen Dp51 (S44), and if the third operation element K55 is operated (S44: Yes), the indicator Ob51 of the tilt display object Ob5 is returned to the center (S45). If the third operation element K55 is not operated (S44: No), step S45 is skipped, and the series of processing are ended.

The automatic travel system 100A repeats the processing of the above steps S41 to S45. However, the flowchart illustrated in FIG. 52 is merely an example, and the processing may be added or omitted as appropriate, or the order of processing may be changed as appropriate.

### [3] Variations

Hereinafter, variations of the second embodiment will be described. The variations described below can be applied in combination as appropriate.

The automatic travel system 100A according to the present disclosure includes a computer system. The computer system includes, as main components, at least one processor and at least one memory as hardware. When the processor executes a program (operation control program) recorded in the memory of the computer system, functions as the automatic travel system 100A in the present disclosure are implemented. The program may be recorded in the memory of the computer system in advance, may be provided through an electric communication line, or may be recorded on a non-transitory recording medium, such as a memory card, an optical disk, a hard disk drive, or the like, that is readable by the computer system. Further, some or all of the functional units included in the automatic travel system 100A may be configured as an electronic circuit.

Further, a configuration in which at least some functions of the automatic travel system 100A are integrated in one housing is not an essential configuration of the automatic travel system 100A, and the components of the automatic travel system 100A may be distributed and provided in a plurality of devices. Conversely, in the second embodiment, functions that are distributed in multiple devices may be integrated in a single housing. Furthermore, at least part of the functions of the automatic travel system 100A may be implemented by a cloud (cloud computing) or the like.

Further, the operation terminal 17 is not limited to a general-purpose terminal such as a tablet terminal, a smartphone, or a laptop computer, and may be configured with a dedicated terminal. Furthermore, a plurality of operation terminals 17 may be associated with one work machine 10. In this case, one work machine 10 can be controlled by the plurality of operation terminals 17. Conversely, a plurality of work machines 10 may be associated with one operation terminal 17. In this case, the plurality of work machines 10 can be controlled by one operation terminal 17.

Further, it is not essential that the acceleration at the time of deceleration and the acceleration at the time of acceleration are collectively adjusted, and the acceleration at the time of deceleration and the acceleration at the time of acceleration may be individually adjusted. Furthermore, it is not essential that the acceleration at the time of acceleration (positive acceleration) can be adjusted.

The configuration of the second embodiment can be employed in combination with various configurations (including variations) described in the first embodiment as appropriate.

### [Supplementary Notes of Invention]

Hereinafter, a summary of the present disclosure extracted from the above-described embodiments will be described below as supplementary notes. Note that each configuration and processing function explained in the supplementary notes below may be selected, omitted, and combined as appropriate.

### <Supplementary Note 1>

An operation control method executing:
causing a work machine to execute a first action when an operation unit that can operate the work machine is operated by a user in a state where a first display screen relating to automatic steering of the work machine is displayed on an operation terminal; and
not causing the work machine to execute the first action when the operation unit is operated by a user in a state where a second display screen different from the first display screen is displayed on the operation terminal.

### <Supplementary Note 2>

The operation control method according to Supplementary Note 1 wherein the operation unit is an operation unit that accepts an operation to start automatic steering of the work machine from a user, causes the work machine to execute automatic steering when the operation unit is operated by a user in a state where the first display screen is displayed on the operation terminal, and does not cause the work machine to execute automatic steering when the operation unit is operated by a user in a state where the second display screen is displayed on the operation terminal.

### <Supplementary Note 3>

The operation control method according to Supplementary Note 2 wherein the work machine is caused to execute automatic steering if a predetermined condition for starting automatic steering is satisfied when the operation unit is operated by a user in a state where the first display screen is displayed on the operation terminal, and the work machine is not caused to execute automatic steering even if the predetermined condition is satisfied when the operation unit is operated by a user in a state where the second display screen is displayed on the operation terminal.

### <Supplementary Note 4>

The operation control method according to any one of Supplementary Notes 1 to 3, wherein the operation unit is an operation unit that accepts an operation to change a posture of a work implement coupled to the work machine from a user, changes the work implement to have a working posture and causes the work machine to execute automatic steering when the operation unit is operated by a user in a state where the first display screen is displayed on the operation terminal, and changes the work implement to have the working posture and does not cause the work machine to execute automatic steering when the operation unit is operated by a user in a state where the second display screen is displayed on the operation terminal.

### <Supplementary Note 5>

The operation control method according to Supplementary Note 4, further executing accepting, from a user, an operation to set whether to start automatic steering of the work machine in interlock with a change in a posture of the work implement.

### <Supplementary Note 6>

The operation control method according to any one of Supplementary Notes 1 to 5, wherein the operation unit is an operation unit that accepts, from a user, an operation to change a position or direction of a target route of the work machine, changes the position or direction of the target route of the work machine when the operation unit is operated by a user while the work machine is performing automatic steering, and executes an action according to display content of the operation terminal when the operation unit is operated by a user while the work machine is not executing automatic steering.

### <Supplementary Note 7>

The operation control method according to Supplementary Note 6, wherein setting content of the work machine is changed when the operation unit is operated by a user in a state where the work machine is not executing automatic steering and a setting screen relating to the work machine is displayed on the operation terminal.

### <Supplementary Note 8>

An operation control method executing:
displaying information regarding automatic steering on a first display screen relating to automatic steering of the work machine when an operation unit that can operate the work machine is operated by a user in a state where the first display screen is displayed on an operation terminal; and
transitioning a second display screen different from the first display screen, to a display screen relating to automatic steering of the work machine when the operation unit is operated by a user in a state where the second display screen is displayed on the operation terminal.

### <Supplementary Note 9>

The operation control method according to Supplementary Note 8, wherein the operation unit is an operation unit that accepts an operation to start automatic steering of the work machine from a user, the first display screen is an acceptance screen that accepts an instruction to start automatic steering of the work machine from a user, the first display screen is caused to display information indicating that automatic steering has started when the operation unit is operated by a user in a state where the first display screen is displayed on the operation terminal, and the second display screen is transitioned to the first display screen when the operation unit is operated by a user in a state where the second display screen is displayed on the operation terminal.

### <Supplementary Note 10>

The operation control method according to Supplementary Note 9, wherein automatic steering of the work machine is started and the first display screen is caused to display information indicating that automatic steering has started when an operation to start automatic steering on the operation unit is accepted from a user in a state where the first display screen is displayed on the operation terminal, and the second display screen is transitioned to the first display screen without starting automatic steering of the work machine when an operation to start automatic steering on the operation unit is accepted from a user in a state where the second display screen is displayed on the operation terminal.

### <Supplementary Note 11>

The operation control method according to Supplementary Note 9 or 10, wherein the second display screen is a setting screen relating to the work machine, and the setting screen is transitioned to the acceptance screen when the operation unit is operated by a user in a state where the second display screen is displayed on the operation terminal.

### <Supplementary Note 12>

The operation control method according to Supplementary Note 8, wherein automatic steering of the work machine is stopped and the second display screen is transitioned to the first display screen when an operation to stop automatic steering on the operation unit is accepted from a user in a state where the second display screen is displayed on the operation terminal during the automatic steering of the work machine.

### <Supplementary Note 13>

The operation control method according to any one of Supplementary Notes 1 to 12, wherein the first display screen includes an operation object that accepts a user operation relating to generation of a target route for the automatic steering, and a function assigned to the operation object is switched in accordance with at least one of a generation status of the target route and an operation status of the work machine.

### <Supplementary Note 14>

The operation control method according to Supplementary Note 13, wherein a plurality of functions assignable to the operation object include at least a function of registration operation of a reference point serving as a reference of the target route and a function of deletion operation of the reference point.

### <Supplementary Note 15>

The operation control method according to Supplementary Note 13 or 14, wherein a display mode of the operation object changes in accordance with a function assigned to the operation object.

### REFERENCE SIGNS LIST

10: work machine
11: vehicle control device (action processing unit)
12: storage unit
13: travel device
14: work implement
14L: lifting-lowering lever (operation unit)
15: communication unit
16: positioning device
17: operation terminal
18: cabin
71: operation control unit
72: storage unit
73: operation display unit
100, 100A: automatic travel system (operation control system)
137: steering wheel (operation unit)
171: automatic travel button (operation unit)
172: shift button (operation unit)
711: display processing unit
712: acceptance processing unit
713: generation processing unit
D1, Dp4: guidance screen (first display screen)
D2: home screen (second display screen)
D3, Dp5: UFO operation screen (second display screen)
F: field
K1: home button
K2: setting icon
K3: work implement interlock icon
Ob41: (first) operation object
Ob42: (second) operation object
R: target route
Ra1 to Ra12: work route

## Claims

1. An operation control method executing:
causing a work machine to execute a first action when an operation unit for operating the work machine is operated by a user in a state where a first display screen relating to automatic steering of the work machine is displayed on an operation terminal; and
not causing the work machine to execute the first action when the operation unit is operated by a user in a state where a second display screen different from the first display screen is displayed on the operation terminal.

2. The operation control method according to claim 1, wherein the operation unit is an operation unit that accepts an operation to start automatic steering of the work machine from a user, causes the work machine to execute automatic steering when the operation unit is operated by a user in a state where the first display screen is displayed on the operation terminal, and does not cause the work machine to execute automatic steering when the operation unit is operated by a user in a state where the second display screen is displayed on the operation terminal.

3. The operation control method according to claim 2, wherein the work machine is caused to execute automatic steering if a predetermined condition for starting automatic steering is satisfied when the operation unit is operated by a user in a state where the first display screen is displayed on the operation terminal, and the work machine is not caused to execute automatic steering even if the predetermined condition is satisfied when the operation unit is operated by a user in a state where the second display screen is displayed on the operation terminal.

4. The operation control method according to claim 1, wherein the operation unit is an operation unit that accepts an operation to change a posture of a work implement coupled to the work machine from a user, changes the work implement to have a working posture and causes the work machine to execute automatic steering when the operation unit is operated by a user in a state where the first display screen is displayed on the operation terminal, and changes the work implement to have the working posture and does not cause the work machine to execute automatic steering when the operation unit is operated by a user in a state where the second display screen is displayed on the operation terminal.

5. The operation control method according to claim 4, further executing accepting, from a user, an operation to set whether to start automatic steering of the work machine in interlock with a change in a posture of the work implement.

6. The operation control method according to claim 1, wherein the operation unit is an operation unit that accepts, from a user, an operation to change a position or direction of a target route of the work machine, changes the position or direction of the target route of the work machine when the operation unit is operated by a user while the work machine is performing automatic steering, and executes an action according to display content of the operation terminal when the operation unit is operated by a user while the work machine is not executing automatic steering.

7. The operation control method according to claim 6, wherein setting content of the work machine is changed when the operation unit is operated by a user in a state where the work machine is not executing automatic steering and a setting screen relating to the work machine is displayed on the operation terminal.

8. An operation control method executing:
displaying information regarding automatic steering on a first display screen relating to automatic steering of a work machine when an operation unit for operating the work machine is operated by a user in a state where the first display screen is displayed on an operation terminal; and
transitioning a second display screen different from the first display screen, to a display screen relating to automatic steering of the work machine when the operation unit is operated by a user in a state where the second display screen is displayed on the operation terminal.

9. The operation control method according to claim 8, wherein the operation unit is an operation unit that accepts an operation to start automatic steering of the work machine from a user, the first display screen is an acceptance screen that accepts an instruction to start automatic steering of the work machine from a user, the first display screen is caused to display information indicating that automatic steering has started when the operation unit is operated by a user in a state where the first display screen is displayed on the operation terminal, and the second display screen is transitioned to the first display screen when the operation unit is operated by a user in a state where the second display screen is displayed on the operation terminal.

10. The operation control method according to claim 9, wherein automatic steering of the work machine is started and the first display screen is caused to display information indicating that automatic steering has started when an operation to start automatic steering on the operation unit is accepted from a user in a state where the first display screen is displayed on the operation terminal, and the second display screen is transitioned to the first display screen without starting automatic steering of the work machine when an operation to start automatic steering on the operation unit is accepted from a user in a state where the second display screen is displayed on the operation terminal.

11. The operation control method according to claim 9 or 10, wherein the second display screen is a setting screen relating to the work machine, and the setting screen is transitioned to the acceptance screen when the operation unit is operated by a user in a state where the second display screen is displayed on the operation terminal.

12. The operation control method according to claim 8, wherein automatic steering of the work machine is stopped and the second display screen is transitioned to the first display screen when an operation to stop automatic steering on the operation unit is accepted from a user in a state where the second display screen is displayed on the operation terminal during the automatic steering of the work machine.

13. The operation control method according to any one of claims 1 to 10, wherein the first display screen includes an operation object that accepts a user operation relating to generation of a target route for the automatic steering, and a function assigned to the operation object is switched in accordance with at least one of a generation status of the target route and an operation status of the work machine.

14. The operation control method according to claim 13, wherein a plurality of functions assignable to the operation object include at least a function of registration operation of a reference point serving as a reference of the target route and a function of deletion operation of the reference point.

15. The operation control method according to claim 13, wherein a display mode of the operation object changes in accordance with a function assigned to the operation object.

16. An operation control system comprising an action processing unit that causes a work machine to execute a first action when an operation unit for operating the work machine is operated by a user in a state where a first display screen relating to automatic steering of the work machine is displayed on an operation terminal, and does not cause the work machine to execute the first action when the operation unit is operated by a user in a state where a second display screen different from the first display screen is displayed on the operation terminal.

17. An operation control system comprising a display processing unit that displays information regarding automatic steering on a first display screen relating to automatic steering of a work machine when an operation unit for operating the work machine is operated by a user in a state where the first display screen is displayed on an operation terminal, and transitions a second display screen different from the first display screen, to a display screen relating to automatic steering of the work machine when the operation unit is operated by a user in a state where the second display screen is displayed on the operation terminal.

18. An operation control program for causing one or more processors to execute:
causing a work machine to execute a first action when an operation unit for operating the work machine is operated by a user in a state where a first display screen relating to automatic steering of the work machine is displayed on an operation terminal; and
not causing the work machine to execute the first action when the operation unit is operated by a user in a state where a second display screen different from the first display screen is displayed on the operation terminal.

19. An operation control program causing for one or more processors to execute:
displaying information regarding automatic steering on a first display screen relating to automatic steering of a work machine when an operation unit for operating the work machine is operated by a user in a state where the first display screen is displayed on an operation terminal; and
transitioning a second display screen different from the first display screen, to a display screen relating to automatic steering of the work machine when the operation unit is operated by a user in a state where the second display screen is displayed on the operation terminal.
